# EUROPEAN PATENT SPECIFICATION

(11) **EP 2 251 623 B1**
(45) Date of publication and mention of the grant of the patent: **02.03.2016**
(21) Application number: 09834459.1
(22) Date of filing: 24.12.2009
(51) Int. Cl.: F25D 11/00, F25B 1/00, F25D 29/00

(54) **REFRIGERATOR**
KÜHLSCHRANK
RÉFRIGÉRATEUR

(30) Priority: 24.12.2008 JP 2008326935; 24.12.2008 JP 2008326938; 02.02.2009 JP 2009021188; 01.07.2009 JP 2009156721; 10.07.2009 JP 2009163443; 30.09.2009 JP 2009226953; 30.09.2009 JP 2009226954; 09.11.2009 JP 2009255773
(43) Date of publication of application: 17.11.2010
(73) Proprietor: Panasonic Corporation, Kadoma-shi Osaka 571-8501 (JP)
(72) Inventor: KAMISAKO, Toyoshi, Chuo-ku, Osaka 540-6207 (JP); UEDA, Yoshihiro, Chuo-ku, Osaka 540-6207 (JP); NAKANISHI, Kazuya, Chuo-ku, Osaka 540-6207 (JP); KAKITA Kenichi, Chuo-ku, Osaka 540-6207 (JP); NAKAZATO, Maiko, Chuo-ku, Osaka 540-6207 (JP); IMADA, Hironori, Chuo-ku, Osaka 540-6207 (JP); MORI, Kiyoshi, Chuo-ku, Osaka 540-6207 (JP); KATAYAMA, Makoto, Chuo-ku, Osaka 540-6207 (JP); UMEOKA, Ikutomo, Chuo-ku, Osaka 540-6207 (JP); SUGIMOTO, Shuhei, Chuo-ku, Osaka 540-6207 (JP); HASHIMOTO, Shinichi, Chuo-ku, Osaka 540-6207 (JP); YAGI, Akio, Chuo-ku, Osaka 540-6207 (JP)
(74) Representative: Eisenführ Speiser
(86) International application number: PCT/JP2009/007166
(87) International publication number: WO 2010/073652

(56) References cited:
- JP-A- 2005 055 062
- US-A1- 2004 050 075

## Description

### [Technical Field]

The present invention relates to a refrigerator capable of power-saving operation based on a detection amount as detected by a sensor.

### [Background Art]

Among conventional refrigerators, refrigerators in which normal operation is carried out in the case where a light sensor has detected a predetermined amount or more of illumination, whereas it is assumed that a user is most likely sleeping and will not open the door of the refrigerator in the case where the light sensor has detected less than the predetermined amount of illumination, and thus power-saving operation that uses less power than when operating at normal temperatures is carried out, have been commercialized. This power-saving operation increases the set temperature of, for example, the freezer compartment by several °C.

Meanwhile, such conventional refrigerators have also carried out power-saving operation in the case where the user sleeps with some lights left on (for example, see PTL 1).

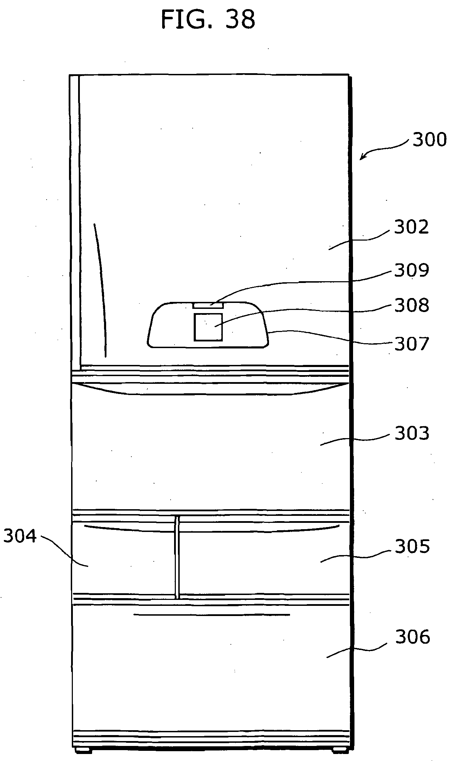

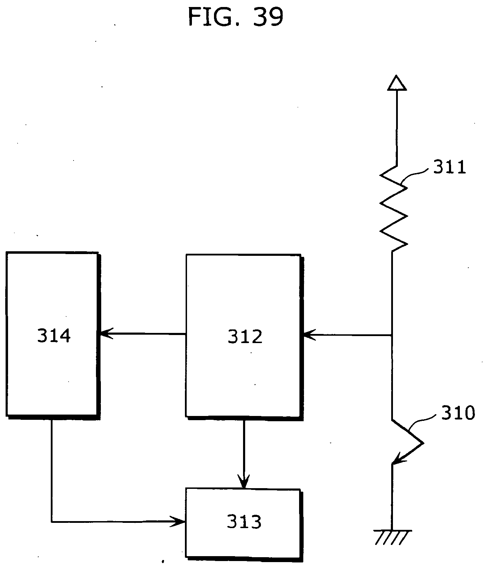

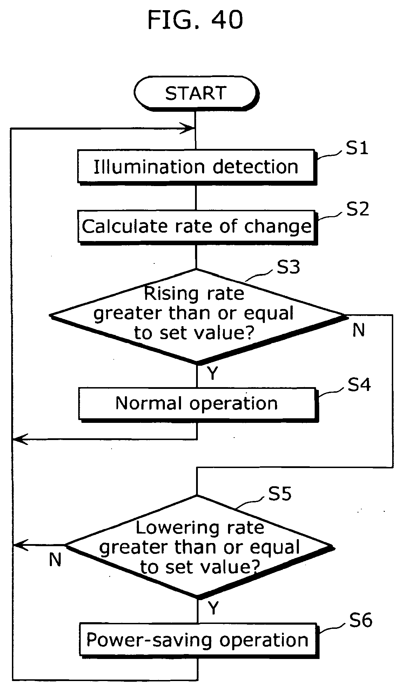

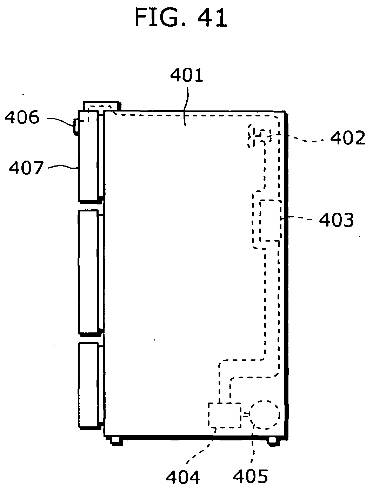

FIG. 38 illustrates a front view of such a refrigerator; FIG. 39 illustrates an example of an electric circuit diagram; and FIG. 40 is a descriptive diagram illustrating the operational state of a refrigerator that uses this electric circuit.

In FIG. 38, a refrigerator 300 includes a refrigerating compartment door 302, a vegetable compartment door 303, an ice compartment door 304, a switchable compartment door 305, and a freezer compartment door 306. An operation unit 307 includes various operation switches (not shown), a liquid crystal display unit 308, and a light sensor housing unit 309.

A light sensor 310 for detecting illumination in the periphery of the refrigerator, as illustrated in FIG. 39, is housed within the light sensor housing unit 309. A resistance 311, an AD converter 312 that converts an inputted analog voltage value into a digital signal and outputs the digital signal, a storage device 313 for storing signals from the AD converter 312, and a microcomputer (control device; control unit) for controlling the operation of a compressor (not shown) and the like having been inputted with signals from the AD converter 312, are connected to the light sensor 310. Note that the operation of the compressor is primarily on/off control based on a freezer compartment sensor (not shown).

A microcomputer 314 operates in the manner described hereinafter (see FIG. 40).

When a switch (not shown) for enabling power-saving operation is pressed, the light sensor 310 detects illumination in the periphery of the front side of the refrigerator (S1). The rate of change of the illumination is then computed (S2). The rate of change of the illumination is calculated by dividing the change in the illumination by the amount of time over which the change occurred. For example, in the case where a change of 150 lux (Lx) occurred over one second, the rate of change is calculated as 150 Lx/second. 150 Lx/second is then set as a predetermined rate of change. However, it is thought that any value within the range of 100 to 200 Lx/second may be set as this setting value.

After the rate of change has been calculated, it is determined whether or not that rate of change is greater than or equal to the setting value, or in other words, greater than or equal to 150 Lx/second (S3). As a result, if the rate of change is greater than or equal to the setting value, normal operation is carried out (S4), whereas in the case where the rate of change is not greater than or equal to the setting value, it is determined whether or not a lowering rate is greater than or equal to a set value (S5). If the lowering rate is greater than or equal to a predetermined value, power-saving operation is carried out (S6), whereas if the lowering rate is not greater than or equal to the setting value, the illumination detection of S1 is carried out once again.

Note that operation in which the set temperature of the freezer compartment (normally -20°C; the setting value can be changed) is controlled so as to adhere to this setting temperature is taken as normal operation, whereas operation in which the inside temperature of the freezer compartment is controlled to be 2°C closer to room temperature from the set temperature (which is assumed, for example, to be -20°C), resulting in a temperature of -18°C, is taken as power-saving operation. For this reason, in the power-saving operation, the time for which the compressor operates is shorter and the time for which the compressor is stopped is longer than when in normal operation, making it possible to save more power than when in normal operation.

A refrigerator configured in this manner operates as follows. For example, around 11 o'clock at night, the user goes to sleep, and therefore turns down the lights. For example, assuming that three 20 W fluorescent bulbs were lighted, the user reduces this to one 20 W bulb, and goes to sleep. The lowering rate of the illumination at this time is computed by the microcomputer, and it is determined that the lowering rate is greater than or equal to the predetermined value; thus the refrigerator commences power-saving operation.

With the refrigerator controlled in this manner, control is carried out so the refrigerator is capable of power-saving operation when, for example, the light has been dimmed, and thus more power can be saved than with the conventional control, in which normal operation or power-saving operation is carried out based on whether the illumination is greater than or equal to a predetermined amount or less than the predetermined amount.

Meanwhile, there are also refrigerators that carry out power-saving operation by providing a light-detecting element in the front surface of the door that detects the surrounding brightness and controlling the rotational frequency of a compressor, fan motor, and the like when it is dark (for example, see PTL 2).

FIG. 41 is a side view of a conventional refrigerator as disclosed in PTL 2. As illustrated in FIG. 41, the refrigerator is configured of a refrigerator main body 401, a fan motor 402, an inverter frequency control unit 403, an inverter main circuit unit 404, a compressor 405, a storage compartment door 407, and a light-detecting element 406 disposed on the front surface of the storage compartment door 407.

### [Citation List]

### [Patent Literature]

[PTL 1]
   Japanese Patent Application Publication No. 2002-107025
[PTL 2]
   Japanese Utility Model Publication No. S62-93671
[PTL 3]
   US Patent Application No. 2004/0050075

### [Summary of Invention]

### [Technical Problem]

However, with the conventional configuration disclosed in PTL 1, power-saving operation is not carried out unless the power-saving switch is operated. For this reason, when a user wishes to save power, it is necessary for him/her to operate the power-saving switch him/herself, and as a result, there has been a problem in that power-saving operation is not often carried out.

Meanwhile, with the configuration disclosed in PTL 2, there is no means for identifying that power-saving operation is underway. For this reason, there has been a problem in that despite the recent rise in the environmental consciousness of users, users are unable to feel the increase in quality provided by the ability to confirm that power-saving operation is underway.

In addition, in the case where a general notification unit is installed, it is necessary to provide the power necessary for the notification, which leads to a problem in that the power-saving effects are hampered.

In addition, according to the configuration disclosed in PTL 1, when carrying out power-saving operation, the refrigerator is capable of saving more power than when in normal operation as a result of the time for which the compressor operates being shorter and the time for which the compressor is stopped being longer. However, this refrigerator attempts to save power by focusing on the time for which the operation of the compressor is stopped. For this reason, there has been a problem in that due to the high amount of power required to start the compressor when switching from a stopped state to the start of operation, no more than a certain level of power conservation can be realized.

Meanwhile, as opposed to the compressor disclosed in PTL 1, which operates at a set rotational frequency speed, inverter-driven compressors capable of running at multiple rotational frequencies, which enables power-saving operation to be realized, are being installed in recent household refrigerators. However, carrying out further power-saving operation with such inverter-driven compressors has not been considered.
PTL 3 describes a refrigerator disclosing all features of the preamble of claim 1 attached.

Having been achieved in order to solve the aforementioned conventional problems, it is an object of the present invention to provide a refrigerator that automatically carries out power-saving operation, without burdening the user, by detecting the surrounding environment and automatically carrying out power-saving operation, or in other words, a refrigerator capable of realizing automatic energy conservation.

Furthermore, having been achieved in order to solve the aforementioned conventional problems, it is an object of the present invention to provide a refrigerator that notifies a user that power-saving operation is underway while consuming a small amount of power.

Further still, having been achieved in order to solve the aforementioned conventional problems, it is an object of the present invention to provide a refrigerator capable of realizing further energy conservation by carrying out further power-saving operation using a power-saving inverter-driven compressor.

### [Solution to Problem]

In order to solve the abovementioned conventional problems, a refrigerator according to the present invention as defined in claim 1 attached is provided with a refrigerator main body, and includes, among others: a first detection unit capable of detecting a change in the outside environment in the periphery of the refrigerator; and a control unit that controls the operation of current-consuming components provided in the refrigerator main body, the control unit automatically switching, based on an output signal from the first detection unit, to power-saving operation that suppresses or stops the operation of the current-consuming components.

Through this, it is possible to automatically switch to power-saving operation having detected the peripheral environment. In other words, according to the refrigerator of the present invention, it is possible to automatically carry out power-saving operation without placing a burden on the user. To rephrase, it is possible to realize energy conservation in an automatic manner.

### [Advantageous Effects of Invention]

The refrigerator according to the present invention automatically carries out power-saving operation having detected the peripheral environment, and thus does not place a burden on the user. In other words, because energy conservation can be realized in an automatic manner, it is possible to provide a refrigerator capable of realizing further energy conservation during actual operation.

In addition, the refrigerator according to the present invention is capable of notifying the user of power-saving operation while consuming a reduced amount of energy in order to do so.

In addition, according to the present invention, it is possible to achieve significant power-saving in an actual refrigerator, and thus it is possible to provide a refrigerator that realizes further energy conservation.

### [Brief Description of Drawings]

[FIG. 1A]

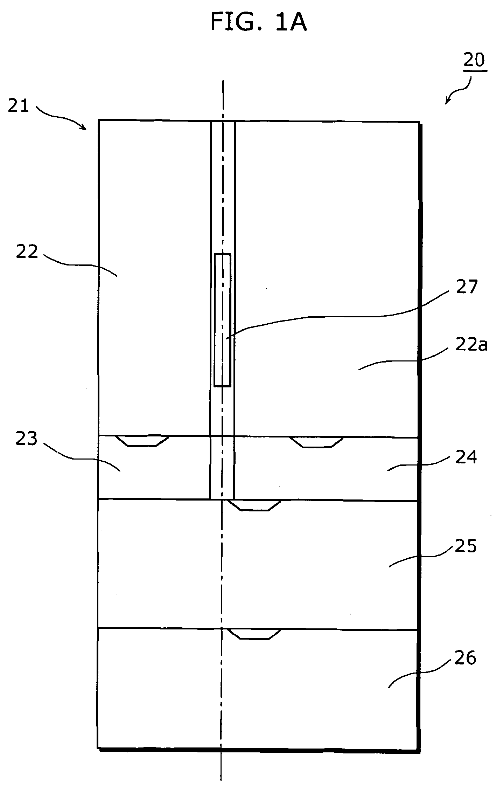

   FIG. 1A is a front view of a refrigerator according to a first embodiment of the present invention.
[FIG. 1B]

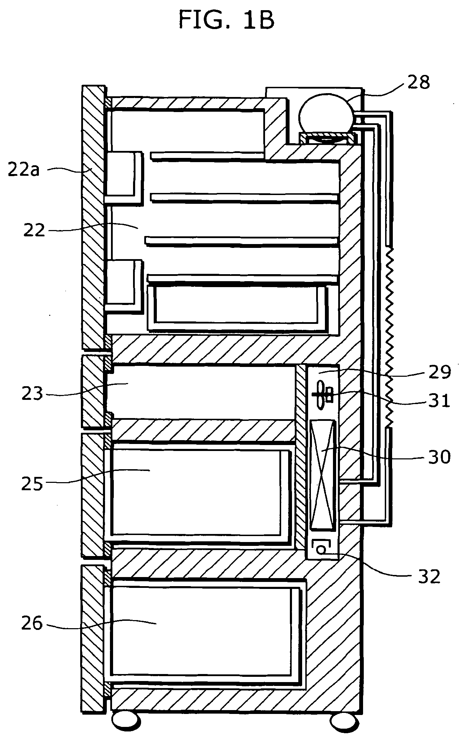

   FIG. 1B is a vertical cross-sectional view of the refrigerator according to the first embodiment of the present invention.
[FIG. 2A]

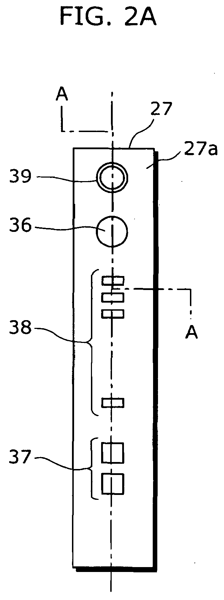

   FIG. 2A is a configuration diagram illustrating an operation board of the refrigerator according to the first embodiment of the present invention.
[FIG. 2B]

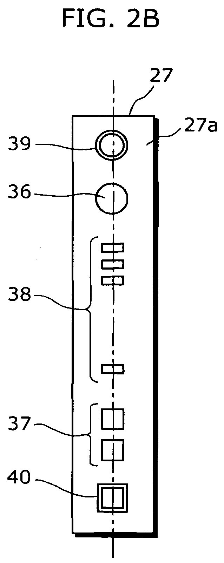

   FIG. 2B is a configuration diagram illustrating another form of the operation board of the refrigerator according to the first embodiment of the present invention.
[FIG. 3]

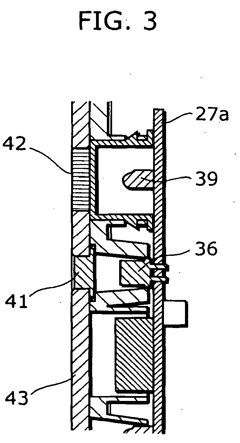

   FIG. 3 is a diagram illustrating an A-A' cross-section of FIG. 2A.
[FIG. 4]

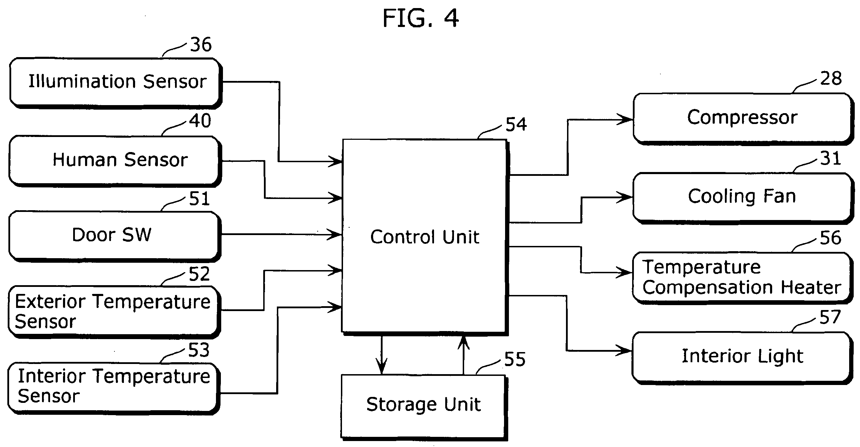

   FIG. 4 is a control block diagram according to the first embodiment of the present invention.
[FIG. 5]

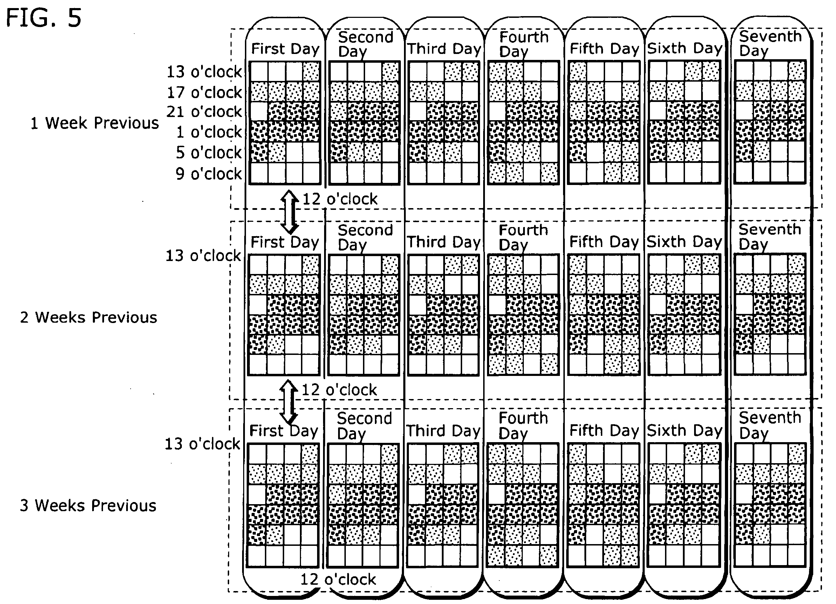

   FIG. 5 is a diagram illustrating data images of illumination detection values, door openings/closings, and so on of the refrigerator according to the first embodiment of the present invention.
[FIG. 6]

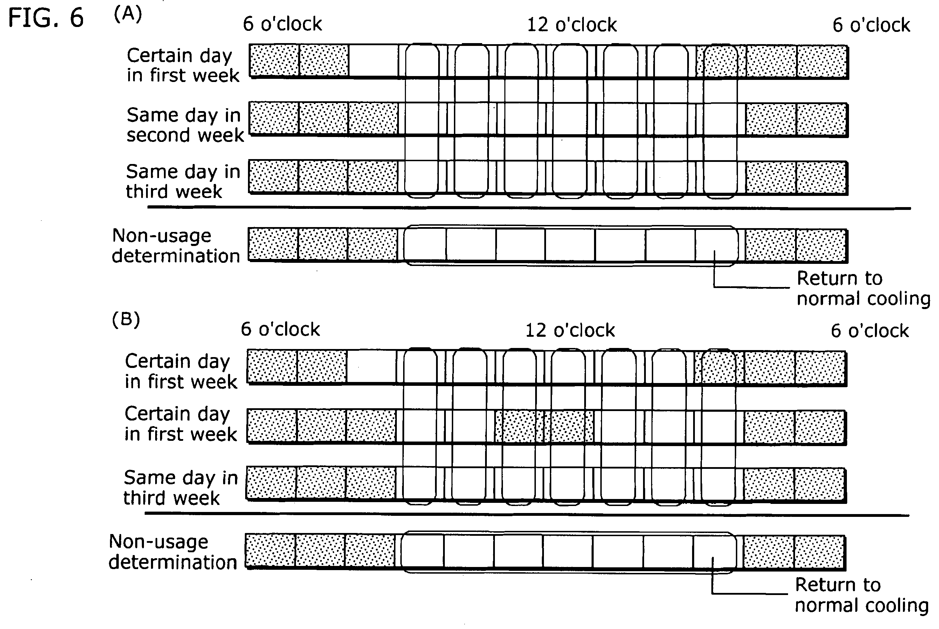

   FIG. 6 is a diagram illustrating past reference data for an arbitrary day according to the first embodiment of the present invention.
[FIG. 7]

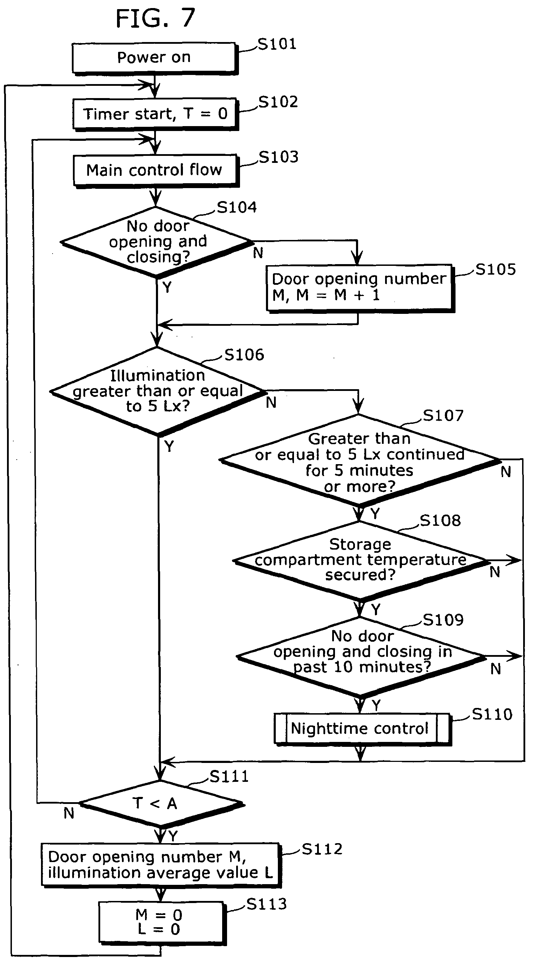

   FIG. 7 is a control flowchart according to the first embodiment of the present invention.
[FIG. 8]

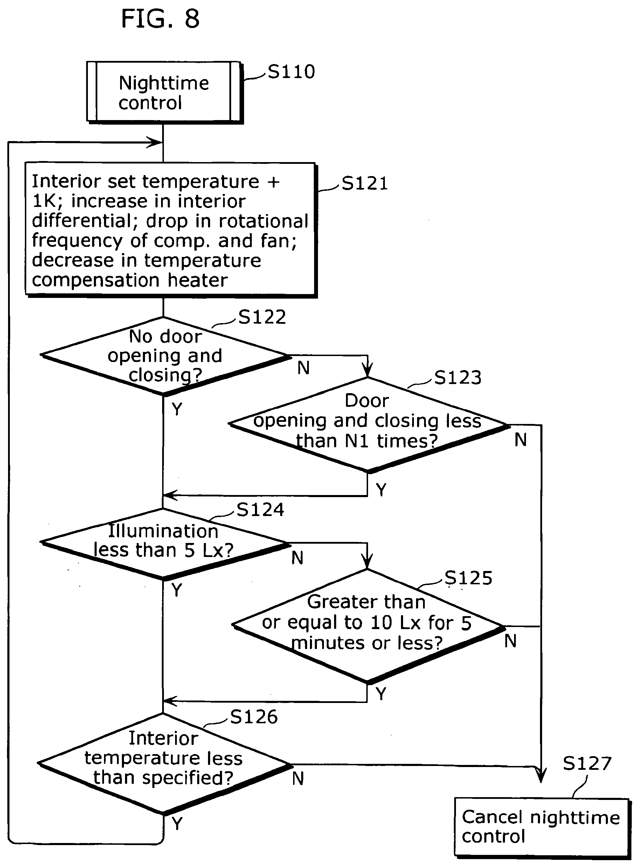

   FIG. 8 is a flowchart illustrating nighttime control according to the first embodiment of the present invention.
[FIG. 9]

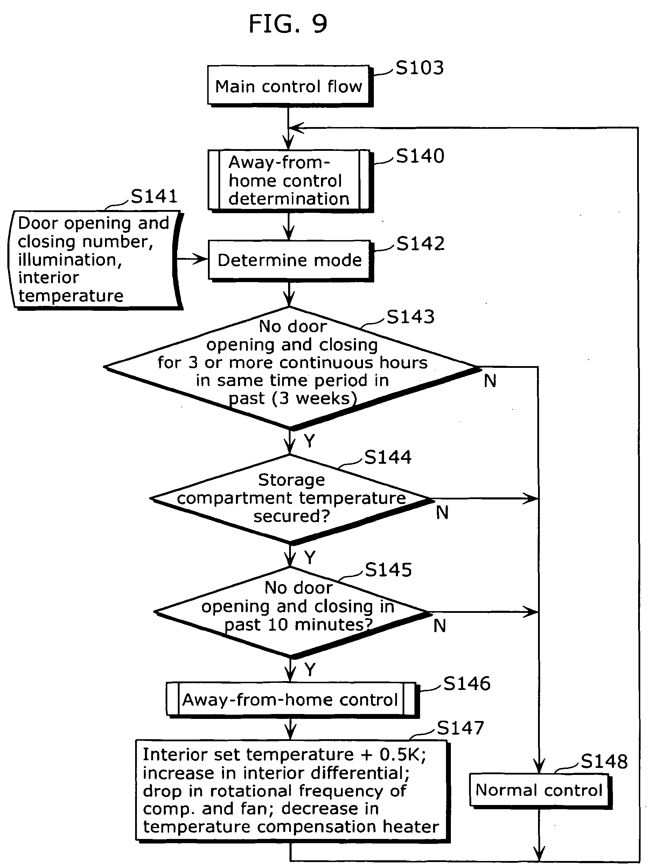

   FIG. 9 is a flowchart illustrating away-from-home control according to the first embodiment of the present invention.
[FIG. 10]

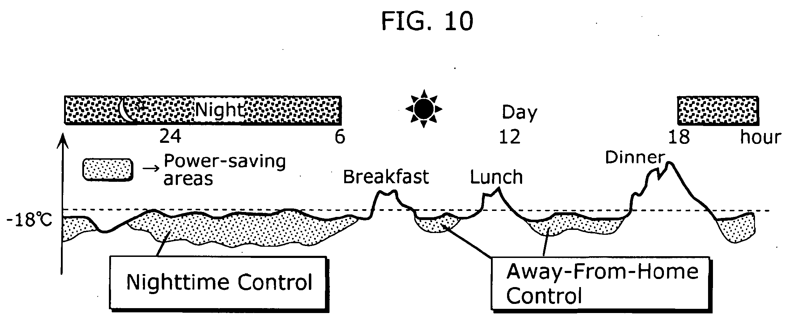

   FIG. 10 is an image diagram illustrating an effect of the first embodiment of the present invention.
[FIG. 11]

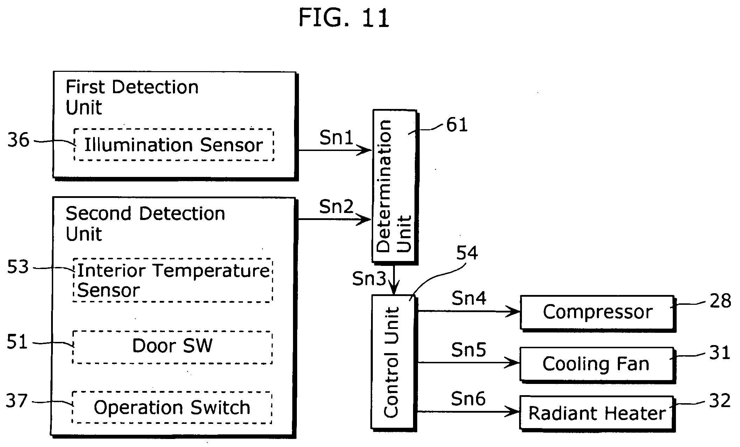

   FIG. 11 is a control block diagram according to a second embodiment of the present invention.
[FIG. 12]

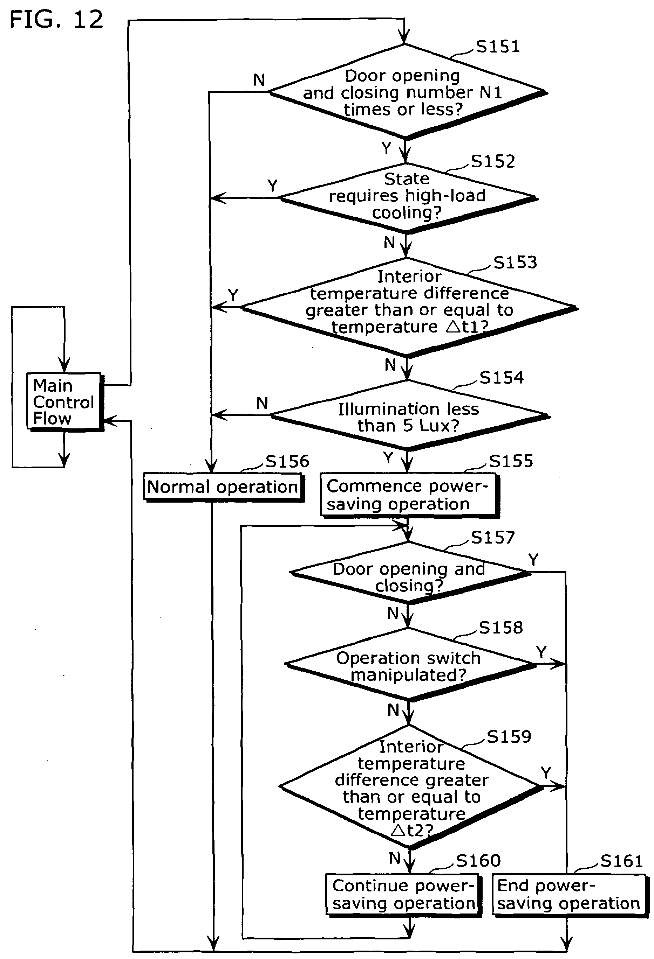

   FIG. 12 is a control flowchart according to the second embodiment of the present invention.
[FIG. 13]

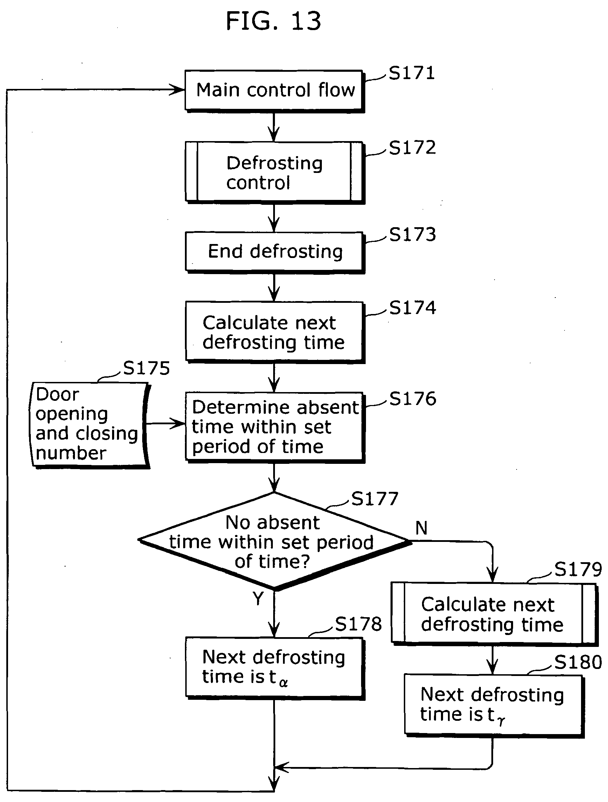

   FIG. 13 is a control flowchart according to a third embodiment of the present invention.
[FIG. 14A]

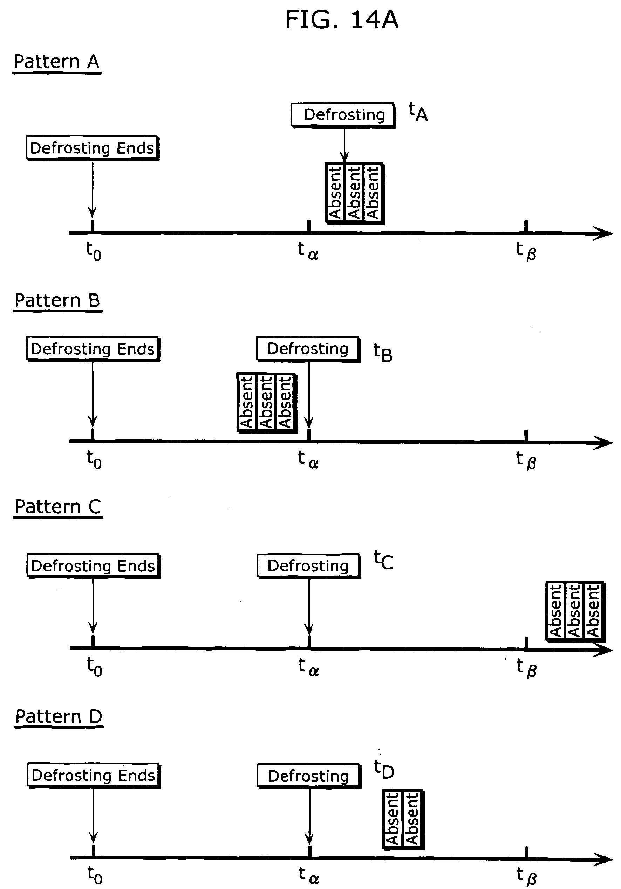

   FIG. 14A is a first diagram illustrating multiple examples of defrosting cycles according to the third embodiment of the present invention.
[FIG. 14B]

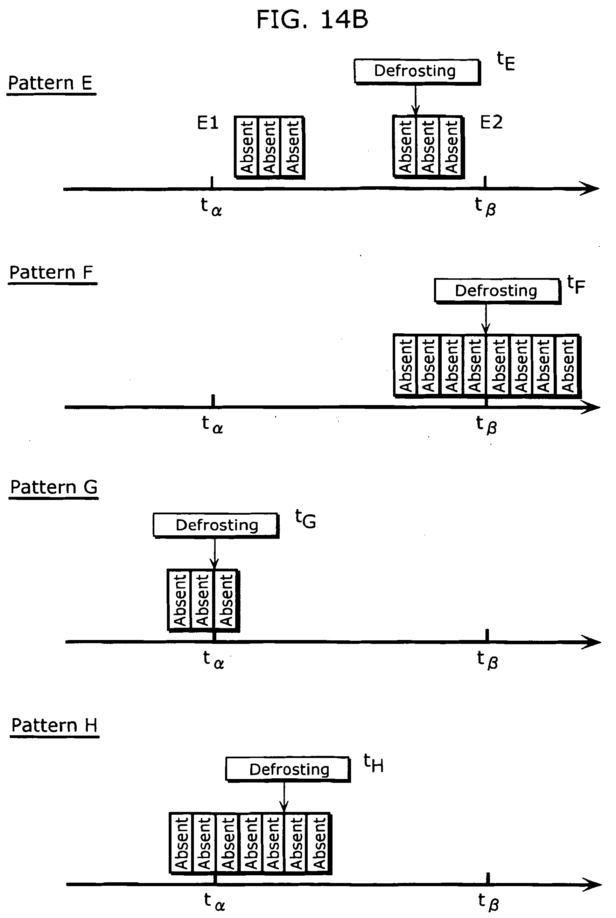

   FIG. 14B is a second diagram illustrating multiple examples of defrosting cycles according to the third embodiment of the present invention.
[FIG. 15]

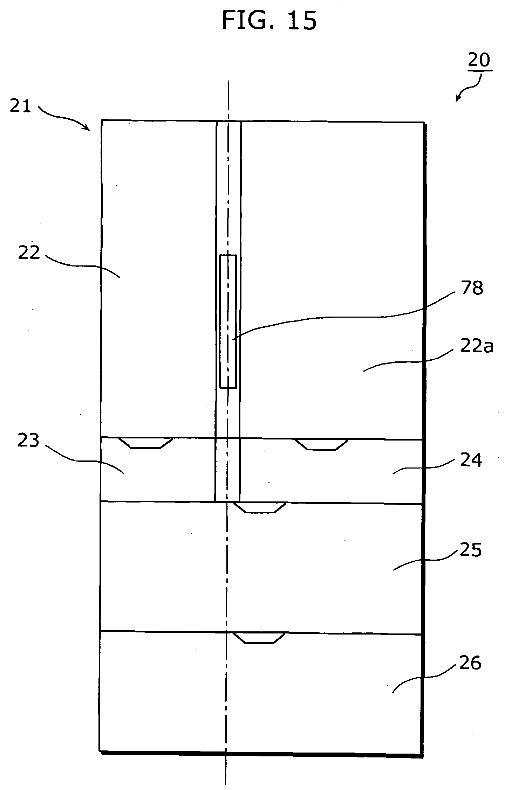

   FIG. 15 is a front view of a refrigerator according to a fourth embodiment of the present invention.
[FIG. 16]

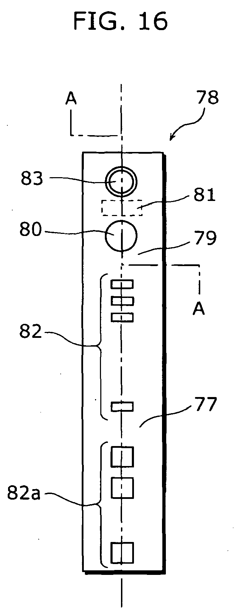

   FIG. 16 is a configuration diagram illustrating a display unit of a refrigerator according to the fourth embodiment of the present invention.
[FIG. 17]

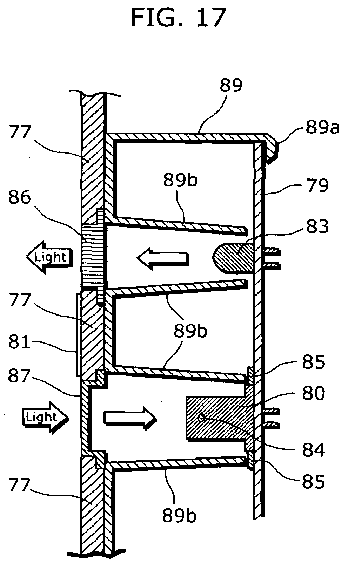

   FIG. 17 is a detailed cross-sectional view of the display unit of the refrigerator according to the fourth embodiment of the present invention.
[FIG. 18]

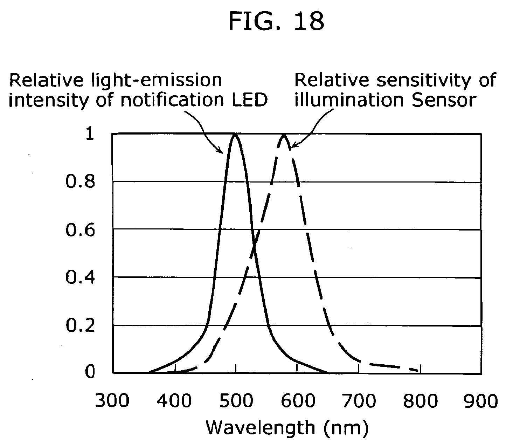

   FIG. 18 is a spectrum chart of an illumination sensor and a notification LED of the refrigerator according to the fourth embodiment of the present invention.
[FIG. 19]

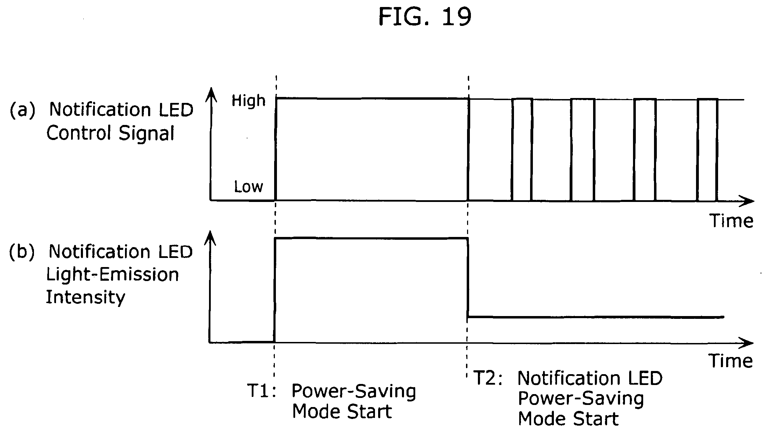

   FIG. 19 is a diagram illustrating a first control example of the notification LED of the refrigerator according to the fourth embodiment of the present invention.
[FIG. 20]

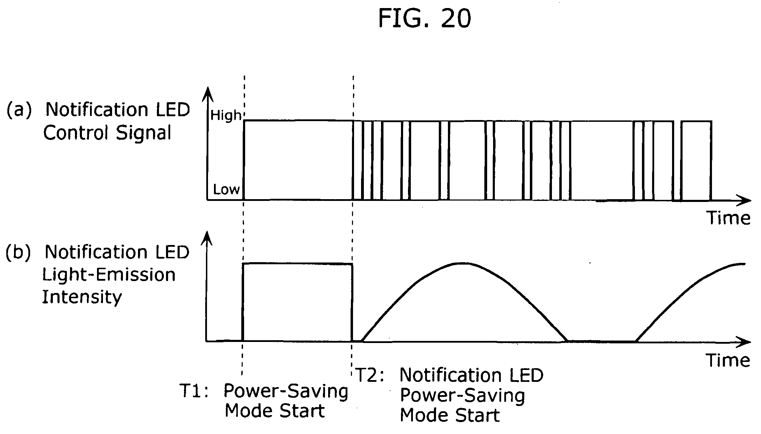

   FIG. 20 is a diagram illustrating a second control example of the notification LED of the refrigerator according to the fourth embodiment of the present invention.
[FIG. 21A]

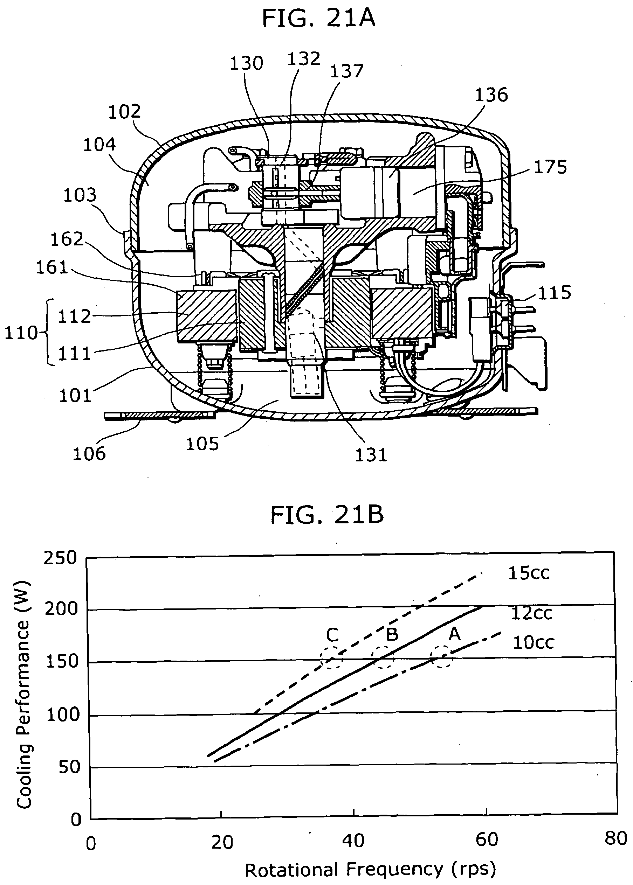

   FIG. 21A is a cross-sectional view of a compressor installed in a refrigerator according to a fifth embodiment of the present invention. [FIG. 21B]
FIG. 21B is a diagram illustrating a result of consolidating the rotational frequency of the compressor and a refrigeration performance according to the fifth embodiment of the present invention on a cylinder volume-by-cylinder volume basis.
[FIG. 21C]

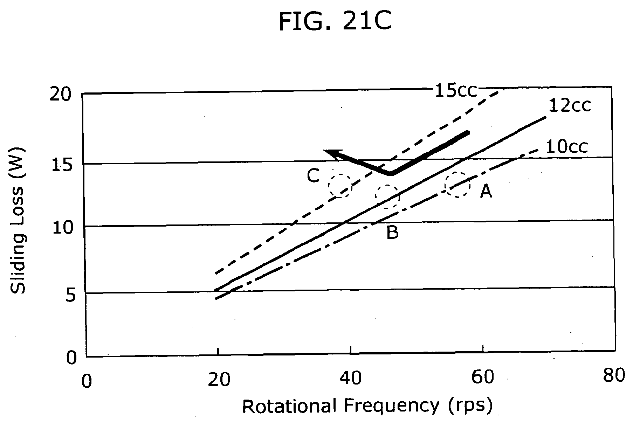

   FIG. 21C is a diagram illustrating a result of consolidating the rotational frequency and mechanical loss of the compressor of the refrigerator according to the fifth embodiment of the present invention on a cylinder volume-by-cylinder volume basis.
[FIG. 21D]

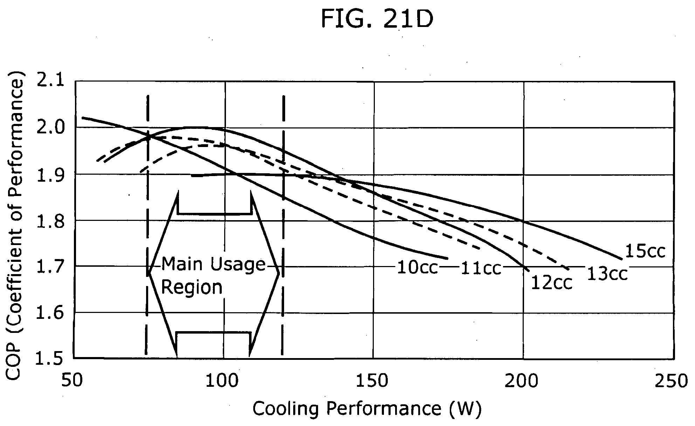

   FIG. 21D is a diagram illustrating the relationship between the refrigeration performance and the COP of the compressor of the refrigerator according to the fifth embodiment of the present invention on a cylinder volume-by-cylinder volume basis.
[FIG. 22]

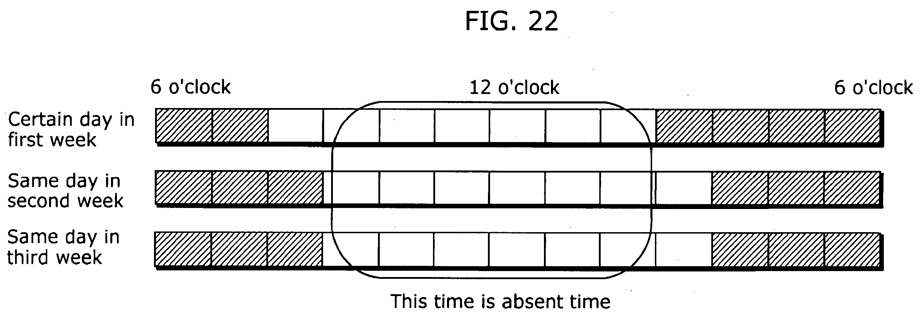

   FIG. 22 is a diagram illustrating past reference data for an arbitrary day according to the fifth embodiment of the present invention.
[FIG. 23]

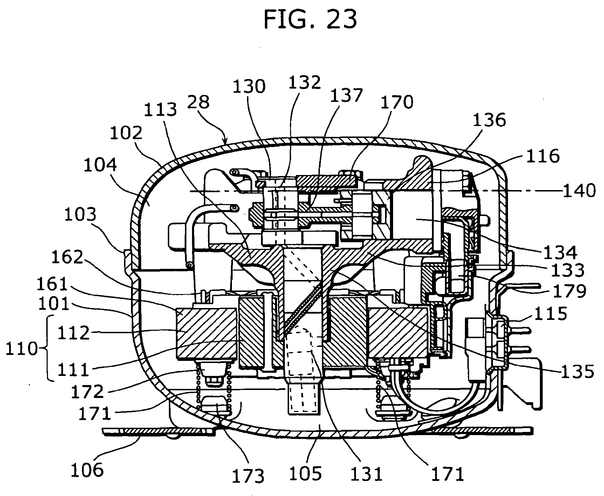

   FIG. 23 is a cross-sectionai view of a compressor of the refrigerator according to a sixth embodiment of the present invention.
[FIG. 24A]

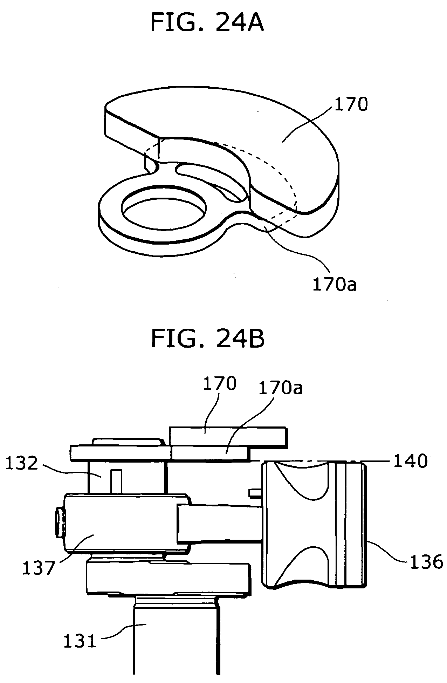

   FIG. 24A is a perspective view illustrating a crank weight of the compressor of the refrigerator according to the sixth embodiment of the present invention.
[FIG. 24B]
   FIG. 24B is an enlarged view illustrating the periphery of the crank weight of the compressor of the refrigerator according to the sixth embodiment of the present invention.
[FIG. 25A]

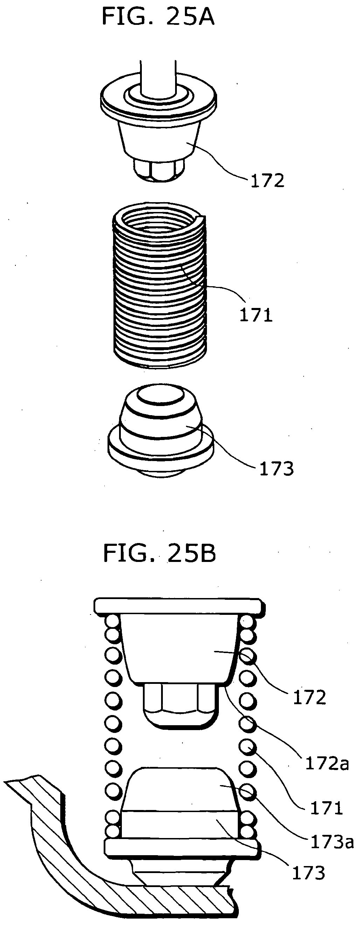

   FIG. 25A is an assembly diagram illustrating the periphery of an elastic member of the compressor of the refrigerator according to the sixth embodiment of the present invention.
[FIG. 25B]
   FIG. 25B is a cross-sectional view illustrating the periphery of the elastic member of the compressor of the refrigerator according to the sixth embodiment of the present invention.
[FIG. 26A]

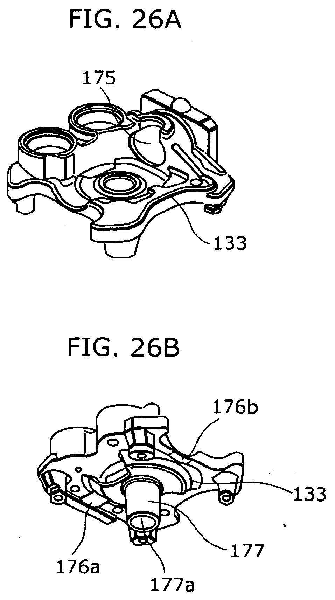

   FIG. 26A is a perspective view illustrating a cylinder block of the compressor of the refrigerator according to the sixth embodiment of the present invention from above.
[FIG. 26B]
   FIG. 26B is a perspective view illustrating the cylinder block of the compressor of the refrigerator according to the sixth embodiment of the present invention from below.
[FIG. 27A]

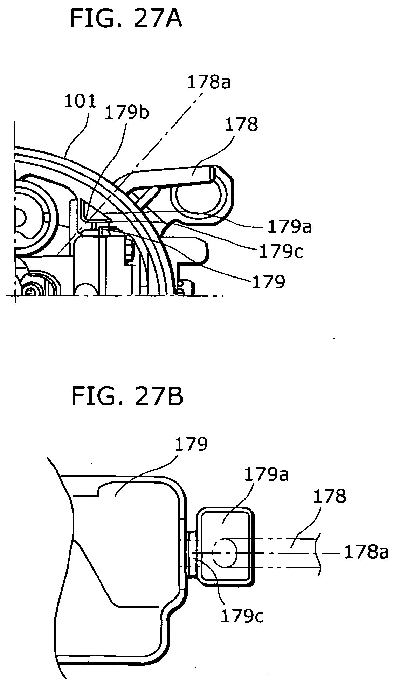

   FIG. 27A is a planar cross-sectional view of the periphery of a suction tube of the compressor of the refrigerator according to the sixth embodiment of the present invention.
[FIG. 27B]
   FIG. 27B is a vertical cross-sectional view of the periphery of the suction tube of the compressor of the refrigerator according to the sixth embodiment of the present invention.
[FIG. 28]

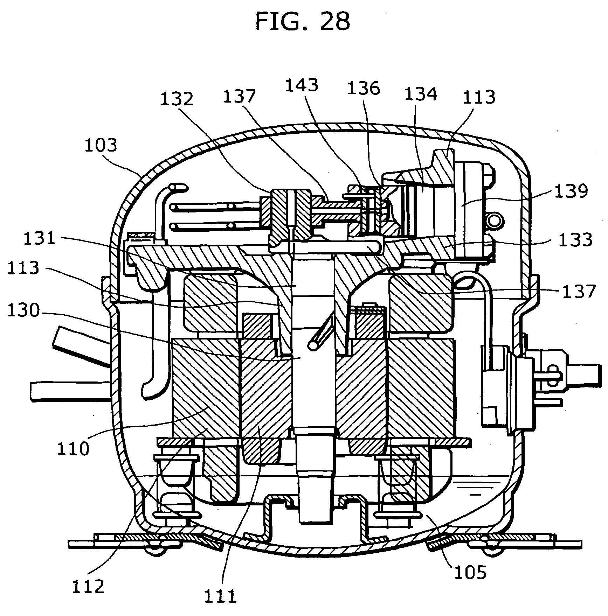

   FIG. 28 is a vertical cross-sectional view of a compressor of the refrigerator according to a seventh embodiment of the present invention.
[FIG. 29]

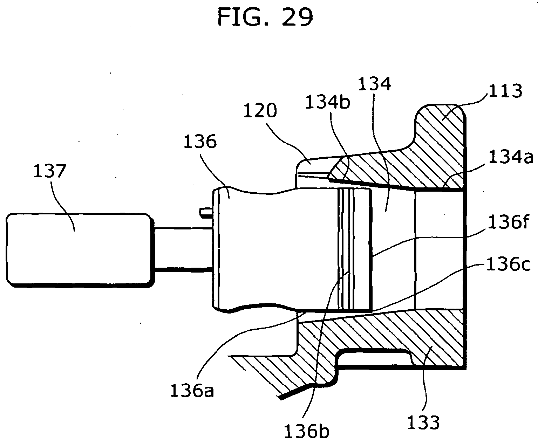

   FIG. 29 is a vertical cross-sectional view of the principle elements of a compression element of the refrigerator according to the seventh embodiment of the present invention.
[FIG. 30]

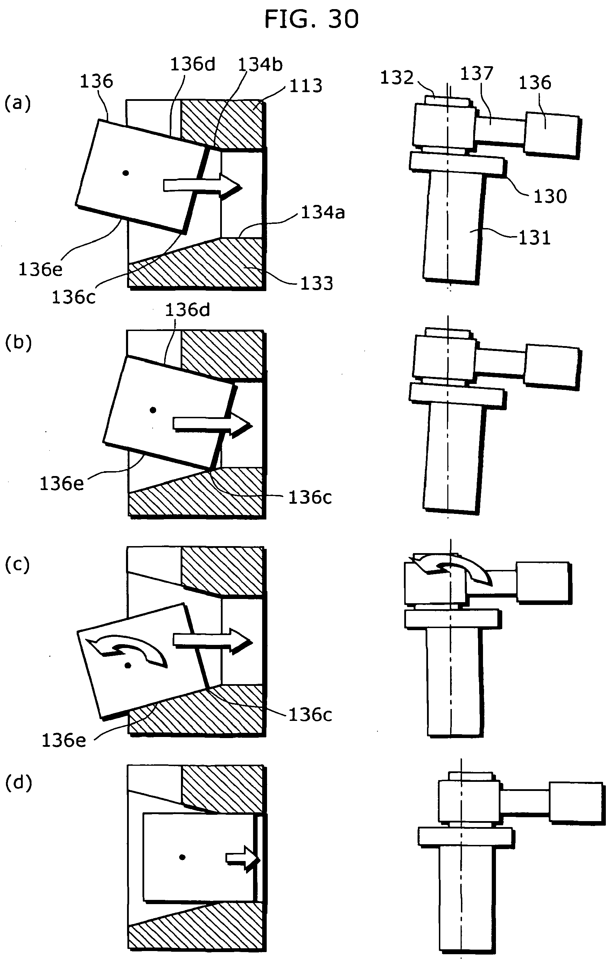

   FIGS. 30(a) to (d) are schematic diagrams illustrating the behavior of a piston of the refrigerator according to the seventh embodiment of the present invention.
[FIG. 31]

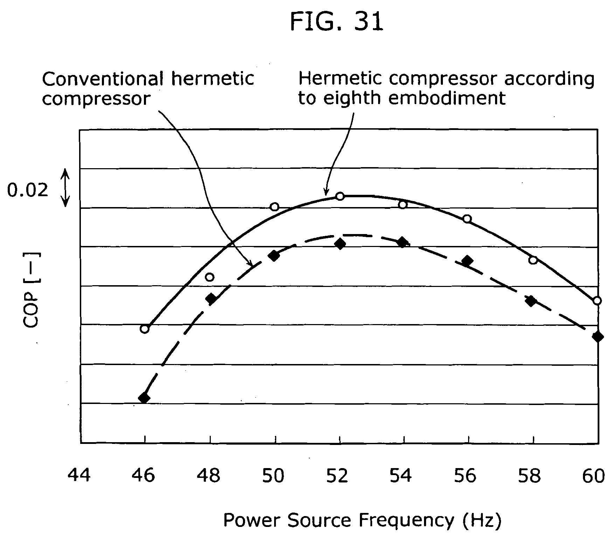

   FIG. 31 is a chart illustrating characteristics of a compressor of the refrigerator according to an eighth embodiment of the present invention.
[FIG. 32]

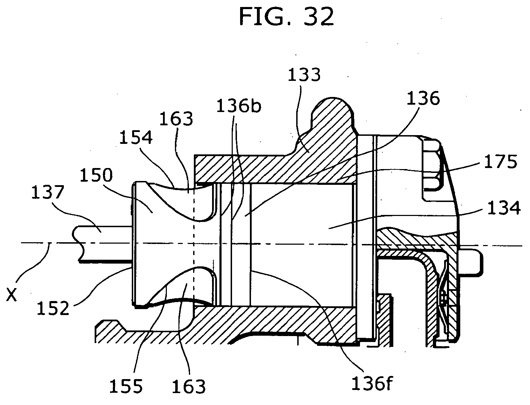

   FIG. 32 is an enlarged view of elements in the periphery of a piston used in the compressor of the refrigerator according to the eighth embodiment of the present invention.
[FIG. 33]

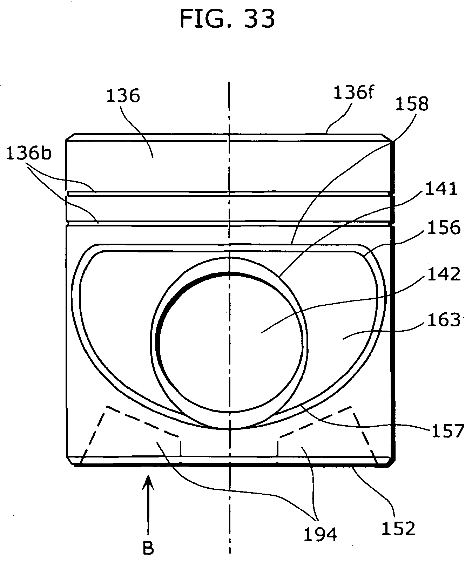

   FIG. 33 is a top view of the piston used in the compressor of the refrigerator according to the eighth embodiment of the present invention.
[FIG. 34]

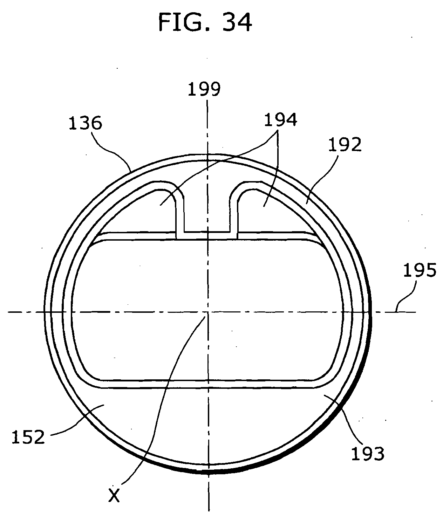

   FIG. 34 is a front view, viewed from a direction B of the piston illustrated in FIG. 33.
[FIG. 35]

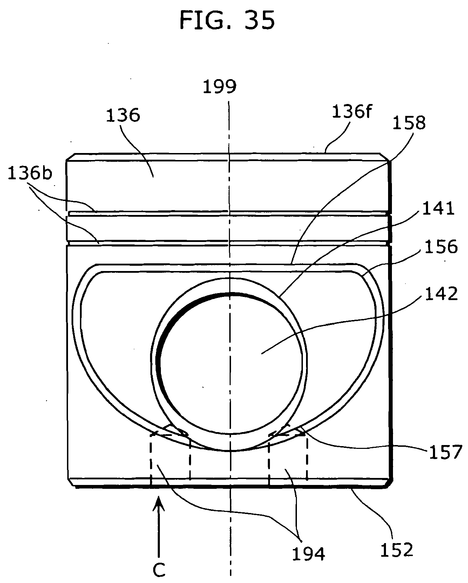

   FIG. 35 is a top view illustrating a first alternative configuration example of the piston used in the compressor of the refrigerator according to the eighth embodiment of the present invention.
[FIG. 36]

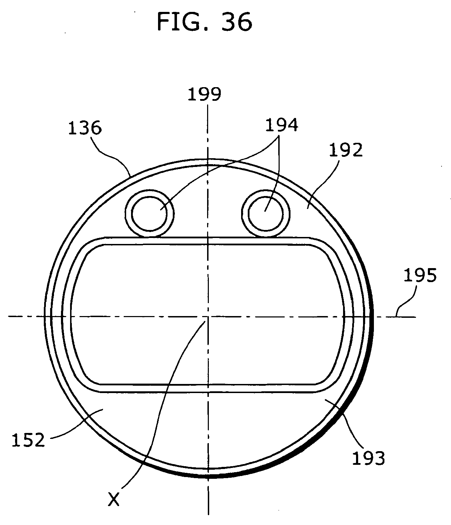

   FIG. 36 is a front view, viewed from a direction C of the piston illustrated in FIG. 35.
[FIG. 37]

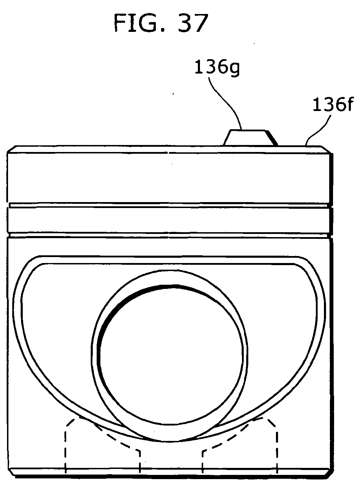

   FIG. 37 is a top view illustrating a second alternative configuration example of a piston used in a hermetic compressor of the refrigerator according to the eighth embodiment.
[FIG. 38]
   FIG. 38 is a front view of a conventional refrigerator as disclosed in PTL 1.
[FIG. 39]
   FIG. 39 is an electric circuit diagram illustrating principle elements of a conventional refrigerator as disclosed in PTL 1.
[FIG. 40]
   FIG. 40 is a representative control flowchart of a conventional refrigerator as disclosed in PTL 1.
[FIG. 41]
   FIG. 41 is a side view of a conventional refrigerator as disclosed in PTL 2.

### [Description of Embodiments]

According to the invention is a refrigerator defined in claim 1 attached and provided with a refrigerator main body, the refrigerator including, among others: a first detection unit capable of detecting a change in the outside environment in the periphery of the refrigerator; and a control unit that controls the operation of current-consuming components provided in the refrigerator main body, the control unit automatically switching, based on an output signal from the first detection unit, to power-saving operation that suppresses or stops the operation of the current-consuming components.

According to this configuration, power-saving operation is carried out automatically having detected the outside environment, and thus no burden is placed on the user. In other words, it is possible to realize energy conservation in an automatic manner.

Moreover, the control unit determines the activity state of a user based on the output signal from the first detection unit and switches to the power-saving operation in the case where it has been determined that the user is not in an active state.

According to this configuration, power-saving operation can be carried out automatically having detected the activity state of the user. Through this, it is possible to realize further energy conservation during actual operation in individual households.

Furthermore, the first detection unit is an illumination sensor that detects illumination in the periphery of the refrigerator.

According to this configuration, it can be determined that the activity of the user has stopped, such as when the user is asleep, when the illumination in the periphery of the refrigerator is extremely low, such as late at night. Through this, overcooling due to the assumption that the doors of the refrigerator will be opened and closed and so on is prevented, and the rotational frequency of a compressor is suppressed, thus making it possible to carry out cooling without refrigeration quality problems during power-saving operation as well.

Additionally, a second detection unit is provided that detects a change in the internal environment of the refrigerator, in which the control unit automatically switches to the power-saving operation based on an output signal from the second detection unit.

According to this configuration, usage states in individual households can be detected, thereby making it possible to predict times when there are few door openings/closings, few food item loadings, when the user is not at home, is away from home, is asleep, or the like. Through this, it is possible to realize further energy conservation during actual operation in individual households.

According to a second aspect of the invention the control unit determines the usage state of the refrigerator by a user based on the output signal from the second detection unit and switches to the power-saving operation in the case where it has been determined that the refrigerator is not in a state of use.

According to this configuration, it is determined that the refrigerator is not in a state of use by the user, and thus the refrigerator is automatically switched to power-saving operation, in which the cooling performance has been decreased slightly. Through this, it is possible to realize further energy conservation during actual operation in individual households.

According to a further aspect of the invention the second detection unit is a door opened and closed state detection unit that detects a door opened and closed state of the refrigerator.

According to this configuration, a reduction in door openings/closings can be determined using a simple configuration, and as a result, it is possible to predict when there are few food item loadings, when the user is not at home, is away from home, is asleep, or the like.

According to an additional aspect of the invention the second detection unit is an interior temperature detection unit that detects an interior temperature of the refrigerator.

According to this configuration, in the case where, at night, the temperature in the peripheral environment of the refrigerator drops and the thermal load drops as a result, or in the case where the thermal load resulting from food items being removed or replaced is extremely low, the interior temperature of the refrigerator is set to a low temperature that is slightly too cold, and thus the usage state can be detected with comparatively high accuracy by the interior temperature detection unit.

The refrigerator further includes a storage unit that accumulates information indicated by the output signal from the first detection unit and the output signal from the second detection unit, in which the control unit determines a pattern of the power-saving operation, the pattern being a pattern of suppressing or stopping the operation of the current-consuming components, in accordance with the information accumulated in the storage unit, and controls the current-consuming components so that the current-consuming components operate according to the determined pattern.

According to this configuration, by the storage unit accumulating detected information for a set period of time, the lifestyle pattern of that household can be predicted based on that information. Through this, when it is predicted that the activity in that household is sleep, or that the user is away, it is possible to suppress overcooling, suppress the rotational frequency of a compressor, and optimize the operation of other current-consuming components, such as heaters, for that household. As a result, further energy conservation can be realized.

A detection unit that identifies patterns such as the openings/closings of doors, the temperature behavior of the refrigerator, and so on can be given as a specific example of the second detection unit that detects a change in the interior temperature of the refrigerator. With this detection unit, a high-load state and a low-load state can be predicted in advance, and the power-saving operation, in which the operation of the current-consuming components is suppressed or stopped for a set period of time, can be automatically carried out in a low-usage state, which is a low-load state.

According to a further aspect of the invention the refrigerator further includes a notification unit that allows a user of the refrigerator to recognize that the power-saving operation is being carried out in the case where the current-consuming components are carrying out the power-saving operation.

According to this configuration, the operation state of the refrigerator is correctly communicated in order to allow the user to recognize the operation state. Through this notification, the user can understand his/her contribution to energy conservation, and can thus experience a heightened consciousness toward the promotion of energy conservation; this leads to an increase in the consciousness of the user with respect to energy conservation.

According to an additional aspect of the invention the notification unit includes a first notification unit that operates during a predetermined period following the start of the power-saving operation and a second notification unit that operates after the predetermined period has passed.

According to this configuration, when power-saving operation has started, the user is notified, for example, through the emission of notification light by the first notification unit, and furthermore, after a predetermined amount of time has passed, the amount of power consumed is suppressed by, for example, the second notification unit reducing the intensity of the emitted light. For this reason, the user can confirm that the refrigerator is in power-saving operation, and the amount of power required to be consumed for the notification can be suppressed as well.

According to a further aspect of the invention the refrigerator main body includes an insulating main body having a storage compartment, a door that covers the opening of the storage compartment in a freely openable and closable state, and a compressor, a condenser, a decompressor, and an evaporator that configure a refrigeration cycle; the compressor is an inverter electric motor that is driven at multiple rotational frequencies including a rotational frequency that is lower than the rotational frequency of a commercial power source; and the control unit (a) controls the compressor so that the compressor operates in an energy conservation mode that operates at a rotational frequency that is lower than the rotational frequency of the commercial power source during normal cooling, where the outside temperature is in the vicinity of 25°C and said door is not opened and closed; and (b) controls the compressor so that the compressor operates in a high-load cooling mode that operates at a rotational frequency that is greater than or equal to the rotational frequency of the commercial power source only in the case of a high-load cooling mode that requires a high load due to said door being opened and closed or the intrusion of warm air.

According to this configuration, the compressor operates at a rotational frequency that is lower than the rotational frequency of a commercial power source during both an energy conservation mode, which is power-saving operation, and during normal operation, thereby realizing further power saving, and control is carried out so that the refrigerator operates in a high-load cooling mode, where the electric element is operated at a rotational frequency greater than or equal to the rotational frequency of a commercial power source, only in the case where a high load has been placed thereupon. In this manner, the compressor is operated at low rotations focusing on times of normal cooling and the energy conservation mode, which make up more than 80% of the yearly usage time of the refrigerator, thus making it possible to achieve significant power saving with the actual refrigerator, and provide a refrigerator in which better energy conservation is realized.

According to an additional aspect of the invention the compressor, installed in the refrigerator, includes a compression chamber and a piston that moves reciprocally within the compression chamber, in which the cylinder volume, which is the volume of the space in which compression operations are carried out by the piston moving reciprocally within the compression chamber, is of a size that enables the compressor to be driven at a rotational frequency that is lower than the rotational frequency of the commercial power source even during normal cooling in the case where the outside temperature is in the vicinity of 25°C and the door is not opened and closed.

This configuration is one in which focus has been placed on the cylinder volume of the compressor. To be more specific, with this compressor, in addition to attempting to achieve energy conservation by using an inverter-type compressor and operating in an energy conservation mode, which is power-saving operation, a large cylinder volume is employed as well. Through this, both power-saving operation in an energy conservation mode and high-performance cooling in a high-load cooling mode can be realized.

Accordingly, by employing a cylinder volume for the compressor whereby the rotational frequency is lower than the rotational frequency of a commercial power source even during normal operation in addition to the energy conservation mode, which is power-saving operation, further power-saving can be realized; in addition, in the case where a high load has been placed on the compressor, high-load cooling can be carried out based on the comparatively large cylinder volume and by performing control so as to enter a high-load cooling mode in which the electric element operates at a rotational frequency that is greater than or equal to the rotational frequency of a commercial power source. In this manner, it is possible to return to the normal cooling mode from the high-load cooling mode quickly. As a result, the compressor is operated at low rotations focusing on times of normal cooling and the energy conservation mode, which make up more than 80% of the yearly usage time of the refrigerator, thus making it possible to achieve significant power saving with the actual refrigerator, and provide a refrigerator in which better energy conservation is realized.

According to a further aspect of the invention the compressor, installed in the refrigerator, includes a compression chamber and a piston that moves reciprocally within the compression chamber, in which the diameter of the piston is greater than a stroke, the stroke being the distance of the reciprocal movement of the piston.

According to this configuration, in the case where operation is carried out in an energy conservation mode, which is power-saving operation, having attempted to achieve energy conservation through an inverter-type compressor in order to realize energy conservation, it is possible to carry out power-saving by operating at low revolutions, which in turn is made possible by employing a large cylinder volume. Furthermore, in the case where a high load has occurred due to a door being opened and closed or a rise in the interior temperature, a large cylinder volume makes it possible to comply with high loads by operating at high revolutions for a short period of time. In this manner, according to the present invention, it is possible to realize a compressor that achieves significant power saving in an actual refrigerator.

Furthermore, this configuration focuses on the mutual relationship between the diameter of the piston that forms the cylinder volume of the compressor and the stroke thereof, in a compressor provided with a large cylinder volume as described above. To be more specific, rather than forming a large cylinder volume by lengthening the stroke, a large cylinder volume is formed by increasing the diameter of the piston. Through this, it is possible to realize a highly-reliable compressor even in the case where the compressor is operated across a wide range of rotational frequencies. As a result, both power-saving operation in an energy conservation mode and high-performance cooling in a high-load cooling mode can be realized.

In addition, it is possible to carry out high-load cooling in the case where a high load has been placed on the compressor by employing a comparatively large cylinder volume and performing control so as to enter a high-load cooling mode in which the electric element operates at a rotational frequency that is greater than or equal to the rotational frequency of a commercial power source. For this reason, it is possible to return to energy conservation mode from the high-load cooling mode quickly.

Embodiments of the present invention will be described hereinafter with reference to the drawings. Configurations identical to those in the conventional examples or the embodiments mentioned above are assigned the same reference numerals, and detailed descriptions thereof shall be omitted. Note that the present invention is not limited by these embodiments.

### (First Embodiment)

FIG. 1A is a front view of a refrigerator according to a first embodiment of the present invention. FIG. 1B is a vertical cross-sectional view of the refrigerator according to the first embodiment of the present invention. FIG. 2A is a configuration diagram illustrating an operation board of the refrigerator according to the first embodiment of the present invention. FIG. 2B is a configuration diagram illustrating another form of the operation board of the refrigerator according to the first embodiment of the present invention.

FIG. 3 is a diagram illustrating an A-A' cross-section of FIG. 2A. FIG. 4 is a control block diagram. FIG. 5 is a diagram illustrating data images of illumination detection values, door opening/closing, and so on of the refrigerator according to the first embodiment of the present invention.

FIG. 6 is a diagram illustrating past reference data for an arbitrary day according to the first embodiment of the present invention. FIG. 7 is a control flowchart according to the first embodiment. FIG. 8 is a flowchart illustrating nighttime control according to the first embodiment. FIG. 9 is a flowchart illustrating away-from-home control according to the first embodiment. FIG. 10 is an image diagram illustrating an effect of the first embodiment.

As shown in FIG. 1A, a refrigerator 20 according to the first embodiment includes a refrigerator main body 21. The refrigerator main body 21 has storage compartments including a refrigerating compartment 22, an ice compartment 23, a switchable compartment 24, a freezer compartment 25, and a vegetable compartment 26 laid out in that order from the top down. An operation unit 27 is disposed near the central portion of a refrigerating compartment door 22a of the refrigerating compartment 22, which is the uppermost storage compartment, and an operation board 27a is configured within the operation unit 27.

An illumination sensor 36 that detects illumination is provided above the operation board 27a, on a line extending from the vertical axis thereof, as a first detection unit capable of detecting a change in the installation environment, which is the surrounding outside environment of the refrigerator 20. The illumination sensor 36 can specifically be configured using a light sensor that utilizes a photodiode, a phototransistor, or the like as its base element.

In this manner, in the case where the illumination sensor 36 is used as the first detection unit capable of detecting a change in the installation environment of the refrigerator 20, detecting whether the living space in which the refrigerator 20 is installed is bright or dark makes it possible to determine whether it is daytime, in which it is judged that a user is mainly likely to be in a state of high activity, or nighttime, in which it is judged that the user is likely to be in a state of low activity.

Meanwhile, in the case where the kitchen or the like in which the refrigerator 20 is installed is a space without windows, the active times of the user can be thought of as essentially corresponding to the lighting of room lighting fixtures.

Meanwhile, operation switches 37 for setting the compartmental temperatures of the various compartments, making settings for ice making, speed cooling, and so on, display lights 38 that display statuses as set using the operation switches 37, and a notification unit 39, utilizing an LED or the like, that communicates the variability of the operational state of the refrigerator 20 based on detections made by the illumination sensor 36, are disposed in the operation board 27a.

Furthermore, a human sensor 40 which is not a part of the invention, may be disposed below the center of the operation board 27a. For example, it can be determined whether or not a person is in the periphery of the refrigerator 20 by the human sensor 40 detecting changes in the amount of heat rays irradiated from people.

Accordingly, in the case where the human sensor 40 is used an activity state regarding whether or not a user is actually active in the periphery of where the refrigerator 20 is installed can be determined and distinguished.

A illumination sensor cover 41, realized by making part of an operation unit cover transparent so that the illumination sensor 36 can detect light in the installation environment, which is the outside environment of the refrigerator 20, is disposed in front of the illumination sensor 36. Meanwhile, an LED cover 42 for allowing emitted light to pass forward from the LED, which is the notification unit 39, is disposed as well. These covers (41 and 42) are disposed in an operation board cover 43.

Note that although not shown, a human sensor cover is also disposed in front of the human sensor 40 in the case where the human sensor 40 is provided, in the same manner as with the illumination sensor 36 and the LED.

Furthermore, this door layout is merely a representative example, and the layout is not limited to this layout.

The operation and effects of the refrigerator 20 thus configured will be described below.

In FIG. 1B, an insulating main body, which is the refrigerator main body 21 of the refrigerator 20, is configured of an outer housing that primarily uses steel plates, an inner housing formed of a resin such as ABS or the like, and a foam insulating material, such as rigid foamed urethane, that has been injected into the space between the outer housing and the inner housing; the insulating main body divides the multiple storage compartments into insulated sections that are insulated from their surroundings using partition walls.

The refrigerating compartment 22 is provided in the uppermost portion of the insulating main body; the switchable compartment 24 and ice compartment 23 are provided side-by-side below the refrigerating compartment 22; and the freezer compartment 25 is disposed below the switchable compartment 24 and ice compartment 23. The vegetable compartment 26 is disposed in the lowermost area, and the doors in front of the respective storage compartments for blocking the outside air configure front opening portions of the refrigerator main body 21.

The refrigerating compartment 22 is normally 1°C to 5°C, as the lower limit for temperatures for refrigerated storage without freezing, whereas the lowermost vegetable compartment 26 is set at the same or a slightly higher temperature than the refrigerating compartment 22, or 2°C to 7°C. Meanwhile, the freezer compartment 25 is set to a freezing temperature range, and thus is normally set to -22°C to -15°C for frozen storage. The temperature is sometimes set to a lower temperature, such as -30°C or -25°C, to improve the state of the frozen storage.

The switchable compartment 24 can be switched between "refrigeration", which is set to 1°C to 5°C, "vegetables", which is set to 2°C to 7°C, and "freezing", which is normally set to -22°C to -15°C, as well as a pre-set temperature range between the refrigeration temperature range and the freezing temperature range. The switchable compartment 24 is a storage compartment provided with an independent door alongside the ice compartment 23, and often employs a drawer-type door.

Note that in the present embodiment, the switchable compartment 24 is used as a storage compartment that includes both refrigeration and freezing temperature ranges. However, because refrigeration is left to the refrigerating compartment 22 and vegetable compartment 26 and freezing is left to the freezer compartment 25, the switchable compartment 24 may be used as a storage compartment specialized for switching only to the stated temperature range that is between refrigeration and freezing. In addition, the switchable compartment 24 may be a storage compartment that is fixed at a specific temperature range, such as, for example, freezing, in light of the recent increased demand for frozen foods.

The ice compartment 23 makes ice using an automatic ice machine provided in the upper portion within the compartment with water sent from a reservoir tank (not shown) within the refrigerating compartment 22, and stores the ice in an ice storage receptacle (not shown) disposed in the lower portion within the compartment.

The top surface of the insulating main body has a shape in which a step-shaped concavity is provided facing toward the rear surface of the refrigerator 20. A machine compartment is formed in this step-shaped concavity, and a compressor 28 and high-voltage components of a refrigeration cycle including a dryer for removing water (not shown) are housed within the machine compartment. In other words, the machine compartment in which the compressor 28 is disposed is formed cutting into the rear area of the uppermost portion of the refrigerating compartment 22.

Note that the items relating to the principle elements of the invention described hereinafter in the present embodiment may also be applied to a refrigerator of a type in which the machine compartment is provided in a region behind the storage compartment in the lowermost portion of the insulating main body and the compressor 28 is disposed therein, which is common conventionally.

A cooling compartment 29 that produces cool air is provided in the rear surface of the freezer compartment 25, and is divided into air flow paths. Air flow paths for transporting cool air and leading to the respective insulated compartments, and back surface partition walls configured to insulatively separate the respective storage compartments, are configured between the cooling compartment 29 and the other storage compartments. Meanwhile, a partition plate for separating a freezer compartment expulsion air flow path and the cooling compartment 29 is provided. A cooling unit 30 is disposed within the cooling compartment 29, and a cooling fan 31 that blows cool air cooled by the cooling unit 30 to the refrigerating compartment 22, the switchable compartment 24, the ice compartment 23, the vegetable compartment 26, and the freezer compartment 25 using the forced-convection method is disposed in the space above the cooling unit 30.

Note that the cooling unit 30 functions as an evaporator of which the refrigeration cycle is partially configured. Meanwhile, the compressor 28, a condenser and decompressor (not shown), and the cooling unit 30 are connected in that order, thereby forming a serial refrigerant flow channel; the refrigeration cycle in the refrigerator 20 is configured thus.

Meanwhile, a glass-tube radiant heater 32 for removing frost, ice, and so on that has accumulated on the cooling unit 30 and the periphery thereof during cooling is provided in the space below the cooling unit 30. Furthermore, a drain pan for catching water resulting from the defrosting is provided further therebelow, and a drain tube leading from the deepest portion of the drain pan to the outside of the refrigerator is provided as well; an evaporating dish is disposed outside of the refrigerator on the downstream side of the drain tube.

Conventional refrigerators have carried out temperature control for meeting a set temperature determined regardless of whether it is day or night. However, at night, the temperature of the surrounding environment of the refrigerator drops, leading to a drop in the thermal load, whereas the thermal load arising when food items are removed or replaced is extremely low, and thus the inside temperature of the refrigerator ends up being set to a temperature that is slightly too cold.

Meanwhile, with conventional energy conservation units that utilize light sensors, energy conservation effects could not be achieved unless a user explicitly presses a dedicated button designating "power-saving operation". Even in the case where the user has explicitly caused the power-saving operation to commence, it is then necessary for the user to explicitly manipulate a button when s/he wishes to cancel the power-saving operation. It has thus been possible for the user to forget to cancel the power-saving operation, resulting in higher set temperatures being sustained, which in turn results in a poor storage state for food items.

The present invention provides a refrigerator that achieves energy conservation through an automatic function, or in other words, by automatically switching to power-saving operation without requiring a dedicated button to be pressed.

In the present embodiment, the illumination level of the surroundings of the refrigerator 20 resulting from light irradiated by the sun, room lighting fixtures, or the like is detected by the illumination sensor 36 installed in the front surface of the refrigerator main body 21.

The illumination level detected thereby is inputted into a control unit 54. In the case where the illumination level inputted into the control unit 54 is lower than an activity determination value, which is a pre-set specified value whereby it is determined whether or not the user is in an active state, for a set continuous period of time, it is determined that it is nighttime or that there is no human activity, and thus if the compartment temperatures of the respective storage compartments is less than or equal to an appropriate value (for example, 5°C for the refrigerating compartment, -18° for the freezer compartment, and so on), the refrigerator automatically switches to power-saving operation, in which the cooling performance of the refrigerator is slightly decreased. Accordingly, the illumination sensor 36 functions as a first detection unit that detects a change in the outside environment of the refrigerator 20, thereby indirectly determining the activity state of the user.

Meanwhile, in the case where the illumination level has exceeded the activity determination value, which is a specified value, or in other words, in the case where the surrounding area of the refrigerator 20 is bright and it can thus be thought that it is an active time for the user, the control unit 54 determines that the user is active and is thus in an active state, cancels the power-saving operation, and returns to normal operation.

However, because detections of instant flashes of light from outside, such as automobile headlights, are to be excluded, a disturbance prevention unit, which is a configuration for preventing a return to normal operation caused by such disturbance light, is provided.

To be more specific, providing, as the disturbance prevention unit, a function for canceling the power-saving operation only in the case where an illumination level has been maintained for a set period of continuous time, or to rephrase, the case where an illumination level greater than the activity determination value is maintained for a set period of continuous time, is useful in achieving a higher level of energy conservation in practical use.

In this manner, whether the surroundings of where the refrigerator is installed are bright or dark can be detected in the case where the illumination sensor 36 is used as the first detection unit capable of detecting a change in the installation environment of the refrigerator. It can therefore be determined whether it is daytime, which is the main time when the user is highly likely to be active, or nighttime.

Meanwhile, in the case where the kitchen or the like in which the refrigerator 20 is installed is a space without windows, the active times of the user can be thought of as essentially corresponding to the lighting of room lighting fixtures, and thus energy conservation can be achieved with even less waste.

Through this, a time in which an illumination level that is greater than the activity determination value is detected, indicating that the surroundings are bright and it can thus be considered that it is an active time for the user, is determined to be an active state in which the user is active, and thus the power-saving operation is canceled and cooling is carried out through normal operation. As a result, sufficient cooling is carried out by indirectly detecting that the doors are likely to be opened and closed, and thus the storage properties for food items can be maintained even in the case where doors are opened and closed.

When the refrigerator 20 according to the present embodiment is compared with a conventional refrigerator in which power-saving operation is set manually, with the conventional refrigerator, the power-saving operation is not canceled unless the user explicitly manipulates a button, and thus in the case where doors are opened and closed in a state in which a higher temperature is set and sufficient cooling is not carried out, the temperature within the refrigerator rises suddenly, leading to a rise in the temperature of the food items and a poorer storage state.

However, with the refrigerator 20 according to the present embodiment of the present invention, power-saving operation is canceled and cooling is carried out through normal operation when the surroundings are bright and it can thus be thought that the user is active, and the fact that doors are likely to be opened and closed is indirectly detected or predicted and sufficient cooling is carried out in advance; therefore, even in the case where doors are opened and closed, the storage properties for food items can be maintained.

Meanwhile, the power-saving operation may be set using the human sensor 40.

To be more specific, when a person is active in the household, that person gives off heat rays. Accordingly, an active state in that household environment can be detected by installing the human sensor 40, such as an infrared sensor or the like capable of detecting heat rays, in the front surface of a door in the refrigerator 20.

For example, during morning and evening meals and times of preparation therefor, people are present in the household environment that includes the refrigerator 20, and can thus be detected by the human sensor 40. On the other hand, when the people are out of the house, when it is late at night, or the like, people are not active in the vicinity of the refrigerator 20, and thus the human sensor 40 can detect the non-presence of people. Using this, the refrigerator enters power-saving operation in the case where a state in which the non-presence of people continues for a set period, whereas the power-saving mode is canceled in the case where the human sensor 40 has detected that people are at home and that that state has continued for a set period. Through this, it is possible to save power in a state in which the cooling performance during use is maintained.

Furthermore, taking into account the case where the kitchen is located in an area with many windows and that receives good sunlight, the case in which indoor light fixtures are lit even throughout the night for some reason, and so on, it is desirable for the refrigerator 20 to be provided with a second detection unit that detects a change in the internal environment of the refrigerator in addition to the illumination sensor 36, which is the first detection unit capable of detecting a change in the installation environment of the refrigerator 20; this makes it possible to indirectly detect the actual usage state of the refrigerator 20.

When using the illumination sensor 36 as a first detection unit, a case where the kitchen is located in an area with many windows and that receives good sunlight, a case where indoor light fixtures are lit even throughout the night for some reason, and so on can be considered. In light of this, even in the case where the first detection unit has detected an active state in the installation environment of the refrigerator 20, the usage state of the refrigerator is determined by detecting a change in the internal environment using the second detection unit; in the case where the refrigerator is in a low-use state, in which the refrigerator is not being used very much, it is desirable to enter power-saving operation based only on the result of the detection performed by the second detection unit.

In this case, as opposed to the case where, for example, a low-activity state has been determined by the first detection unit, in the case where an active state has been determined by the first detection unit, control is performed so that the conditions of a usage determination value for the second detection unit are made slightly more stringent, and power-saving operation is switched to after confirming that the refrigerator is indeed not in a state of usage.

The stringent conditions involve using smaller fluctuation intervals of the internal environment of the refrigerator, with the determination conditions for the active state determining the usage judgment value over a longer period of time than with the determination conditions for the low-activity state.

For example, by using an output signal from the first detection unit as information for changing the usage determination value for the second detection unit, it can be determined whether or not to switch to power-saving operation using both the output signal from the first detection unit and an output signal from the second detection unit.

A door SW 51, which is a door opened and closed state detection unit for the refrigerator, and an interior temperature sensor 53, which is an interior temperature detection unit that detects the temperatures within the respective storage compartments of the refrigerator 20, a set temperature detection unit that detects the set temperature of the refrigerator 20, and so on can be considered as the second detection unit capable of detecting fluctuations in the internal environment of the refrigerator 20.

In the case where the door SW 51, which is a door open/closed state detection unit for the refrigerator 20, is used as the second detection unit, a detection result, represented by an output signal from the door SW 51, is inputted into the control unit 54; in the case where a door has not been opened and closed for a predetermined set period of time (for example, three hours) serving as the usage determination value, the control unit 54 determines that the refrigerator is not in a state in which it is being used by the user, and thus automatically switches the refrigerator to power-saving operation, in which the cooling performance has been decreased slightly.

At this time, whether or not a door is opened and closed is detected as a change in the internal environment, and thus the second detection unit is capable of directly detecting the state of usage by the user as represented by whether a door is opened and closed; therefore, the second detection unit can be called a useful detection unit. However, it cannot be said that all refrigerators generally include the door SW, which is a door opened and closed state detection unit, in their doors; therefore, in such cases, it is desirable to ascertain changes in the internal environment with certainty by also using an internal environment detection unit, a set temperature detection unit, or the like, as described hereinafter.

Next, in the case where the interior temperature sensor 53, which is an interior temperature detection unit that detects the temperature within the respective storage compartments of the refrigerator 20, is used as the second detection unit, a detection result, represented by an output signal from the interior temperature sensor 53, is inputted into the control unit 54, and in the case where the interior temperature has not increased beyond the predetermined usage determination value, the control unit 54 determines that the refrigerator is in a low-usage state. To rephrase, it is determined that the refrigerator is not in a state of usage by the user, and thus the refrigerator is automatically switched to power-saving operation, in which the cooling performance has been decreased slightly.

This determination that the refrigerator is not in a state of usage is a direct determination of the usage state of the refrigerator 20 based on a determination of the usage state in which the output result of the interior temperature as detected using an output signal from the second detection unit indicates that the refrigerator is in a stable state, where the interior temperature is stable, no warm air has infiltrated due to opening/closing of doors and the like, and there is no temperature fluctuation caused by the refrigeration system, such as the defrosting of the cooling unit 30.

Meanwhile, in the case where an interior temperature detection unit that detects the temperature of the respective storage compartments of the refrigerator 20 is used as the first detection unit, a temperature fluctuation amount greater than or equal to a set amount is taken as the predetermined activity determination value. In other words, in the case where there is no temperature fluctuation greater than or equal to a set amount, it can be indirectly detected that there is little temperature fluctuation in the outside temperature, which is one example of a change in the surrounding environment of the refrigerator; thus an indirect detection of change in the surrounding environment of the refrigerator can be made.

Furthermore, a case in which the set temperature detection unit that detects the set temperature of the refrigerator is used as the second detection unit capable of indirectly detecting the usage state of the refrigerator 20 can be considered. In this case, in the case where, for example, the set temperature of the storage compartment is set to a "high" cooling mode indicating that the user wishes to actively cool the storage compartment, the usage state is determined to be a state in which the user is actively using the refrigerator 20.

In this case, even in the case where, for example, the conditions are such that the refrigerator would enter power-saving operation due to the illumination sensor 36, which is the first detection unit, the control unit 54 prioritizes the determination of the usage state made by the second detection unit, and performs control so as not to enter power-saving operation; this makes it possible to realize cooling that conforms to the user's intention to more actively carry out cooling.

According to this configuration, the usage state can be detected by indirectly determining whether or not the user is attempting to actively cool the storage compartment based on the set temperature. For example, in the case where there are three types of set temperatures, or high, medium, and low, the user selecting "high", which is higher than the medium setting, reflects that he/she is attempting to actively cool the storage compartment, and thus carrying out control for not entering power-saving operation is useful as well.

Meanwhile, when the set temperature of a storage compartment is set to a "low" cooling mode, the set temperature of that storage compartment may be increased in order to save more power. However, because this may effect the cooling performance within the storage compartment and lead to quality problems such as undercooling and the like, a determination so as not to enter power-saving operation can be carried out as freshness control for maintaining quality.

By entering power-saving operation using both the first detection unit and the second detection unit in this manner and confirming the installation environment and usage state of the refrigerator, it is possible to provide a refrigerator that realizes effective energy conservation without inhibiting the usability for the user during actual use.

Next, an invention that, in addition to automatically entering power-saving operation in this manner, carries out power-saving operation provided with a learning function that is customized to the usage states of individual households by providing a storage unit 55 that stores output signals from the first detection unit and the second detection unit will be described.

Information indicated by the output signals from the first detection unit and the second detection unit are accumulated in the storage unit 55 for a set period of time (for example, three weeks). Based on the information accumulated in the storage unit 55, the control unit 54 determines a power-saving operation pattern, which is a pattern in which the operation of current-consuming components such as the compressor 28 or the like is suppressed or stopped, and stores that pattern in the storage unit 55. In other words, the storage unit 55 records a certain set pattern as a lifestyle using a learning function, and determines the power-saving operation pattern through predictions based on this learning function. The control unit 54 automatically carries out power-saving operation for suppressing or stopping the operation of the compressor 28, the cooling fan 31, a temperature compensation heater 56, an interior light 57, and so on, which are current-consuming components, in accordance with the determined pattern.

In other words, the information indicated by the output signals of the first detection unit and the second detection unit is accumulated in the storage unit 55 over a set period of time, and a lifestyle pattern is predicted for that household based on that information. Through this, time periods in which the members of the household can be predicted as being asleep, being out of the house, and so on are determined to be low-activity states and low-usage states, and when such time periods arrive, the refrigerator automatically switches to power-saving operation.

Doing so makes it possible to suppress overcooling and suppress the rotational frequency of the compressor 28, and makes it possible to customize operation of other current-consuming components, such as heaters and the like, to that household; power-saving operation can thus be carried out automatically with high accuracy, which enables the realization of further energy conservation.

Note that it is thought that a longer accumulation period for the information enables the lifestyle patterns to be accumulated and thus improves the accuracy thereof. However, this also leads to complicated control, and a greater storage capacity is also required; this leads to an increase in costs and the occurrence of bugs due to the complicated control, which in turn leads to instabilities in quality. Furthermore, in countries such as Japan that experience a change in seasons, lifestyle patterns change with the seasons, and thus accumulation over a long period of time will not necessarily increase the accuracy of the ascertainment of lifestyle patterns.

In the present embodiment, the accumulation of data is set to three weeks, which is thought to be a comparatively appropriate accumulation period, and lifestyle patterns are ascertained appropriately while simplifying the control even in the case where changes have occurred in the lifestyle patterns.

To be more specific, in the case where the detection signal from the first detection unit capable of detecting a change in the installation environment of the refrigerator 20 is stored, the illumination level detected by the illumination sensor 36 for the past three weeks is divided into certain units of time and stored in the storage unit 55. The control unit 54 carries out pattern judgment on the stored information, determines that a time period in which there is no human activity for a set period of time among the activity times of a single day is a low-activity state time period, and automatically switches the refrigerator to power-saving operation, in which the cooling performance has been decreased slightly.

However, with respect to the first detection unit capable of detecting a change in the installation environment of the refrigerator 20, in the case where the actual detection level of the illumination sensor 36 is high for a set period of time after the refrigerator entered power-saving operation based on the judgment of the storage unit 55, it is desirable for the control unit 54 to include a correction function for canceling power-saving operation and returning to normal operation; by including this correction function, the cooling performance of the refrigerator can be maintained even in the case where the household has deviated from the normal lifestyle pattern.

Note that a case where an output value of the illumination sensor 36 that indicates a disconnection, a short-circuit, or the like (if the maximum output value is 5 V, the case where the output is 0 V or 5 V, and so on) is maintained for a set period of time, such as one week, can be considered. Such a case is processed as a malfunction of the first detection unit capable of detecting a change in the installation environment of the refrigerator 20, such as the illumination sensor 36 or the human sensor 40. To be more specific, normal cooling operation that performs freshness control for ensuring the refrigeration quality is carried out, the malfunction state is recorded, and power-saving operation is not entered. However, in the case where the output value of the illumination sensor 36 has changed normally after this, it is possible to cancel the malfunction and enter power-saving operation immediately.

Meanwhile, storing the result of the detection performed by the second detection unit capable of indirectly detecting the usage state of the refrigerator 20 can be called a more direct and useful means for predicting the lifestyle pattern of that household.

To be more specific, in the case where the door opened and closed state detection unit (door SW 51) is used as the second detection unit of the refrigerator, the result of the detection performed by the door opened and closed state detection unit serving as the second detection unit is divided into set time units (for example, 60-minute units), and the number of door openings/closings per unit time is recorded in the storage unit 55. The control unit 54 stores, in, for example, the storage unit 55, a time period in which it has been judged that there were no or few door openings/closings during the activity time of that day using the stored past data, or in other words, a time period in which it has been judged that the number of door openings/closings is less than a predetermined specified value, as a low-usage time period; the refrigerator 20 is then switched to power-saving operation, in which the cooling performance is slightly reduced, during low-usage time periods.

Likewise, in the case where the interior temperature sensor 53, which is an interior temperature detection unit that detects the temperatures in the respective storage compartments of the refrigerator 20, is used as the second detection unit, the temperatures in the respective storage compartments are detected by the interior temperature sensor 53, and whether cooling is being carried out at less than or equal to a specified temperature is divided according to a time unit and stored in the storage unit. The control unit 54 stores, in, for example, the storage unit 55, a time period in which it has been judged that the storage compartments are being sufficiently cooled during the activity time of a day as a low-usage time period, and when the time period has reached the low-usage time period, the refrigerator is automatically switched to power-saving operation, in which the cooling performance is slightly reduced.

In this manner, by dividing past illumination, door openings/closings, and interior temperatures into time units and storing these in the storage unit 55, and then judging lifestyle patterns using this data, the operation of the refrigerator can be predicted and controlled.

These will be described using the control block diagram illustrated in FIG. 4.

Using the illumination sensor 36, which is the first detection unit, the refrigerator according to the present invention detects, based on the installation environment and the usage of the refrigerator 20, the brightness in the periphery of the front surface of the refrigerator 20, outputs the result to the control unit 54, and furthermore, stores that data in the storage unit 55.

Likewise, the number of door openings/closings, the door opening/closing times, and so on are inputted into the storage unit 55 based on an output signal from the door SW 51 serving as a door opened and closed detection unit, which is the second detection unit capable of detecting and usage state of the refrigerator 20, by detecting the opened and closed state of the refrigerating compartment door 22a, other doors, and so on. Meanwhile, temperature data and so on detected using an outside temperature sensor in the outer hull of the refrigerator 20, the various interior temperature sensors, and so on is also inputted into the storage unit 55.

This data is extracted every set period, and an operation pattern is set using the control unit 54; the compressor 28, cooling fan 31, and temperature compensation heater 56, which are current-consuming components, and the temperature settings of the respective storage compartments are then automatically changed. Here, assuming that, for example, a late-night determination value for determining that it is late at night and thus that the user is not active is 5 Lx, in the case where the illumination sensor 36, which is the first detection unit, has detected an illumination of less than 5 Lx, it is determined that it is late at night, and based on the fact that it has been determined to be late at night, it is determined that it is a low-activity state in which the user is not very active.

Furthermore, a predetermined temperature is pre-set as a usage determination value during detection by the interior temperature sensor 53, which is the second detection unit, and in the case where the interior temperature sensor 53 has detected cooling at less than or equal to the predetermined temperature, it is determined that the usage state of the user is also a low-usage state, and the time period in which this low-usage state occurs is determined to be a low-usage time period.

By determining the low-activity state and the low-usage state and switching to power-saving operation using the control unit 54, the refrigerator automatically enters power-saving operation in which the rotational frequency of the compressor 28 is suppressed, operation for preventing overcooling is performed, and so on, and the LED serving as the notification unit 39 is caused to light up for a set period of time or to be extinguished.

Next, using FIG. 5, an image of the illumination detection values, the door opening/closing data, and so on of the refrigerator 20 will be described.

As shown in FIG. 5, for example, one hour is considered to be a single segment, and the average illumination, interior temperature, and number of door openings/closings for that period is stored. In FIG. 5, white fill indicates a period in which no door openings/closings have occurred, whereas areas with light dotting indicate periods in which at least N (for example, 1) or more door openings/closings have occurred; meanwhile, areas with heavy dotting indicate periods in which the results of the detection performed by the illumination sensor 36 are less than a specified value (for example, less than 5 Lx).

If these periods are taken in units of 24 segments, this corresponds to a single day, and if further taken in units of 168 segments, this corresponds to one week (seven days).

Accordingly, for example, the data of the week previous to a certain day can be extracted with ease, and furthermore the data of two or three weeks previous can also be extracted with ease.

In a typical household, it is often the case that the inhabitants live according to a set pattern in a given day, and furthermore, it is often the case that the inhabitants live according to a set pattern on the same days of the week in each week. Carrying out cooling operation of the refrigerator 20 taking these into consideration is extremely effective, and is also linked to saving power.

Note that with respect to rewriting the data, it is desirable to update the data each amount of time that corresponds to a single segment (unit time: for example, 60 minutes). However, the data may be updated in units of one day or units of one week.

Next, using FIG. 6, a way of looking at the past reference data for a single arbitrary day will be described.

Note that in FIGS. 6(A) and 6(B), segments to which diagonal lines have been added indicate segments in which the user of the refrigerator 20 is not at home.

The data of one week previous, two weeks previous, and three weeks previous to that day is extracted. The control unit 54 then determines that if, for example, the user is away from home for more than 2/3 of those three weeks, then the state is a low-usage state. In the case of FIG. 6(A), the control unit 54 determines that the user is out of the house for segments to which diagonal lines have been added, located to the right of the words "usage/non-usage determination", and carries out power-saving operation. However, the final hour for which the user is out of the house can be thought of as a time period for moving from power-saving operation to normal operation, and thus in actuality, power-saving operation is canceled one hour before the out-of-the-house period, and the refrigerator returns to normal cooling performance by switching to normal operation.

Meanwhile, similar control is carried out in the case of the state of usage, as shown in FIG. 6(B).

However, in the case where the out-of-the-house period is comparatively short (one hour, two hours, or the like), this is not treated as an out-of-the-house period. The reason for this is that time is generally required for the stability and temperature maintenance of the cooling system of refrigerators, and thus a sudden fluctuation in temperature over a short period of time may conversely result in an increase in consumed power.

Next, details of these operations will be described using the control flowcharts in FIGS. 7 to 9.

Note that the control of the operations of the various constituent elements of the refrigerator 20 and the processing of information is carried out by the control unit 54.

When, in S101, power to the refrigerator is turned on, a timer T for measuring a certain interval A is started in S102, and in S103, a main control flow for performing normal refrigerator operation is commenced. At this time, if, in S104, a door opening/closing is detected based on an output signal from the door SW 51, serving as a door opened and closed detection unit, a door opening/closing number M is counted in S105.

Next, if the results of the detection performed by the illumination sensor 36 in S106 indicate an illumination greater than or equal to, for example, 5 Lx, which has been set as the activity determination value, normal operation is continued. On the other hand, if the result of the detection performed by the illumination sensor 36 indicates that less than 5 Lx, which is the activity determination value, has been detected, it is then determined, as indicated in S107, S108, and S109, whether the result of the detection performed by the illumination sensor 36 indicates less than 5 Lx for a continuous period of five minutes or more; if the interior temperature sensor 53 has detected that the temperature at which a storage compartment is being cooled is less than or equal to a specified temperature, and when the door SW 51 has detected that there has been no door opening/closing in the past ten minutes, the procedure moves to nighttime control, which is one type of power-saving operation (S110).

Then, if, in S111, the timer T has reached the certain interval A, the door opening/closing number or door opened and closed time and average illumination up until that point in time is calculated, and is then stored in a storage unit 55 in S112.

The door opening/closing number, illumination data, and so on are then reset (S113), the measurement of the door opening/closing number, illumination, and so on is then repeated for, for example, the next hour, and the data is updated.

Next, nighttime control as illustrated in FIG. 8 will be described.

In S110, the procedure moves to nighttime control. In this case, the user is predicted to be in a state of sleep, and thus it can be predicted that the burden on the refrigerator 20 as a result of door openings/closings will be extremely low compared to normal. Furthermore, it can be predicted that such a state will continue for a long period of time, such as, for example, three hours or more, and thus power-saving operation can be executed based thereupon.

To be more specific, the burden caused by loading food items, opening/closing the doors, and so on is low, and therefore, as described in S121 of FIG. 8, the interior temperature of the refrigerator 20 can be set 1 to 2°C higher; furthermore, an energy conservation effect is produced as a result of an increase in the interior differential, or by slowing fluctuations in the interior temperature. Meanwhile, in addition to the energy conservation effect, quieter operation can also be achieved at this time by carrying out power-saving operation, in which the compressor 28 and the cooling fan 31 operate at lower speeds. Furthermore, causing a rise in the interior temperature setting also makes it possible to reduce inputs to the temperature compensation heater.

After this, if there is no fluctuation in the door opening/closing detection in S122, the illumination detection in S124, and the interior temperature detection in S126, that operation state is maintained.

If, however, even just one of these fluctuates, it is determined whether to maintain that operation state.

To be more specific, in the case where a door opening/closing is detected in S122, the procedure moves to S123, where, if it is determined that the door opening/closing number is greater than or equal to N1 times, which was set in advance, the nighttime control is canceled as indicated in S127, and the control moves to normal control. Similarly, if the illumination sensor 36 detects more than 5 Lx, which is the activity determination value, in S124, the procedure moves to S125, where, in the case where the illumination sensor 36 has further detected that more than 10 Lx has continued for five minutes or more, the procedure moves to S127, where the nighttime control is canceled.

Furthermore, in the case where the interior temperature has risen beyond the specified value, or in the case where speed ice-making, speed freezing, or speed cooling has been set to be carried out and it is thus necessary to change the interior temperature setting, it is determined that the usage state is one in which the user is actively using the refrigerator, and thus the nighttime control is canceled.

Note that if an output value (0 V, 5 V, or the like) for the illumination sensor 36 continues for a set period of time, such as, for example, one week, thus indicating the possibility of a disconnection, a short-circuit, or the like, this is processed as a malfunction of the illumination sensor 36. To be more specific, normal cooling operation is carried out, the malfunction state is recorded, and power-saving operation is not entered. However, in the case where the output value of the illumination sensor 36 has changed normally after this, it is possible to cancel the malfunction and enter power-saving operation immediately.

Next, away-from-home control as illustrated in FIG. 9 will be described.

Every set period in which S103 is being executed, such as, for example, every 24 hours or every defrost cycle, an away-from-home control determination is carried out in S140.

First, the procedures following S142 are determined using data indicating the door opening/closing number, illumination, and interior temperature for the past three weeks as stored in the storage unit 55 in S141.

For example, in S143, if a state in which no door is opened and closed for three consecutive hours or more during the same time period for the past three weeks has continued for more than 2/3, it can be postulated that the lifestyle pattern of that household includes a state in which nobody is at home during the daytime, such as, for example, when both the husband and the wife work. At this time, in order to detect the usage state of the refrigerator 20, it is confirmed, in S144, whether or not the cooling in the respective storage compartments is sufficient, and confirmed, in S145, whether or not a door has been opened and closed in the past ten minutes. If both S144 and S145 are Yes (Y), the away-from-home control is entered in S146, and power-saving operation is executed as described in S147. However, as opposed to the nighttime control, the away-from-home control is assumed to be carried out in the daytime, and thus suppresses the amount by which the temperature rises more than the nighttime control. For example, the amount of the rise in temperature is suppressed to 0.5°C to 1°C.

In this manner, during away-from-home control, the result of the detection performed by the illumination sensor 36 is not taken into consideration, and whether or not to switch to power-saving operation is determined based on the second detection unit that ascertains the usage state; aside from this, control that is essentially the same as the nighttime control is carried out.

Note that in the case where power-saving operation has been canceled for some reason based on the away-from-home determination, normal cooling operation is necessarily carried out for a set period of continuous time (for example, two hours, or until the compressor 28 stops) through normal control in S148. Accordingly, during this time, entering the nighttime control due to the illumination sensor 36 or the like is not carried out.

Meanwhile, when the power supply to the refrigerator 20 is interrupted and the power source has entered a reset state, such as due to lightning strikes, moving house, or the like, it can be expected that the stored patterns will be disturbed. In this case, data that has been stored as a malfunction state is completely reset, and this data is once again stored anew as freshness control for maintaining the refrigeration quality.

However, with a refrigerator 20 provided with a receiving unit capable of ascertaining the current date/time by receiving special reference radio waves as the first detection unit, it is not necessary to reset the data in consideration of the storage method.

Accordingly, when such energy conservation control is carried out, a temperature trend such as that shown in FIG. 10 occurs. In other words, the refrigerator 20 automatically carries out power-saving operation, thereby achieving significant energy conservation.

Furthermore, by lighting, for example, an LED, which serves as the communication unit 39, in the case where the refrigerator has entered power-saving operation, that status can be promoted to the user. A user having a high environmental consciousness can therefore feel an actual sense of energy conservation, thus making it possible to promote the high quality of the refrigerator.

To be more specific, in the case where the refrigerator has entered power-saving operation, the LED, serving as the communication unit 39, is lighted to a level capable of being visually confirmed by the inhabitants. However, in order to achieve energy conservation with respect to the LED lighting as well, the lighting level (or, to be more specific, the voltage supplied to the LED, the duty, and so on) is decreased after a set period of time (for example, five minutes) has passed, thus reducing the illumination level of the LED; this makes it possible to save even more power.

Meanwhile, as another form, the LED, serving as the notification unit 39, can be extinguished in the case where the refrigerator has entered power-saving operation, making the visual communication to the inhabitants even more effective. In this case as well, returning the LED to a lit state after a set period of time has passed, and then reducing the illumination level of the LED, makes it possible to save even more power.

Furthermore, as yet another form, auditory notifications may be provided to the user by using an audio speaker or the like serving as the notification unit 39.

Meanwhile, if the light-receiving surface of the illumination sensor 36, or in other words, the illumination sensor cover 41, is blocked by something, it is not possible to accurately detect the illumination, and thus not possible to switch to power-saving operation and return to normal operation.

Paper or the like being attached to the front surface of the refrigerating compartment door 22a can be thought of as a typical cause of such light blocking. However, in the present embodiment, the illumination sensor 36 is provided above the operation board 27a on a vertical axis thereabove, where it is highly unlikely that anything will be attached; thus erroneous illumination detection does not occur.

Meanwhile, although not shown in the diagrams, the user can be prompted to pay attention by providing the notification unit 39 in the vicinity of the illumination sensor 36 to promote the presence thereof, by providing a logo reading "ECO" or the like, and so on, which makes it possible to prevent disturbances such as paper or the like being attached to the surface of the refrigerating compartment door 22a to a further extent.

As described thus far, according to the present embodiment, the refrigerator includes the refrigerator main body 21, the first detection unit capable of judging a change in the installation environment of the refrigerator 20 or movement of people in the periphery of the refrigerator 20, the second detection unit capable of detecting the usage state of the refrigerator, the storage unit 55 that stores output signals from those detection units, and the control unit 54 that controls the operation of the current-consuming components of the refrigerator 20 based on the information stored in the storage unit 55.

Furthermore, determining the usage patterns of the household based on the information stored in the storage unit 55 makes it possible to predict periods of infrequent door openings/closings, infrequent food item loads, users being out of the house, users being asleep, and so on, and thus energy conservation can be realized without placing a burden on the user by automatically suppressing or stopping at least the operation of current-consuming components during those periods. Furthermore, because the user can visually confirm that the refrigerator 20 is in power-saving operation through the notification unit such as an LED or the like, the energy conservation properties can be promoted to the user.

Meanwhile, in the present embodiment, using the illumination sensor 36 as the first detection unit, the lifestyle pattern of inhabitants is predicted based on a change in illumination detected by the illumination sensor 36. For example, in the case where an extremely low value, such as less than 5 Lx, continues for greater than or equal to a set period for the illumination detection value, it is assumed that the user is sleeping, and therefore it is predicted that the frequency with which the refrigerator will be used thereafter will be extremely low; accordingly, the refrigerator moves to power-saving operation by suppressing the rotational frequency of the compressor 28 from rising and changing the interior temperature setting. Energy conservation is achieved by carrying out power-saving operation until the next door opening/closing as long as the state of low illumination continues.

In addition, in the present embodiment, using the human sensor 40 as the first detection unit makes it possible to detect a change in the amount of infrared light energy emitted by humans, thus making it possible to ascertain human movement in the periphery of the refrigerator 20. For this reason, if it can be determined that a person is not in the vicinity of the refrigerator 20 for a set period, such as when away from home or sleeping, the refrigerator can be moved to power-saving operation by suppressing an increase in the rotational frequency of the compressor 28 and changing the interior temperature setting, regardless of whether it is late at night or day. Energy conservation is achieved by carrying out power-saving operation until the next door opening/closing as long as the state of low illumination continues.

Note that although the illumination sensor 36 is used as the first detection unit in the present embodiment, the first detection unit may be a receiving unit for reference radio waves that accurately records time. In this case, because the date/time can be accurately ascertained automatically, temperature settings aligned with the seasons can be carried out, and during times of cold temperatures, such as winter and the like, the input of a temperature compensation heater and the like can be reduced, thus making it possible to conserve even more energy.

Meanwhile, in the present embodiment, information indicated by output signals from the first detection unit and second detection unit is accumulated in the storage unit 55 for storing such information for a set period of time, whereby a set pattern for power-saving operation is determined. However, in order to more accurately ascertain the lifestyle pattern of the user, this information may, for example, be segmented according to days of the week on a week-by-week basis by the storage unit 55. Through this, the lifestyle pattern of the household of a user can be more accurately ascertained while managing by days of the week.

This day-of-the-week management makes it possible to predict patterns corresponding to various arbitrary days by judging data that repeats every seven days, rather than judging what specific day of the week it is.

In this day-of-the-week management, for example, when confirming past records of data in a relevant unit of time, the control unit 54 confirms data in the same time period in previous days that are multiples of seven, such as seven days previous, 14 days previous, 21 days previous, and so on from a certain point in time, based on the fact that there are 24 hours in one day. This management puts the refrigerator into power-saving operation automatically in the case where a low activity state or a low usage state has been determined by comparing the confirmed pieces of data with a predetermined usage determination value.

In this manner, extracting data of the same time period of the same day of the week from the storage unit 55, judging that data, and setting power-saving operation makes it possible to carry out automatic power-saving operation finely customized to the lifestyle patterns of different households. In other words, effective energy conservation based on actual use can be achieved.

Note that by using a receiving unit for reference radio waves, the time can be corrected by receiving reference radio waves even in the case where the time of the clock provided in the refrigerator 20 is off due to power outages, the accuracy of the oscillator, or the like. This makes it possible to improve the accuracy of the stored data, determine lifestyle patterns more accurately, and achieve further energy conservation. According to this configuration, the time, including nighttime, the season, and so on can be ascertained with high accuracy by accurately ascertaining the present time automatically. Through this, for example, the operation of current-consuming components of the refrigerator can be suppressed or stopped in accordance with the season, thus making it possible to realize energy conservation without placing a burden on the user.

Meanwhile, in the present embodiment, a door opened and closed state detection unit for the refrigerator, an interior temperature detection unit that detects the temperature of the respective storage compartments, a set temperature detection unit that detects a set temperature, or the like is used as the second detection unit capable of detecting fluctuations in the internal environment of the refrigerator 20. However, the second detection unit is not limited thereto, and, for example, a temperature sensor within the cooling unit provided communicating with all of the storage compartments, a frost sensor, attached directly to the cooling unit, that detects a defrosting state, and so on may be used as the second detection unit, as a unit for storage compartments not provided with a door opened and closed state detection unit and storage compartments not provided with a interior temperature detection unit that indirectly detects a change in the internal environment through defrosting control. Detecting a change in the internal environment of a storage compartment that makes ice by detecting the presence/absence of the supply of water from an ice-making tank when commencing automatic ice-making is also possible.

### (Second Embodiment)

The present embodiment provides detailed descriptions only of portions whose configuration and technical spirit differ from those described in detail in the first embodiment. Portions aside from those that are identical to those in the configuration described in detail in the first embodiment or those that would cause problems when the same technical spirit is applied are assumed to be capable of being applied in combination with the present embodiment, and thus detailed descriptions thereof will be omitted.

FIG. 11 is a control block diagram according to a second embodiment of the present invention, and FIG. 12 is a control flowchart according to the second embodiment of the present invention.

Operations and effects of a refrigerator 20 provided with the control blocks illustrated in FIG. 11 will be described hereinafter.

Like the first embodiment, the present embodiment proposes a refrigerator 20 in which energy conservation is achieved using an automatic function rather than depressing a dedicated button, or in other words, automatically. However, in addition to in the disclosures of the first embodiment, the present embodiment proposes a refrigerator 20 capable of realizing energy conservation taking into consideration the intent of the user.

First, moving to power-saving operation using a first detection unit capable of detecting a change in the installation environment of the refrigerator 20 will be described as a condition for entering power-saving operation, in the same manner as disclosed in the first embodiment.

The illumination level of the periphery of the refrigerator 20 resulting from light irradiated by the sun, room lighting fixtures, or the like is detected by an illumination sensor 36, serving as the first detection unit, installed in the front surface of a refrigerator main body 21.

The illumination level detected thereby is then inputted into a control unit 54, and in the case where the inputted illumination level is lower than a predetermined specified value, the control unit 54 determines that it is nighttime or that there is no human activity, and automatically switches the refrigerator 20 to power-saving operation, in which the cooling performance is slightly reduced.

Accordingly, in the present embodiment, in the case where the refrigerator has entered power-saving operation, power-saving operation is cancelled in the case where the user has shown intent to do so.

For example, consider a case in which the refrigerator has entered power-saving operation due to the illumination level detected by the illumination sensor 36 being an illumination level that is less than a predetermined value. In this case, even if the illumination level detected by the illumination sensor 36 reaches a pre-specified level after time has passed since the refrigerator commenced power-saving operation, the control unit 54 does not cancel power-saving operation simply because the illumination level has risen.

The reasons for this will be described hereinafter. For example, in the case where the illumination level is low, it can almost always be assumed that a user is not in the vicinity of the refrigerator. In addition, in the case where the illumination level is high, it can be assumed that the illumination level has risen due to the radiation of light from the sun, room lighting fixtures, or the like. However, it cannot be judged whether the rise in the illumination level was caused by the irradiation of light from the sun or irradiation from the room lighting fixtures. To rephrase, it cannot be judged whether the illumination in the vicinity of the refrigerator 20 has risen in a state in which the user is not nearby or whether the user has intentionally raised the illumination in the vicinity of the refrigerator 20 through irradiation from the room lighting fixtures or the like.

To be more specific, even in the case where, for example, the user is not nearby the refrigerator 20, if the refrigerator 20 is installed in a space such as a kitchen or the like in which there are many windows, the illumination increases as dawn breaks and then increases beyond the specified value; however, power-saving operation is not canceled simply because the illumination level has risen.

Through this, power-saving operation can be carried out even in irregular lifestyle pattern states, such as the case where the user is active late at night when the room is in a dark state, when the user is asleep after dawn has broken and the room has become bright due to natural light, and so on. As a result, the refrigerator 20, which automatically switches between power-saving operation and normal operation, can switch between operations with certainty, and carry out highly-reliable energy conservation control.

Furthermore, an activity pattern indicating a state in which it is assumed that a user is acting intentionally is preset, and the control unit 54 cancels power-saving operation in the case where this activity pattern has been detected.

The detection of a door opening/closing as detected by a door opened and closed state detection unit of the refrigerator 20, the user decreasing the set temperature, or in other words, the user changing a setting so as to actively carry out cooling, carrying out a setting to quickly carry out cooling, such as speed freezing or speed ice-making, and so on can be thought of as such activity patterns.

In other words, in the case where it has been determined that the user is acting intentionally (opening/closing doors, performing setting operations) by receiving signals (Sn1 and Sn2) from the illumination sensor 36, interior temperature sensor 53, and so on, or the case where it has been determined that a change in the interior temperature caused by a change in settings has occurred, a determination unit 61 outputs a power-saving operation end signal (Sn3) to the control unit 54.

Then, the control unit 54 outputs signals (Sn4, Sn5, and Sn6) to respective current-consuming components, such as a compressor 28, a cooling fan 31, and a radiant heater 32, thereby causing power-saving operation to end (normal operation to start), and switches the logic to normal operation, which is the main control flow.

Meanwhile, power-saving operation may be cancelled using only information from a second detection unit, without using illumination information from the illumination sensor 36. In this case, for example, the actual energy conservation properties can be further improved, because even in the case where, for example, the room is bright in the morning due to natural light but the user is sleeping, power-saving operation is maintained as long as the interior temperature is stable.

In addition, the number of door openings/closings detected by a door SW 51, serving as the second detection unit, being greater than or equal to a specified number (for example, 1) may be employed as a condition for canceling power-saving operation. In this case, it can be predicted that the usage frequency of the user will increase thereafter. In other words, in the case where this condition is met, high-quality energy conservation control can be carried out by quickly switching to normal operation and carrying out cooling operation for reducing the interior temperature.

In addition, an operation unit serving as the second detection unit being operated, which is an example of a state in which it can be thought that the user has acted intentionally, may be employed as a condition for canceling power-saving operation. In this case, even if a dedicated sensor such as the human sensor 40 or the like is not included, an operation unit provided in the refrigerator in advance can fulfill the role of the human sensor 40, thus making it possible to switch to normal operation with certainty, using few resources and a simple configuration. This also makes it possible to prevent problems such as a lack of cooling, undercooling, and so on caused by continuing power-saving operation.

In addition to the above, a condition whereby, among operations carried out through the operation unit, at least one operation switch 37 serving as the second detection unit has been manipulated for interior temperature setting, speed-cooling operation, speed-ice operation, and so on, or in other words, an active operation, may be employed as a condition for canceling power-saving operation. In this case, it can be determined that the user is requesting the cooling performance of the refrigerator to be increased, and the refrigerator can be switched to normal operation with certainty; this makes it possible to prevent problems such as a lack of cooling, undercooling, or the like caused by continuing power-saving operation.

In addition, the interior temperature detected by an interior temperature sensor 53 serving as the second detection unit fluctuating more than a set value may be employed as a condition for canceling power-saving operation. In this case, the interior temperature is measured directly and the refrigerator is switched to normal operation smoothly, thus making it possible to suppress an increase in the interior temperature due to defrosting operations or the like to the greatest extent possible, and making it possible to store food items in a high-quality state.

Next, descriptions shall be provided using the control flowchart illustrated in FIG. 12.

In a state of operation according to the main control flow, the number of door openings/closings per unit time is detected by the door SW 51, serving as the second detection unit, in S151, and is inputted into the determination unit 61 as the signal Sn2. Furthermore, the determination unit 61 determines whether or not the number of door openings/closings is less than or equal to a specified number N, and the logic advances to S152 in the case where the number is less than or equal to N; if not, however, the logic advances to S156, normal operation is carried out, and the logic returns to the main control flow. Note that the unit time for detecting/determining a door opening/closing at this time may be, for example, ten minutes, and the number of door openings/closings may be, for example, N = 2.

Next, in S152, it is determined whether or not high-load cooling, such as speed-cooling operations including speed ice-making, speed freezing, or the like is necessary; when unnecessary, the logic advances to S153, whereas when necessary, the logic advances to S156, where normal operation is carried out and the logic then returns to the main control flow.

Furthermore, in S153, the interior temperature sensor 53, which is an example of the second detection unit, outputs the signal Sn2, indicating the detected interior temperature of the refrigerator, to the determination unit 61. The determination unit 61 then determines whether or not the temperature difference between the interior temperature and the set temperature is greater than or equal to Δt1. If the temperature difference is less than Δt1, it is assumed that the temperature fluctuation is low, and the logic advances to S154, whereas if the temperature difference is greater than or equal to Δt1, it is assumed that the temperature fluctuation is high, and the logic advances to S156, where normal operation is carried out; the logic then returns to the main control flow. Note that Δt1 for the temperature difference determined at this time may be, for example, 3°C.

Next, in S154, the illumination in the periphery of the refrigerator 20 is detected by the illumination sensor 36, and that illumination is inputted into the determination unit 61 as the signal Sn1. Furthermore, the determination unit 61 determines whether or not the illumination is less than 5 Lx, and in the case where the illumination is less than 5 Lx, which is a late-night determination value, determines that it is late at night, advances the logic to S155, and commences power-saving operation. Meanwhile, if the illumination is not less than 5 Lx, the logic is advanced to S156, where normal operation is carried out, and the logic returns to the main control flow.

Note that in the present embodiment, the late-night determination value at which it is determined to be late at night is 5 Lx. However, the late-night determination value may be set to 10 Lx, which is the minimum illumination for nighttime activity, and in such a case as well, it can be determined that the state is one that is close to late at night, where users are for the most part inactive.

According to the refrigerator 20 of the present embodiment, even in such a case where the late-night determination value includes slightly higher illuminations, whether or not the user has acted intentionally is detected based on whether a door has been opened and closed after commencing power-saving operation or whether the operation unit has been manipulated, and the determination unit 61 determines, with precision, to switch between power-saving operation and normal operation. For this reason, even in the case where power-saving operation has been entered using a slightly loose condition for the late-night determination, it is possible to prevent a lack of cooling or undercooling, and carry out power-saving operation without problems.

In this manner, by detecting whether or not the user has acted intentionally even after power-saving operation has been commenced, the determination unit 61 can determine, with precision, whether or not power-saving operation is possible. As a result, the refrigerator 20 that automatically and accurately carries out power-saving operation in a typical household, which is an actual usage environment of the refrigerator 20, can be realized.

Next, in S157, the number of door openings/closings per unit time is detected by the door SW 51, serving as the second detection unit, and is inputted into the determination unit 61 as the signal Sn2. Furthermore, the determination unit 61 determines whether or not there has been even a single door opening/closing; if a door has not been opened or closed, the logic advances to S158, whereas if a door has been opened and closed, the logic advances to S161. Note that the unit time for detecting/determining a door opening/closing at this time may be, for example, ten minutes.

Furthermore, in S158, the signal Sn2, for when the user has manipulated the operation switch 37, which is an example of the second detection unit, so as to actively carry out cooling (that is, made settings for changing the set temperature for the interior temperature setting of the respective compartments, made settings for speed ice-making, speed cooling, or the like), is outputted to the determination unit 61. The determination unit 61 determines whether or not an operation has been made by analyzing the signal Sn2, and if an operation has been made, advances the logic to S159, whereas if an operation has not been made, advances the logic to S161.

Furthermore, in S159, the interior temperature sensor 53, which is an example of the second detection unit, outputs the signal Sn2, indicating the detected interior temperature of the refrigerator, to the determination unit 61. The determination unit 61 determines whether or not the temperature difference between the interior temperature and the set temperature is greater than or equal to Δt2; if the temperature difference is less than Δt2, it is assumed that the temperature fluctuation is low, and the logic advances to S160, whereas if the temperature difference is greater than or equal to Δt2, it is assumed that the temperature fluctuation is great, and the logic advances to S161. Note that Δt2 for the temperature difference determined at this time may be, for example, 3°C. Meanwhile, the present embodiment assumes that the determination as to whether or not the temperature difference is greater than or equal to Δt2 is made instantaneously. However, the logic can be advanced in a more certain manner by using whether a state in which the temperature difference is greater than or equal to or less than Δt2 has continued for a set period of continuous time (for example, five minutes) as the condition for whether to continue (S160) or terminate (S161) power-saving operation.

Next, in S160, the determination unit 61 determines that there is no change in the usage state of the refrigerator 20, and outputs, to the control unit 54, the signal Sn3 for maintaining power-saving operation. The control unit 54 then outputs the signals Sn4, Sn5, and Sn6 to the respective current-consuming components, or the compressor 28, the cooling fan 31, and the radiant heater 32, thereby maintaining power-saving operation, and the logic returns to the main control flow.

Meanwhile, in the case where, in S161, the determination unit 61 has determined that there has been a change in the usage state of the refrigerator, or in other words, in the case where it has been determined that the user has acted intentionally (opening/closing a door, setting operations) or the case where a change in the interior temperature caused by a change in settings has occurred, the signal Sn3, indicating power-saving operation termination, is outputted to the control unit 54. Then, the control unit 54 outputs the signals Sn4, Sn5, and Sn6 to respective current-consuming components, or the compressor 28, the cooling fan 31, and the radiant heater 32, thereby causing power-saving operation to end (normal operation to start), and switches the logic to normal operation, which is the main control flow.

As described thus far, in the second embodiment, the control unit 54 performs control so as to return from power-saving operation to normal operation based only on signals from the second detection unit, and therefore, in the case where, for example, the user has acted intentionally even when the periphery is in a dark state, cooling can be carried out quickly and actively by switching to normal operation. Furthermore, even in the case where, conversely, dawn has broken and the periphery has become bright, the refrigerator does not return to normal operation based thereupon; therefore, in the case where the user is still asleep after dawn has broken, is out of the house, or the like, and is not using the refrigerator 20, power-saving operation can be maintained, which makes it possible to realize further energy conservation.

### (Third Embodiment)

The third embodiment provides detailed descriptions only of portions whose configuration and technical spirit differ from those described in detail in the first and second embodiments. Portions whose configurations are the same as those described in detail in the first and second embodiments, or portions in which the same technical spirit can be applied, are assumed to be capable of being applied in combination with the present embodiment, and therefore detailed descriptions thereof will be omitted.

FIG. 13 is a control flowchart according to the third embodiment of the present invention. FIG. 14A and FIG. 14B are diagrams respectively indicating multiple examples of defrosting cycles according to the third embodiment.

Operations and effects of a refrigerator 20 according to the third embodiment will be described hereinafter.

Note that the basic apparatus configuration of the refrigerator 20 according to the third embodiment is the same as the refrigerator 20 according to the first embodiment, and is as follows.

A cooling compartment 29 that produces cool air is provided in the back surface of a freezer compartment 25, and is divided into air flow paths. Air flow paths for transporting cool air and leading to the respective insulated compartments and back surface partition walls configured to insulatively separate the respective storage compartments are configured between the cooling compartment 29 and the other storage compartments. A cooling unit 30 is disposed within the cooling compartment 29, and a cooling fan 31 that blows cool air cooled by the cooling unit to a refrigerating compartment 22, switchable compartment 24, ice compartment 23, vegetable compartment 26, and freezer compartment 25 using the forced-convection method is disposed in the space above the cooling unit 30.

Generally speaking, water vapor that intrudes into the compartments due to opening/closing the doors of the storage compartments, loading food items, and so on condenses on the cooling unit 30; therefore, every set period of time, a voltage is applied to a glass-tube radiant heater 32 in order to defrost frost, ice, and so on that has adhered to the cooling unit 30 and the periphery thereof, and the cooling unit 30 is defrosted by heating in such a manner.

After defrosting has ended, operations for cooling the storage compartment temperatures to a set temperature are carried out, but in general, immediately after defrosting has ended, the interior temperature temporarily rises due to the compressor 28 stopping and the thermal influence of the heater.

In the present invention, by providing a storage unit 55, in which output signals from a first detection unit and a second detection unit are stored, defrost cycles customized to the usage states of individual households are set. Accordingly, the quality of the storage compartments is stabilized and power-saving is realized by reducing the number of times the defrosting heater (radiant heater 32) operates.

To be more specific, the number of door openings/closings per unit time in a set period of time (for example, the past three weeks) is segmented into time units and accumulated in the storage unit 55. Furthermore, the control unit 54 predicts a lifestyle pattern of that household based on the accumulated information. Through this, times in which the inhabitants of that household are predicted to be active, asleep, or away from home are determined, and the defrosting is carried out at a time in which it is assumed that temperature fluctuations will be at a minimum.

Then, when deciding on a defrosting period to be set once again after the defrosting has ended, if an out-of-the-house period is present within a set period of time, that out-of-the-house period is greater than or equal to a predetermined period of time, and the storage compartment temperatures can be maintained appropriately, the defrosting is carried out during that out-of-the-house period. By introducing this control, carrying out defrosting immediately after a door has been opened or closed and causing the interior temperature to rise more than necessary can be prevented while simultaneously reducing the number of times defrosting is carried out.

Next, the defrosting operations performed by the refrigerator 20 according to the third embodiment will be described using the control flowchart illustrated in FIG. 13.

In the main control flow in S171, the control unit 54 emits a defrosting signal, and based on that signal, in S172, a voltage is applied to the radiant heater 32, thereby starting the defrosting.

Next, when a means for detecting the state of defrosting configured in a location on the cooling unit 30, such as, for example, a defrosting temperature detection unit attached to the cooling unit 30, an accumulator, or the like, has detected a defrosting end temperature, the defrosting is terminated in S173. After this, a next defrosting time tα is determined in S174.

At this time, the control unit 54 obtains door opening/closing number data stored in the storage unit 55 (S175), and in S176, determines whether an out-of-the-house period exists between the next defrosting time to and a maximum extension time tβ that has been determined in advance.

In S177, in the case where an out-of-the-house period does not exist within this set period of time (Y in S177), the next defrosting time is set to to later (S178), as described initially.

In S177, in the case where an out-of-the-house period exists during this set period of time (N in S177), the logic moves to S179, where the next defrosting cycle (the timing at which to commence defrosting) is computed.

An outline of the method for the determination performed in S177 shall be described using FIG. 14A and FIG. 14B.

When the defrosting end is taken as t0, the next defrosting time is taken as to and the maximum extension time is taken as tβ. When an out-of-the-house period exists, the defrosting cycle is reset to be between to and tβ.

In the case of a pattern A, an out-of-the-house period exists between to and tβ. Accordingly, the defrosting start is extended to a set period of time previous after the end of the out-of-the-house period (a timing at which to commence the defrosting where, in the case where cooling has been commenced after defrosting has ended, it is thought that the storage compartments will have been cooled sufficiently at the point in time when that out-of-the-house period ends; for example, two hours prior to the end of the out-of-the-house period).

In the case of patterns B and C, however, an out-of-the-house period does not exist between to and tβ. Therefore, in this case, tB = tC = to. In particular, in the case of the pattern C, defrosting is commenced at to, and when the next defrosting cycle is subsequently computed again after the defrosting has ended, the pattern follows the same pattern as in pattern A, thus leading to the possibility of the defrosting cycle being extended.

In the case of pattern D, an out-of-the-house period exists between to and tβ, but the out-of-the-house period does not continue for greater than or equal to a predetermined period set in advance, and thus the defrosting cycle remains at the original to.

In the case of a pattern E, a group of two out-of-the-house periods exists between to and tβ. At this time, the E2 group, whereby the defrosting cycle is longer, is employed, and defrosting commences at tE.

In the case of a pattern F, an out-of-the-house period exists between to and tβ, and continues beyond tβ, but because the maximum defrosting extension time is set at tβ, the defrosting cycle is taken as tβ.

In the case of a pattern G, an out-of-the-house period exists between tα and tβ but extends past to, and thus an out-of-the-house period greater than or equal to a predetermined period does not exist. In this case, defrosting is originally commenced at the set time to.

As opposed to the pattern G, in the case of a pattern H, an out-of-the-house period exists between to and tβ, but the out-of-the-house period exists for greater than or equal to the predetermined period even after extending past to. Accordingly, the defrosting cycle is extended not to the originally-set to, but to tH instead.

In this manner, the defrosting cycle found through the computation for the next defrosting cycle performed in S179 (that is, the stated tA or the like) is re-set as a defrosting cycle tγ in S180. The refrigerator 20 according to the third embodiment reduces the number of defrosts and executes power-saving in this manner.

As described thus far, in the present embodiment, a certain pattern of power-saving operation is determined by accumulating information, for a set period of time, in the storage unit 55 that stores signals outputted from the first detection unit and the second detection unit. However, in order to more accurately ascertain the lifestyle pattern of the user, this information may, for example, be segmented according to days of the week on a week-by-week basis by the storage unit. This makes it possible to more accurately ascertain lifestyle patterns in the user's household, and thus makes it possible to carry out defrosting at an appropriate timing.

This day-of-the-week management makes it possible to predict patterns corresponding to various arbitrary days by judging data that repeats every seven days, rather than judging what specific day of the week it is.

For example, when confirming past records of data in a relevant unit of time, the control unit 54 confirms data in the same time period in previous days that are multiples of seven, such as seven days previous, 14 days previous, 21 days previous, and so on from a certain point in time, based on the fact that there are 24 hours in one day. Furthermore, in the case where the result of the confirmation indicates that more than a set number of door openings/closings have not occurred in that time period, management can be performed so that the refrigerator automatically enters power-saving operation at that time period.

In this manner, by extracting data of the same time period of the same day of the week from the storage unit 55, judging that data, and setting power-saving operation, automatic power-saving operation finely customized in accordance with the lifestyle patterns of different households can be carried out. In other words, effective energy conservation based on actual use can be achieved.

Note that by using a receiving unit for reference radio wave, the time can be corrected by receiving reference radio waves even in the case where the time of the clock provided in the refrigerator 20 is off due to power outages, the accuracy of the oscillator, or the like. This makes it possible to improve the accuracy of the stored data, determine the lifestyle patterns more accurately, and achieve further energy conservation.

### (Fourth Embodiment)

First, multiple refrigerator inventions related to a fourth embodiment will be described.

A first invention is a refrigerator including: a refrigerator main body; an illumination sensor that detects illumination in the periphery of the refrigerator; a consumed power suppression unit that suppresses the amount of power consumed based on a state detected by the illumination sensor; a first detection unit that operates for a predetermined time after the consumed power suppression unit has become active; and a second detection unit that operates after the predetermined time has passed.

According to this configuration, when the consumed power suppression unit becomes active and power-saving operation is commenced, the user is notified through light emitted by the first notification unit, and furthermore, after the predetermined time has passed, the amount of consumed power is suppressed by the second notification unit reducing the intensity of the emitted light. For this reason, the user can confirm that the refrigerator is in power-saving operation, and the amount of power required to be consumed for the notification can be suppressed as well.

A second invention is a refrigerator including a logo mark that indicates that the consumed power suppression unit is provided in the refrigerator; the logo mark is disposed in the vicinity of a notification unit.

According to this configuration, when the user looks at the logo mark or the notification LED, both the logo mark and the notification LED enter into the user's field of vision. For this reason, the user can experience a more sensory awareness of power-saving operation.

A third invention is a refrigerator including a logo mark that indicates that the consumed power suppression unit is provided in the refrigerator; the logo mark is disposed between the illumination sensor and the notification unit.

According to this configuration, this logo mark, the illumination sensor, and the notification unit are in a positional relationship in which they are adjacent to each other. For this reason, both the illumination sensor and the notification unit enter the user's field of vision simply by the user glancing at the logo mark, and thus the user can experience a more sensory understanding of the relationship to a suppression in consumed power.

A fourth invention is a refrigerator in which the peak sensitivity wavelength of the illumination sensor and the peak light-emission wavelength of the notification unit are different wavelengths.

According to this configuration, the intensity of the light emitted from the notification unit does not interfere with the illumination sensor, and thus only the illumination in the atmosphere of the refrigerator is detected.

A fifth invention is a refrigerator including a light-blocking wall that blocks light between the illumination sensor and the notification unit.

According to this configuration, the illumination sensor is prevented from detecting the light emitted from the notification unit, and thus it is possible for the illumination sensor to further accurately detect only illumination in the atmosphere of the refrigerator.

The fourth embodiment of the present invention will be described hereinafter with reference to the drawings. Configurations identical to those in the conventional examples or the embodiments mentioned above are assigned the same reference numerals, and detailed descriptions thereof shall be omitted. Note that the present invention is not limited by this embodiment.

FIG. 15 is a front view of a refrigerator according to the fourth embodiment of the present invention. FIG. 16 is a configuration diagram of a display unit in the refrigerator according to the fourth embodiment. FIG. 16 is a detailed cross-sectional view of the display unit of the refrigerator according to the fourth embodiment of the present invention (a cross-sectional view along the A-A line in FIG. 16). FIG. 18 is a spectrum chart of an illumination sensor and a notification LED of the refrigerator according to the fourth embodiment of the present invention.

FIG. 19 is a diagram illustrating a first control example of the notification LED of the refrigerator according to the fourth embodiment of the present invention. FIG. 20 is a diagram illustrating a second control example of the notification LED of the refrigerator according to the fourth embodiment of the present invention.

As shown in FIG. 15, a refrigerator 20 according to the fourth embodiment includes a refrigerator main body 21. The refrigerator main body 21 has a refrigerating compartment 22, an ice compartment 23, a switchable compartment 24, a freezer compartment 25, and a vegetable compartment 26 laid out in that order from the top down. A display unit 78 that performs displays for communicating information such as temperature settings and so on to the user is disposed in the vicinity of the center of a refrigerating compartment door 22a of the refrigerating compartment 22. As shown in FIG. 16, the display unit 78 includes a display unit cover 77 and a panel 79 housed within the display unit cover 77. Note that the layout of the storage compartments is exemplary, and the storage compartments are not limited to this layout.

A notification LED 83, which is a notification unit that communicates the operation mode, or in other words, that the refrigerator is in power-saving operation; an illumination sensor 80; multiple LEDs for illuminating an operational display unit 82 that displays states set by the user; and multiple operation switches 82a for adjusting the set temperature, switching the operation mode, and so on, are disposed in the panel 79 of the display unit 78 from the top down in that order, along a line extending vertically from the center of the display unit 78. In other words, various elements such as the notification LED 83 are disposed upon the single panel 79.

Meanwhile, a control unit 54 (not shown in FIG. 15 to FIG. 20) that causes the refrigerator 20 to carry out power-saving operation in accordance with output signals from the illumination sensor 80 functions as a consumed power suppression unit for the refrigerator 20.

The illumination sensor 80 can specifically be configured by using a light sensor including a light-receiving element 84, such as a photodiode or phototransistor, therein.

Furthermore, in present embodiment, the notification LED 83 serving as the notification unit fulfils the dual purpose of a first notification unit, which performs a notification with preference to the awareness level of the user during a predetermined period after the refrigerator has entered power-saving operation, and a second notification unit, which performs a notification with preference to consumed power suppression after the stated predetermined period has passed. Specifically, although the notification LED 83 realizes both the first notification unit and the second notification unit by changing the intensity of its light, the two units may be provided individually.

In addition, a logo mark 81 indicating that the refrigerator is a refrigerator provided with power-saving functionality is provided upon the display unit cover 77; for example, text reading "ECO", a graphic that inspires thoughts of environmentalism, or the like is used for this logo mark 81. This allows users to be aware of environmental activities, of which awarenesses have been rising in recent years. It is desirable for this logo mark 81 to be disposed in the vicinity of the notification LED 83.

Through this, when the user looks at the logo mark 81 or the notification LED 83, both the logo mark 81 and the notification LED 83 are within the user's field of vision, and thus the user can experience a more sensory awareness of power-saving operation.

Furthermore, it is preferable for the logo mark 81 to be disposed in the vicinity of both the notification LED 83 and the illumination sensor 80, whereby it is easy for the user to confirm that the refrigerator is in power-saving operation. Accordingly, the logo mark 81, the illumination sensor 80, and the notification LED are in a positional relationship in which they are adjacent to each other. For this reason, both the illumination sensor 80 and the notification LED 83 enter the user's field of vision simply by the user glancing at the logo mark 81, and thus the user can experience a more sensory understanding that the illumination sensor 80 and the like are related to a suppression in consumed power.

In the present embodiment, it should be noted that the first notification unit and the second notification unit are realized using the same notification LED 83. However, in the case where the first notification unit and the second notification unit are notification units configured from individual members, disposing at least one of the notification units in the vicinity of the logo mark 81 makes it possible to achieve the same effects as those described above.

In the present embodiment, the logo mark 81 is disposed between the notification LED 83 and the illumination sensor 80 for the reasons described above. With this logo mark 81 alone, it is possible to indicate that the notification LED 83 disposed above the logo mark 81 is an LED for communicating that the refrigerator is in power-saving operation, and possible to indicate that the illumination sensor 80 disposed below the logo mark 81 is a sensor related to power-saving operation. Note that the logo mark 81 may be positioned anywhere in the vicinity of the notification LED 83 and the illumination sensor 80, and the disposition thereof is not limited to the order indicated in the present embodiment.

Next, as shown in FIG. 17, the panel 79 is anchored using multiple panel cover claw portions 89a provided in the panel cover 89, and furthermore, the panel cover 89 is held snugly against the display unit cover 77. Multiple side wall portions 89b of the panel cover 89 surround the areas above the notification LED 83, the illumination sensor 80, and the operational display unit 82 as far as the display unit cover 77, so as to regulate those areas above. In other words, the configuration is such that disturbance light does not enter into the emitted light, received light, or the like. Furthermore, the side wall portions 89b fulfill a role of preventing the illumination sensor 80 from detecting the illumination of light emitted from the notification LED 83.

Meanwhile, a notification light cover 86 is provided in the display unit cover 77 in the area where the notification LED 83 emits light. This notification light cover 86 is devised so as to communicate to the user, using a small amount of power, that the refrigerator is in power-saving operation, in the case where the fact that the refrigerator is in power-saving operation is to be communicated to the user using a small amount of power, which is one of the goals of the present invention.

To be more specific, in the case where a light source having a smaller surface area than the notification light cover 86 is provided, or in the case where a weak amount of light is irradiated, the notification light cover 86 is formed not of a highly-transparent material, but is rather formed of a frosted glass-type resin having a satin finish, a cloudy finish, or a nonlinear finish, so that light is diffused across the entirety of the notification light cover 86. The notification light cover 86 diffuses even weak light by using a resin having a low level of transmissibility, as described here; therefore, the consumer can be notified of power-saving operation using a light amount that is not too bright. Accordingly, the user can experience a more sensory confirmation that the refrigerator is in power-saving operation, and the amount of power required to be consumed for the notification can be suppressed as well.

In addition, a light-receiving unit cover 87 is provided in the display unit cover 77 in the area where the illumination sensor 80, serving as an illumination detection unit, receives light. Furthermore, a display cover transparent unit is provided in the display unit cover 77 in the area where the operational display unit 82 emits light.

In addition, an antireflective portion 85 that absorbs visible light is disposed in the surface of the panel 79 surrounding a portion in which the illumination sensor 80 is installed.

Furthermore, as shown in FIG. 18, at least one of the illumination sensor 80 and the notification LED 83 is adjusted so that the wavelength at which the illumination sensor 80 obtains a peak sensitivity and the wavelength at which the notification LED 83 obtains a peak light emission brightness do not match. Through this, the illumination sensor 80 can be suppressed from detecting the light emitted from the notification LED 83.

In the present embodiment, assuming that the peak sensitivity of the illumination sensor 80 is approximately 580 nm, for fluorescent lights provided in a kitchen serving as the installation environment of the refrigerator, the notification LED 83 is adjusted so as to have a peak brightness that is at least 50 nm higher or lower than the peak sensitivity of the illumination sensor 80.

Normally, it is desirable to set a peak difference of no less than 100 nm, and set the point at which the relative sensitivity of the illumination sensor 80 and the relative brightness of the notification LED 83 intersect, as shown in FIG. 18, to be at 0.5 or less. However, in the present embodiment, because the notification LED 83 is prevented from interfering with the illumination sensor 80 by the side wall surfaces 89b, as described above, the illumination sensor 80 can be prevented from receiving light from the notification LED 83 and responding thereto by using a peak brightness separated by 50 nm or more.

To be more specific, the peak brightness of the notification LED 83 is set to a 500 nm green wavelength separated from the peak sensitivity of the illumination sensor 80 by 80 nm.

Note that this peak difference can be further reduced by sufficiently securing light-blocking properties for the side wall surfaces 89b, making it possible to freely select the color tone of the notification LED 83.

The operation and effects of the refrigerator thus configured will be described below.

First, when light from the sun, room lighting fixtures, or the like is irradiated onto the display unit cover 77 attached to the front surface of the refrigerator main body 21, visible light that has passed through the light-receiving unit cover 87 is received by the illumination sensor 80. In the external periphery of the illumination sensor 80, the side wall surfaces 89b extends toward the panel 79 beyond the position of the light-receiving element 84 within the illumination sensor 80. Through this, the side wall surfaces 89b prevent visible light from entering from areas aside from the light-receiving unit cover 87.

Furthermore, because the display unit cover 77 is configured of the material having an extremely low transmissibility with respect to visible light, light is prevented from entering from the periphery of the light-receiving unit cover 87. A half-mirror configuration, a smoke-effect material, or the like may be used as the specific material for the display unit cover 77. Although the display unit cover 77 and the light-receiving unit cover 87 are configured from individual components in FIG. 17, the transmissibility of part of the display unit cover 77 may be increased and that portion used as a light-receiving surface.

Furthermore, because the anti-reflective portion 85 is provided in the vicinity of a portion in which the illumination sensor 80 is installed in the panel 79, irregular reflections in the light-receiving area, light entering through a gap between the side wall surfaces 89b and the panel 79, and so on is absorbed. The antireflective portion 85 can easily be configured by silk-screen printing using black ink, which absorbs visible light wavelengths.

The illumination level detected in this manner is inputted into the control unit 54 of the refrigerator main body 21, and if this level is lower than a predetermined specified value, it is determined to be nighttime, or determined that there is no human activity, and the refrigerator is switched to power-saving mode in which the cooling operation performance is slightly reduced.

At this time, the notification LED 83 is lit or extinguished, thereby communicating the power-saving operation status to the user through the notification light cover 86. Although the notification by the notification LED 83 is carried out automatically, the specification may be such that the user is notified only when he/she desires to confirm that status, by manipulating a switch or the like.

Because it is often the case that it is nighttime and the user is asleep when power-saving operation is carried out, it is preferable for the notification LED 83 to emit the minimum amount of light, dim the light using the notification light cover 86, and so on. A specific notification sequence will be described hereinafter using FIG. 19 and FIG. 20.

As shown in FIG. 19(a), a control signal is fixed at a High state immediately after switching to power-saving operation (T1), and the notification LED 83, serving as the first notification unit, is lit at a normal brightness. Accordingly, it is easy for the user to confirm that the refrigerator has switched to power-saving operation. After this, when a predetermined amount of time has passed (T2), the notification LED 83, serving as the second notification unit, is pulse-controlled, thereby suppressing the brightness of the emitted light.

In the present embodiment, at this time, the brightness is suppressed to 1/3 of the brightness when the notification LED 83, serving as the first notification unit, is lit at the normal brightness, and the time from the time T1 to the time T2 is, for example, five minutes.

Through this, the user can be made aware that the refrigerator is in power-saving operation, and it is also possible to suppress the amount of power consumed by the notification LED 83. The progress of the light-emission brightness of the notification LED 83 at this time is as indicated in FIG. 19(b).

Alternatively, as shown in FIG. 20(a), the pulse width of the control signal of the notification LED 83 after T2 has passed is caused to fluctuate, and the light-emission brightness progresses as a sinusoid, as shown in FIG. 20(b). Such a darkening operation, or in other words, a notification using an extinguished light, makes it possible to suppress the amount of power consumed by the notification LED 83, as well as emphasize the impression of energy conservation for the user. For this reason, in the case where the notification LED 83 is used as the second notification unit, it is possible to further reduce the amount of power consumed.

In this manner, the first notification unit and the second notification unit are realized by controlling the notification LED 83 in different manners.

Note that the light-emission control of the notification LED 83 after T2 has passed is not limited to that described above, and any pattern that allows the consumed power to be suppressed may be used. Furthermore, the light-emission brightness may be set freely by changing the duty of the pulse.

In addition, the light-emission patterns are not limited to two types, and any number of types necessary to increase the level of understanding on the part of the user may be provided.

In addition, in the case where, for example, an element such as a human sensor is provided, the notification LED 83 may provide a notification as the first notification unit only when the user is in the periphery of the refrigerator main body 21, and may then be extinguished, as the second notification unit, when it has been determined that the user has moved away from the refrigerator main body 21.

Meanwhile, in the case where a human sensor is not used, after, for example, a set amount of time has passed since the user last manipulated an operation switch provided in the operational display unit 82, or after a set amount of time has passed since a door was opened and closed, it is determined that the user is not in the vicinity of the refrigerator main body 21, and control may be carried out so that the notification LED 83 functions as the first notification unit and is extinguished or is dimmed more than the first notification unit.

As described thus far, in the present embodiment, power-saving operation is commenced based on the state of a detection made by the illumination sensor 80, which detects the illumination in the periphery of the refrigerator main body 21. Furthermore, the notification LED 83 functions as the first notification unit for a predetermined period after the refrigerator has entered power-saving operation, performing a notification with preference to the level of awareness of the user, and functions as the second notification unit after that predetermined period has passed, performing a notification at a lower light amount than that of the first notification unit so as to give preference to the suppression of consumed power. Through this, the user can confirm that the refrigerator is in power-saving operation, and the refrigerator main body 21 can suppress the amount of consumed power necessary for the notification; this makes it possible to impart a further sense of satisfaction through power-saving operation, for users who recently are highly-conscious of energy conservation.

In addition, the logo mark 81, which displays the fact that the refrigerator 20 is provided with power-saving functionality, is disposed between the illumination sensor 80 and the notification LED 83. Accordingly, this logo mark 81, the illumination sensor 80, and the notification LED are in a positional relationship in which they are adjacent to each other. For this reason, the fact that both the illumination sensor 80 and the notification LED 83 are related to the power-saving functionality can be visually grasped by the user based simply on the logo mark 81. Furthermore, the logo mark 81 can inform users that, because the illumination sensor 80 is an important component in terms of power saving, the light-receiving unit must not be covered by fliers or the like.

In addition, the peak sensitivity wavelength of the illumination sensor 80 and the peak brightness wavelength of the notification LED 83 are different wavelengths. For example, the peak sensitivity wavelength of the illumination sensor 80 is taken as approximately 580 nm, assuming fluorescent lights provided in a kitchen, and a green-color wavelength of 500 nm, which is no less than 50 nm from the peak sensitivity wavelength, is taken as the peak brightness wavelength. Through this, the illumination sensor 80 can be prevented from receiving light from the notification LED 83 and reacting thereto. As a result, power-saving operation can be realized based on more highly-accurate illumination detection.

Because the illumination sensor 80 detects only the illumination in the atmosphere surrounding the refrigerator 20 without interference from the brightness of the light emitted from the notification LED 83, the accuracy of illumination detection in the vicinity of the threshold for starting power-saving operation in particular is improved, and it is thus possible to prevent erroneous power-saving operation.

Furthermore, in the present embodiment, the light of the notification LED 83 is of a 500 nm green-color wavelength, among wavelengths that are no less than 50 nm from the peak sensitivity wavelength of the illumination sensor 80, which is 580 nm. Through this, notifications are provided using a green color, which is associated with environmental images such as the reduction of CO₂ through the planting of forests, vegetation, and so on; this makes it possible to increase the sensory awareness of the user with respect to power-saving operation.

Note that causing the notification LED 83 to emit light of a 500 nm green-color wavelength in this manner achieves the following effects. A green-color wavelength appears darker to humans than, for example, high wavelengths such as red, orange, or the like, when the light is emitted at the same intensity. For this reason, in the case of using a green-color wavelength, there is a problem in that unless the light is emitted at a higher intensity than lights such as red, orange, or the like, the light does not appear bright, leading to an increase in the amount of energy consumed. However, in the present embodiment, in the case where the second notification unit is used, the illumination is suppressed to 1/3 the illumination when lighting the LED at the normal level of illumination, thus making it possible to achieve a significant reduction in the power consumed. Through this, it is possible to realize a notification unit while conserving energy, and while also maintaining the effect of promoting power-saving operation to the user by using the green color to elicit associations with environmentalism.

In addition, because the side wall surfaces 89b that block light are provided between the illumination sensor 80 and the notification LED 83, the illumination sensor 80 can be prevented from detecting illumination caused by light emitted from the notification LED 83, and thus the illumination sensor 80 detects only illumination from the atmosphere in which the refrigerator is located. For this reason, it is possible to reduce the difference between the peak sensitivity wavelength of the illumination sensor 80 and the peak light-emission wavelength of the notification LED 83 to a certain extent, thus making it possible to set the color tone of the notification LED 83 freely.

In addition, in the case where the user has manipulated the operation switches 82a in the display unit 78, and the multiple LEDs that light up the operational display unit 82 are constantly lit, it is similarly preferable for those LEDs to be shifted no less than 50 nm from the peak sensitivity wavelength of the illumination sensor 80. However, because the frequency with which the user operates the refrigerator is only an extremely short amount of time within a 24-hour period, in the case where the LEDs that light up the operational display unit 82 are not constantly lit and only light up when the user has performed an operation, the wavelength is not particularly limited, and can be set freely.

### (Fifth Embodiment)

A refrigerator 20 whose characteristic is in a compressor 28 will be described as a fifth embodiment.

Note that the refrigerators 20 of the sixth through eighth embodiments described later also respectively have characteristics in a compressor 28.

First, multiple refrigerator inventions related to the fifth through eighth embodiments will be described.

A first invention is a refrigerator including multiple storage compartments provided within an insulating main body, a refrigeration cycle provided with a compressor, a condenser, a decompressor, and an evaporator in that order, forming a continuous refrigerant flow channel, and a control unit that controls the operation of the refrigeration cycle. The compressor is an inverter electric motor that is driven at multiple rotational frequencies including a rotational frequency that is lower than the rotational frequency of a commercial power source; the control unit sets the refrigerator to an energy conservation mode in which the electric element operates at a rotational frequency that is lower than the rotational frequency of a commercial power source in the case where illumination detected by the illumination sensor is less than a pre-set specified value, and sets the refrigerator to a normal cooling mode in which the electric element operates at a lower rotational frequency that the rotational frequency of the commercial power source during normal cooling as well in the case where the outside temperature is in the vicinity of 25°C and a door is not opened and closed, and controls the refrigerator to enter a high-load cooling mode in which the electric element operates at a rotational frequency that is greater than or equal to the rotational frequency of the commercial power source only in the case of a high-load cooling mode in which a high load is placed on the refrigerator due to door openings/closing, the intrusion of warm air, or the like.

According to this configuration, the compressor operates at a rotational frequency that is lower than the rotational frequency of a commercial power source during both an energy conservation mode, which is power-saving operation, and during normal operation, thereby realizing further power saving, and control is carried out so that the refrigerator operates in a high-load cooling mode, where the electric element is operated at a rotational frequency greater than or equal to the rotational frequency of a commercial power source, only in the case where a high load has been placed thereupon. In this manner, the compressor is operated at low rotations focusing on times of normal cooling and the energy conservation mode, which make up more than 80% of the yearly usage time of the refrigerator, thus making it possible to achieve significant power saving with the actual refrigerator, and provide a refrigerator in which better energy conservation is realized.

A second invention is a refrigerator including multiple storage compartments provided within an insulating main body, a refrigeration cycle provided with a compressor, a condenser, a decompressor, and an evaporator in that order, forming a continuous refrigerant flow channel, and a control unit that controls the operation of the refrigeration cycle. The compressor is an inverter electric motor, in which an electric element configured of a stationary part and a rotor and a compression element driven by the electric element are housed within a hermetic receptacle, the compression element being a reciprocating type provided with a compression chamber and a piston that reciprocally moves within the compression chamber, and the compressor operating at multiple rotational frequencies including a rotational frequency that is lower than the rotational frequency of a commercial power source; and the cylinder volume, which is the space in which compression operations are carried out by the piston reciprocally moving within the compression chamber, has been increased to a degree that enables the control unit to set the refrigerator to an energy conservation mode in which the electric element operates at a rotational frequency that is lower than the rotational frequency of a commercial power source in the case where illumination detected by the illumination sensor is less than a pre-set specified value, and to set the refrigerator to a normal cooling mode in which the electric element operates at a lower rotational frequency that the rotational frequency of the commercial power source during normal cooling as well in the case where the outside temperature is in the vicinity of 25°C and a door is not opened and closed.

The invention according to this configuration is one in which focus has been placed on the cylinder volume of the compressor. To be more specific, with this compressor, in addition to attempting to achieve energy conservation by using an inverter type and operating in an energy conservation mode, which is power-saving operation, a large cylinder volume is employed as well. Through this, both power-saving operation in an energy conservation mode and high-performance cooling in a high-load cooling mode can be realized.

Accordingly, by employing a cylinder volume for the compressor whereby the rotational frequency is lower than the rotational frequency of a commercial power source even during normal operation in addition to the energy conservation mode, which is power-saving operation, further power-saving can be realized; in addition, in the case where a high load has been placed on the compressor, high-load cooling can be carried out based on the comparatively large cylinder volume and by performing control so as to enter a high-load cooling mode in which the electric element operates at a rotational frequency that is greater than or equal to the rotational frequency of a commercial power source. For this reason, it is possible to return to the normal cooling mode from the high-load cooling mode quickly. In this manner, the compressor is operated at low rotations focusing on times of normal cooling and the energy conservation mode, which make up more than 80% of the yearly usage time of the refrigerator, thus making it possible to achieve significant power saving with the actual refrigerator, and provide a refrigerator in which better energy conservation is realized.

A third invention is a refrigerator in which the compressor operates at three or more types of pre-set rotational frequencies including a rotational frequency A that is lower than the rotational frequency of a commercial power source, and in the case where the illumination sensor has detected greater than or equal to a specified value while in a state in which the energy conservation mode is operating at the rotational frequency A, the compressor operates at a rotational frequency that is higher than the rotational frequency A and at which the difference with the rotational frequency A is minimum.

According to this configuration, in the case where a high level of illumination has been detected by the illumination sensor, or in other words, the case where it is detected that it is an active time for the user of the refrigerator, the load exerted when a door of the refrigerator is actually opened and closed is taken into consideration, and the rotational frequency is gradually increased in preparatory steps corresponding to that high load, thereby preventing a load that is greater than necessary and realizing energy conservation; furthermore, a high-load mode operating at a high rotational frequency can be entered quickly in the case where a high load is placed on the refrigerator as a result of the door actually opening/closing or the like. Through this, it is possible to realize energy conservation in a state in which the reliability of the compressor with respect to the high-load mode of the refrigerator is improved, and both power-saving operation in an energy conservation mode and high-performance cooling in a high-load cooling mode can be realized.

A fourth invention is a refrigerator in which the refrigerator storage compartment volume, which is the total of the multiple storage compartments, is 550 to 600 L, and the cylinder volume of the compressor is 11.5 to 12.5 cc.

According to this configuration, it is possible to realize a compressor provided with the optimal cylinder volume for actual use in a household refrigerator, and operating the compressor at low rotations focusing on times of normal cooling and the energy conservation mode, which make up more than 80% of the yearly usage time of the refrigerator, makes it possible to achieve significant power saving with the actual refrigerator. In other words, it is possible to provide a refrigerator that realizes further energy conservation.

A fifth invention is any one of the aforementioned refrigerators with a compressor provided in machine compartment that is included in the insulating main body.

Through this, it is possible to provide a compressor with which both power-saving operation in an energy conservation mode and high-performance cooling in a high-load cooling mode can be realized. In addition, by providing the compressor according to the present invention as the main device when implementing energy conservation in a refrigerator, it is possible to achieve significant power saving with the actual refrigerator, and provide a refrigerator in which better energy conservation is realized.

A sixth invention is a refrigerator with a compressor, the refrigerator including an insulating main body, a refrigeration cycle provided with the compressor, a condenser, a decompressor, and an evaporator in that order, forming a continuous refrigerant flow channel, disposed in the insulating main body, and a control unit that controls the operation of the refrigeration cycle. The compressor includes an inverter electric motor, in which an electric element configured of a stationary part and a rotor and a compression element driven by the electric element are housed within a hermetic receptacle, the compression element being a reciprocating type provided with a compression chamber and a piston that reciprocally moves within the compression chamber, and the electric element operating at multiple rotational frequencies including a rotational frequency that is lower than the rotational frequency of a commercial power source; and the control unit performs control so as to realize both power-saving operation in which the electric element operates at a lower rotational frequency than the rotational frequency of the commercial power source and high-load cooling operation in which the electric element operates at a rotational frequency greater than or equal to the rotational frequency of the commercial power source, and, when forming a cylinder volume in which compression operations are performed by the piston reciprocally moving within the compression chamber, the diameter of the piston is greater than the stroke, the stroke being the distance across which the piston reciprocally moves during compression operations.

With the invention according to this configuration, in the case where operation is carried out in an energy conservation mode, which is power-saving operation, having attempted to achieve energy conservation through an inverter-type compressor in order to realize energy conservation, it is possible to carry out power-saving by operating at low revolutions, which in turn is made possible by employing a large cylinder volume. Furthermore, in the case where a high-load has occurred due to door openings/closings or a rise in the interior temperature, a large cylinder volume makes it possible to comply with high loads by operating at high revolutions for a short period of time. In this manner, the invention according to the present configuration makes it possible to realize a compressor that achieves significant power saving in an actual refrigerator.

Furthermore, the invention according to this configuration focuses on the mutual relationship between the diameter of the piston that forms the cylinder volume of the compressor and the stroke thereof, in a compressor provided with a large cylinder volume as described above. To be more specific, rather than forming a large cylinder volume by lengthening the stroke, a large cylinder volume is formed by increasing the diameter of the piston. Through this, it is possible to realize a highly-reliable compressor even in the case where the compressor is operated across a wide range of rotational frequencies. As a result, both power-saving operation in an energy conservation mode and high-performance cooling in a high-load cooling mode can be realized.

In addition, it is possible to carry out high-load cooling in the case where a high load has been placed on the compressor by employing a comparatively large cylinder volume and performing control so as to enter a high-load cooling mode in which the electric element operates at a rotational frequency that is greater than or equal to the rotational frequency of a commercial power source. For this reason, it is possible to return to energy conservation mode from the high-load cooling mode quickly.

A seventh invention is a refrigerator with a compressor, in which, in the case where the refrigerator has been controlled by the control unit so as to operate in the energy conservation mode, in which the electric element operates at a rotational frequency that is lower than the rotational frequency of the commercial power source, the electric element is capable of operating at a rotational frequency that is 1/2 or less the rotational frequency of the commercial power source.

According to this configuration, operation at lower rotations is possible, thus making it possible to achieve significant power saving in an actual refrigerator, which in turn makes it possible to provide a compressor for a refrigerator that realizes further energy conservation.

An eighth invention is a refrigerator with a compressor, in which control is performed so that cooling can be carried out while operating in an energy conservation mode which the electric element operates at a lower rotational frequency that the rotational frequency of the commercial power source during normal cooling as well in the case where the outside temperature is in the vicinity of 25°C and a door is not opened and closed, and the refrigerator enters a high-load cooling mode in which the electric element operates at a rotational frequency that is greater than or equal to the rotational frequency of the commercial power source only in the case of a high-load cooling mode in which a high load is placed on the refrigerator due to door openings/closing, the intrusion of warm air, or the like.

Through this, times of normal cooling, which generally make up more than 80% of the yearly usage time of the refrigerator, can be operated in the energy conservation mode that causes the compressor to rotate at low rotations, thus making it possible to achieve significant power saving in the actual refrigerator. As a result, it is possible to provide a compressor for a refrigerator that realizes further energy conservation.

A ninth invention is a refrigerator with a compressor, in which the diameter of the piston has been increased so that a stroke A, which is the distance across which the piston makes reciprocally moves when carrying out compression operations, a length B of the piston, and a diameter C of the piston are in a relationship whereby A ≤ B ≤ C.

With the invention according to this configuration, in the case where the compressor provided with a large cylinder volume is used, attention is placed on the mutual relationship between the diameter and the stroke of the piston that forms the cylinder volume of the compressor, the diameter of the piston, and the length of the piston. To be more specific, rather than forming a large cylinder volume by lengthening the stroke, a large cylinder volume is formed by increasing the diameter of the piston, and the length of the piston is reduced; this makes it possible to reduce the load involved in the reciprocal movement. Accordingly, it is possible to realize a compressor that has high reliability even when operating across a wide range of rotational frequencies, and thus it is possible to realize both power-saving operation through an energy conservation mode and high-performance cooling in a high-load cooling mode.

A tenth invention is a refrigerator with a compressor, in which the direction in which the piston reciprocally moves during compression operations is the horizontal direction, and the diameter of the piston is greater than or equal to 19% and less than 38% of the total height of the compressor.

The invention according to this configuration focuses on increasing the diameter of the piston, in spite of the fact that in the case where the compressor is provided in a high-capacity refrigerator in which the inner capacity is increased by reducing the overall height of the compressor, normally, a simple configuration is employed whereby the stroke is lengthened to reduce the overall height of the compressor. Through this, it is possible to realize a compressor that has high reliability even in the case where operating across a wide range of rotational frequencies is assumed, and thus it is possible to realize both power-saving operation through an energy conservation mode and high-performance cooling in a high-load cooling mode.

An eleventh invention is a refrigerator with a compressor, in which the compression element includes a shaft having a main shaft portion and an eccentric portion and a crank weight provided on the shaft, and at least part of the crank weight is located below a horizontal line passing through the upper end of the piston and a horizontal line passing through the upper end of the piston in the vertical direction of the compression element.

The invention according to this configuration focuses on increasing the diameter of the piston, in spite of the fact that in the case where the compressor is provided in a high-capacity refrigerator in which the inner capacity is increased by reducing the overall height of the compressor, normally, lengthening the stroke can reduce the amount of unbalance more than reducing the size and weight of the piston, and has been devised so as to include the crank weight in an area as close as possible to the piston while suppressing the overall height of the compression element in order to reduce the amount of unbalance of the piston. As a result, it is possible to provide a highly-reliable compressor having a large cylinder volume in which partial contact, which is a phenomenon in which local pressure forces increase in sliding portions, can be suppressed by further reducing vibrations and reducing the amount of unbalance involved in the reciprocal movement of the piston.

A twelfth invention is a refrigerator with a compressor including: a mechanical portion, elastically supported within the hermetic receptacle via an elastic member, configured of a compression element and an electric element; a holding portion on the side of the hermetic receptacle that holds the elastic member; and a support portion on the side of the mechanical portion that supports the elastic member. The elastic member is freely fitted to at least one of the holding portion and the support portion.

According to this configuration, it is possible to provide a compressor for a refrigerator in which vibrations, which tend to increase as the size of the piston is increased to provide a large cylinder volume, can be further reduced, thereby making it possible to further reduce noise and vibrations.

A thirteenth invention is a refrigerator with a compressor in which a cylindrically-shaped hole portion has a straight portion in which the inner diameter dimension is constant in the axial direction, the straight portion being formed in an area corresponding to the upper end portion of the piston on the side of the compression chamber and adjacent to the tapered portion when the piston is positioned in the vicinity of an upper dead point.

According to this configuration, the slope direction of the piston inverts relative to the axial center of the cylindrically-shaped hole portion at an earlier timing, and thus occurs not partway or on through the compression process, but rather occurs in the initial stage of the compression process, in which the pressure load acting on the end surface of the piston on the side of the compression chamber is small. For this reason, the load at which the outer circumferential surface of the piston on the side that had not been sliding along the tapered portion prior to the inversion makes contact with the tapered portion can be reduced, and thus the contact can be softened when the slope direction of the piston inverts relative to the axial center of the cylindrically-shaped hole portion in the outer circumferential surface of the piston makes contact with the tapered portion. As a result, a further increase in efficiency and further noise reduction can be realized.

The fourteenth invention is a refrigerator with a compressor in which the piston is formed so that the center of gravity of the piston is positioned toward the upper side of the vertical direction or the lower side of the vertical direction relative to the axial center thereof.

According to this configuration, the weight of the piston is different at the upper and lower sides of the vertical direction, and thus it is possible to provide an allowance for movement in the vertical direction through the unbalance in the vertical direction. As a result, a stable lubrication state can be formed when the piston undergoes reciprocal drive, and thus it is possible to reduce sliding loss.

The fifth embodiment of the present invention will be described hereinafter with reference to the drawings. Configurations identical to those in the conventional examples or the embodiments mentioned above are assigned the same reference numerals, and detailed descriptions thereof shall be omitted. Note that the present invention is not limited by this embodiment.

Note also that a front view, a cross-sectional view, a configuration diagram of an operation board, and a configuration diagram of a different form of the operation board for the refrigerator 20 according to the fifth embodiment of the present invention are the same as FIGS. 1A, 1B, 2A, and 2B, respectively, as described in the first embodiment of the present invention.

In addition, the cross-sectional view of the operation board provided in the refrigerator 20 according to the fifth embodiment of the present invention is the same as that shown in FIG. 3 as described in the first embodiment of the present invention.

Accordingly, depictions and descriptions of the refrigerating compartment 22, the operation unit 27, and so on provided in the refrigerator 20 shall be omitted, and the compressor 28, which is a characteristic constituent element in the present embodiment, will primarily be described.

FIG. 21A is a cross-sectional view of the compressor 28 installed in the refrigerator 20 according to the fifth embodiment of the present invention. FIG. 21B is a diagram illustrating a result of consolidating the rotational frequency of the compressor 28 and a refrigeration performance according to the fifth embodiment on a cylinder volume-by-cylinder volume basis. FIG. 21C is a diagram illustrating a result of consolidating the rotational frequency and the mechanical loss on a cylinder volume-by-cylinder volume basis. FIG. 21D is a diagram illustrating a relationship between cooling performance and a COP (coefficient of performance), consolidated on a cylinder volume-by-cylinder volume basis. FIG. 22 is a diagram illustrating past reference data for an arbitrary day according to the fifth embodiment.

The compressor 28 provided in the refrigerator main body 21 includes a hermetic receptacle 103. An electric element 110 that includes a rotor 111 and a stationary part 112, and a compression element 113 that is driven by the electric element 110, are housed within the hermetic receptacle 103. The compression element 113 is provided with a compression chamber 134 and a piston 136 that makes reciprocal movements within the compression chamber 134. The compression element 113 is a reciprocating type, and the electric element 110 is an inverter electric motor that operates at multiple rotational frequencies, including a rotational frequency that is lower than the rotational frequency of commercial power sources.

As shown in this diagram, the hermetic receptacle 103 is formed by joining a mortar-shaped lower receptacle 101 and an inverted mortar-shaped upper receptacle 102, which are formed by performing deep-drawing molding on rolled steel plates 2 to 4 mm thick, and then welding the joints around the entire circumference. Refrigerant 104, composed of carbon hydride R600a, is contained within the hermetic receptacle 103, and ice machine oil 105, composed of a mineral oil having a high compatibility with R600a, is contained in the bottom thereof. The hermetic receptacle 103 is provided in the refrigerator 20 through an elastic member to which legs 106 are anchored, provided in the bottom portion thereof.

A terminal 115, of which part of the lower receptacle 101 is configured, communicates electricity (not shown) between the interior/exterior of the hermetic receptacle 103, and supplies electricity to the electric element 110 via a lead line.

Next, details of the compression element 113 shall be given.

A shaft 130 includes a main shaft portion 131 anchored to the rotor 111 through press-fitting or interference shrink fitting, and an eccentric portion 132 formed so as to be eccentric relative to the main shaft portion 131. A cylinder block 133 includes the compression chamber, which is approximately cylindrical in shape, and also includes a shaft receiving portion 135 that axially supports the main shaft portion 131 of the shaft 130; the cylinder block 133 is formed above the electric element 110.

A piston 136 is freely fitted into the compression chamber 134, and is linked to the eccentric portion 132 of the shaft 130 using a linking unit 137. Through this configuration, the rotational drive of the shaft 130 can be converted into reciprocal drive of the piston 136, and the piston 136 then expands and contracts the space within the compression chamber 134, thereby compressing the refrigerant 104 within the hermetic receptacle 103 and discharging the refrigerant 104 into the refrigeration cycle.

Next, details of the electric element 110 shall be given.

In the rotor 111, a main body portion in which silicon steel sheets, 0.2 mm to 0.5 mm thick, have been stacked upon each other, is anchored integrally to a permanent magnet provided in the main body portion.

The stationary part 112 is configured of a stationary part core 161 in which silicon steel sheets, from 0.2 mm to 0.5 mm thick, are stacked upon each other, and a wound line 162, which is a copper wire having an insulating covering, 0.3 mm to 1 mm thick, is provided thereupon. The stationary part core 161 has salient pole portions formed in cylindrical shapes at a predetermined interval, and is thus a salient pole concentrated winding-type in which the wound line 162 is wound upon the salient pole portions. Each wound line is connected to a single communication line.

The operation and effects of the refrigerator 20 thus configured will be described below.

Conventional refrigerators have carried out temperature control for meeting a set temperature determined regardless of whether it is day or night. However, at night, the temperature of the peripheral environment of the refrigerator drops, and thus the thermal load drops, or the thermal load arising due to food items being removed or replaced is extremely low, and thus the interior temperature of the refrigerator is set to a temperature that is slightly too cold. Meanwhile, with conventional energy-conservation units that utilize light sensors, energy conservation effects could not be achieved unless a user explicitly operates a function using a dedicated button designating "power-saving operation".

The present invention achieves energy conservation without the pressing of a dedicated button, or in other words, using an automatic function. In other words, the illumination level in the periphery of the refrigerator caused by sunlight, room lighting fixtures, and so on is detected using an illumination sensor 36 provided in the front surface of the refrigerator main body 21, and at the same time, the temperature of the various storage compartments is detected; whether cooling is being carried out below a specified temperature, and the state of past door openings/closings are inputted into a control unit 54, and if the value is lower than a predetermined specified value, it is determined that it is nighttime or that there is no human activity, and the refrigerator is automatically switched to a power-saving mode, in which the cooling performance is slightly reduced. In the case where the illumination level has increased beyond the specified value, the refrigerator is returned to normal mode. However, because detections of instant flashes of light from outside, such as automobile headlights, are to be excluded, the power-saving mode is not canceled unless a certain continuous illumination level is maintained.

Furthermore, past illuminations, door openings/closings, and interior temperatures are stored in a storage unit 55 after being segmented into unit times, and the operation of the refrigerator 20 is controlled by judging patterns therein.

Furthermore, by lighting, for example, an LED, which serves as a communication unit 39, in the case where the refrigerator has entered power-saving operation, that status can be promoted to the user.

Meanwhile, if the light-receiving surface of the illumination sensor 36, or in other words, an illumination sensor cover 41, is blocked by something, it is not possible to accurately detect the illumination, and thus not possible to switch to the power-saving mode or return to the normal mode. Paper or the like being attached to the front surface of the refrigerating compartment door 22a can be thought of as a typical cause of such light blocking. However, in the present embodiment, the illumination sensor 36, which is an illumination detection unit, is provided above an operation board 27a on a vertical axis thereabove, where it is highly unlikely that anything will be attached. Accordingly, erroneous illumination detection is not carried out. Furthermore, although not shown in the diagram, the user can be prompted to pay attention by denoting the existence of the illumination sensor in the vicinity thereof, which makes it possible to further prevent such disturbances.

Next, control with respect to power-saving operation in the refrigerator 20 according to the fifth embodiment will be described.

Note that the control blocks in the refrigerator 20 according to the fifth embodiment are the same as the control blocks in the refrigerator 20 according to the first embodiment, and thus are omitted from the diagrams. Accordingly, the following descriptions will be carried out with reference to FIG. 4, which is a control block diagram of the refrigerator 20 according to the first embodiment.

The refrigerator 20 according to the fifth embodiment is provided with an illumination sensor 36, which is an illumination detection unit that detects illumination, and the human sensor 40, as detection units that detects changes in the outside environment in the periphery of the refrigerator 20, which is the installation environment of the refrigerator.

Furthermore, the refrigerator 20 includes multiple sensors serving as detection units, such as a door SW 51, an exterior temperature sensor 52, and an interior temperature sensor 53, which serve as state detection units that detect usage states of the refrigerator 20.

With the refrigerator 20 according to the present embodiment, the brightness in the periphery of the front surface of the refrigerator 20 is detected by the illumination sensor 36; this data is outputted to the control unit 54, and is furthermore stored in the storage unit 55. Similarly, a door opening/closing number and a door opening/closing time, obtained from output signals of the door SW 51 that detects the opening/closing state of the refrigerating compartment door 22a and other doors, are stored in the storage unit 55. Furthermore, temperature data detected by the outside temperature sensor 52 provided in the outer hull of the refrigerator 20 and the interior temperature sensor 53 that detects various interior temperatures is also stored in the storage unit 55.

This data is extracted every set amount of time, and an operation pattern is set by the control unit 54, thereby automatically changing the temperature settings for the compressor 28, the cooling fan 31, the temperature compensation heater 56, and the respective storage compartments. Here, if the illumination sensor 36 detects less than 5 Lx, and furthermore, cooling is being carried out at less than a predetermined temperature after a set amount of time has passed thereafter, the refrigerator is automatically put into power-saving operation, in which the rotational frequency of the compressor 28 is suppressed, overcooling is prevented, and so on, and an LED, serving as a notification unit 39, is lit for a set amount of time or is extinguished.

The flow of these operations is identical to the control flow illustrated in FIG. 7 as described in the first embodiment, and thus depictions and descriptions thereof will be omitted.

In addition, as with the refrigerator 20 according to the first embodiment, the refrigerator 20 according to the fifth embodiment executes nighttime control and away-from-home control. These control flows are identical to the flows illustrated in FIG. 8 and FIG. 9, respectively, and thus depictions and descriptions thereof will be omitted.

Furthermore, the temperature behavior and effects thereof in the case where the refrigerator 20 according to the fifth embodiment has executed nighttime control and away-from-home control are the same as those described in the first embodiment using FIG. 10. Accordingly, depictions and detailed descriptions of the temperature behavior and effects thereof will be omitted here.

Note, however, that an example of away-from-control performed by the refrigerator 20 according to the fifth embodiment will be briefly described hereinafter. The control unit 54 reads out and analyzes data from the same past days of the week accumulated in the storage unit 55. As a result of this analysis, for example, as shown in FIG. 6, it is determined that the user is away from home on that day of the week from 9 o'clock to 15 o'clock. Furthermore, the control unit 54 controls the current-consuming components such as the compressor 28 so as to put the refrigerator in power-saving operation at 9 o'clock on that day of the week, and switch back to normal operation a predetermined amount of time before 15 o'clock.

Next, operations of the compressor 28 will be described.

When the compressor 28 is electrified, electricity is supplied to the stationary part 112 of the electric element 110, and the rotator 111 rotates due to a rotational magnetic field emitted by the stationary part 112. Due to the rotation of the rotator 111, the eccentric portion 132 of the shaft 130 linked to the rotator undergoes rotational drive that is eccentric relative to the axis of the shaft 130.

The eccentric driving of the shaft 130 is converted into reciprocal drive by the linking unit 137 that is linked to the eccentric portion 132, which in turn results in reciprocal drive of the piston 136 linked to the other end of the linking unit 137; the piston 136 carries out suction compression of the refrigerant 104 while varying the volume within the compression chamber 134. The volume at which the piston 136 sucks and discharges in a single reciprocation within the compression chamber 134 is called the "cylinder volume", and the cooling performance changes depending on the size of the cylinder volume.

To be more specific, driving is carried out at multiple pre-set rotational frequencies having six stages, or 20 RPS (revolutions per second), 28 RPS, 35 RPS, 40 RPS, 58 RPS, and 67 RPS. Meanwhile, among these multiple stages of rotational frequencies, there is a maximum of two rotational frequencies that are greater than the rotational frequency of a commercial power source, whereas more than half of the rotational frequencies are less than the rotational frequency of the commercial power source.

Power-saving operation is carried out through low-rotation operation in the refrigerator 20 that is provided with the compressor 28, which is an example of this inverter compressor. The rotational frequency in this low-rotation operation is 28 RPS, which is a rotational frequency that is lower than a rotational frequency that is half the rotational frequency of a typical commercial power source, or 60 Hz. In addition, operation can also be carried out at 20 RPS, which is 1/3 the rotational frequency of a typical commercial power source.

The rotational frequency of nighttime mode is 30 RPS. Meanwhile, although the away-from-home mode is one type of an energy conservation mode similar to the nighttime mode, in the case where it has been determined that it is an active time for the user due to a higher illumination as compared to the nighttime mode being detected, the away-from-home mode is 35 RPS.

In addition, during normal cooling, which is a normal cooling mode, the frequency is centered around 35 RPS, with a maximum of 48 RPS. In other words, a lower rotational frequency than the rotational frequency of commercial power sources in Japan is used.

Note that although the rotational frequency of commercial power sources in Japan is 50 RPS or 60 RPS, in the present embodiment, 60 RPS, which is a rotational frequency of the higher commercial power source, is taken as the rotational frequency of a typical commercial power source.

A rotational frequency greater than or equal to 60 RPS is only employed in the case where a high load has been placed on the refrigerator due to a sudden rise in temperature caused by door openings/closings and the like.

In the present embodiment, with the refrigerator 20 provided with the compressor 28, which is an inverter compressor, the main rotational frequency used during nighttime mode, which is an energy conservation mode as described above, is 30 RPS, whereas although the away-from-home mode is likewise an energy conservation mode, with the away-from-home mode, in the case where it has been determined that it is an active time for the user due to a higher illumination as compared to the nighttime mode being detected, the main rotational frequency for the away-from-home mode is 35 RPS.

As described thus far, the compressor 28 operates at a rotational frequency that is lower than the rotational frequency of a commercial power source during both an energy conservation mode, which is power-saving operation, and a normal cooling mode during normal operation, thereby realizing further power saving, and control is carried out so that the refrigerator operates in a high-load cooling mode, where the electric element 110 is operated at a rotational frequency greater than or equal to the rotational frequency of a commercial power source, only in the case where a high load has been placed thereupon. Accordingly, the compressor 28 is operated at low rotations focusing on times of normal cooling and energy conservation, which make up more than 80% of the yearly usage time of the refrigerator 20, thus making it possible to achieve significant power saving with the refrigerator 20, and provide a refrigerator 20 in which better energy conservation is realized.

In addition, in the case where the refrigerator 20 is operated in an energy conservation mode, where it is predicted that the usage frequency of the refrigerator 20 by the user will drop, the compressor 28 is operated at one of three or more types of rotational frequencies set in advance, including a rotational frequency A, which is lower than the rotational frequency of a commercial power source. In addition, in the case where greater than or equal to a specified value of illumination has been detected by the illumination sensor 36 in a state in which the compressor 28 is running in the energy conservation mode at the stated rotational frequency A, the refrigerator 20 is operated at a rotational frequency B, which is a higher rotational frequency than the rotational frequency A being used at that time and with which the difference between the rotational frequency A is minimum.

This is control whereby, in the case where, for example, the compressor is operating at 30 RPS (the rotational frequency A) in nighttime mode, even if the illumination in the periphery has risen and the illumination sensor 36 has detected an illumination is higher than a specified value, the rotational frequency is not suddenly increased; instead, the compressor is operated at 35 RPS (the rotational frequency B), which is a higher rotational frequency than 30 RPS (the rotational frequency A) and with which the difference between 30 RPS (the rotational frequency A) is minimum.

Through this control, in the case where a high level of illumination has been detected by the illumination sensor 36, or in other words, the case where it is detected that it is an active time for the user of the refrigerator 20, the load exerted when a door the refrigerator 20 is actually open/closed is taken into consideration, and a rotational frequency is gradually increased in preparatory steps corresponding to that high load, thereby preventing a load that is greater than necessary and realizing energy conservation. Furthermore, because a high-load mode operating at a high rotational frequency can be entered quickly in the case where a high load is placed on the refrigerator as a result of the door actually opening/closing or the like, it is possible to realize energy conservation in a state in which the reliability of the compressor with respect to the high-load mode of the refrigerator is improved. In other words, both power-saving operation in an energy conservation mode and high-performance cooling in a high-load cooling mode can be realized.

In the case where the illumination detected by the illumination sensor 36 is less than a pre-set specified value, the control unit 54 puts the refrigerator into the energy conservation mode, which is energy conservation operation in which the electric element 110 is operated at a rotational frequency that is lower than the rotational frequency of a commercial power source, and the cylinder volume, which is a space in which compression operations are performed by the piston 136 making reciprocal movements within the compression chamber 134, has been increased to the point where it is possible to operate the electric element 110 at a rotational frequency that is lower than the rotational frequency of the commercial power source even during normal cooling when there are no door openings/closings and when the outside temperature is in the vicinity of 25°C. In this manner, it is necessary to finely set the cylinder volume, considered by the present inventors to be an important point of focus in order to realize both an energy conservation mode and a high-load mode, to the optimal cylinder volume for the refrigerator 20.

The outside temperature being in the vicinity of 25°C and normal cooling in the case where there are no door openings/closings refers to a state in which, in the case where a measurement condition for the refrigerator 20 involves measurement in a sealed space in which a constant temperature is maintained, such as an isothermal room, an outside temperature, which is the surrounding temperature of the refrigerator 20, of 25°C ±2°C is maintained.

A way of looking at the cylinder volume of the compressor 28 provided in this refrigerator 20 will be described hereinafter.

To start with the conclusion, with an inverter-driven hermetic compressor as the compressor 28 provided in an inverter refrigerator, a cylinder volume of 11.5 cc to 12.5 cc is optimal for R600a, whereas a cylinder volume of 7 cc to 7.9 cc is optimal for R134a refrigerant.

This is because the loss of the compressor is primarily determined by the motor efficiency and the mechanical efficiency and compression efficiency represented by sliding loss, and changes significantly depending on the cylinder volume and the operating conditions. For example, as shown in FIG. 21B, in the case where the cylinder volume is increased but operation is carried out at the same refrigeration performance, the rotational frequency can be significantly reduced by moving from, for example, A, to B, and to C as the cylinder volume is increased from 10 cc, to 12 cc, and to 15 cc.

Through this, as shown in FIG. 21C, the sliding loss also moves from A, to B, and to C. However, at this time, although the sliding loss does decrease from A to B due to the decrease in the rotational frequency, when moving from B to C, the sliding loss conversely increases due to the increase in the cylinder volume, and thus there is a trend whereby the sliding surface area increases and the sliding loss increases as well. Accordingly, even if only the sliding loss is taken as an example, increasing the cylinder volume too much results in the influence of the sliding loss becoming too great, and thus it can be seen that it is not acceptable to simply increase the cylinder volume.

The compressor is primarily controlled by mechanical loss, which is influenced by the motor efficiency and the influence of sliding portions and the like, and the volume efficiency of compression and suction characteristics, and thus those loss characteristics can be expressed by characteristics such as those shown in FIG. 21C. In addition, the results of consolidating the rotational frequencies and refrigerating performance on a cylinder volume-by-cylinder volume basis are illustrated in FIG. 21D. FIG. 21D illustrates the relationship between refrigeration performance and COP, consolidated on a cylinder volume-by-cylinder volume basis.

As shown in FIG. 21D, because the rotational frequency is greatly reduced as the cylinder volume rises, the motor efficiency and sliding loss illustrated in FIG. 21C is a comparison between A and B in FIG. 21C, and practically speaking, loss decreases as a result of an increase in the cylinder volume. However, increasing the cylinder volume too much results in the influence of the sliding loss becoming too great, and thus it can be seen that it is not acceptable to simply increase the cylinder volume.

Meanwhile, it has recently become clear that when the refrigerator itself is in a state of operation, the cylinder volume of the compressor has the most influence on the power consumed in refrigerators whose storage compartments are 550 L to 600 L, and thus it can be seen that the consumed power reduction effect can be maximized by improving the efficiency of a region B shown in FIG. 21D (the "primary usage region" in FIG. 21D).

Based on the above, looking at all the relationships between losses and efficiencies in this usage region, it was discovered that our invention has, as an appropriate value for the cylinder volume of the compressor, 11.5 cc to 12.5 cc for R600a and 7 cc to 7.9 cc for R134a.

In addition, in the case where the capacity of the storage compartments of such a refrigerator is to be increased, the miniaturization of the compressor is one of the most important items for consideration. In other words, it is desirable for the outer hull to be small and the cylinder volume to have a high capacity.

For example, in a cooling system that uses R600a refrigerant, a compressor having a large cylinder volume of approximately 12 cc has a large piston radius and a large stroke, and thus the size of the compressor itself is also large. As a result, it has been difficult to install such a compressor in a slim refrigerator that does not take up much space, as doing so reduces the volumetric efficiency of the refrigerator.

However, assuming the product of the outer dimensions of the compressor provided in the refrigerator, or the width W (mm), a depth D (mm), and a height H (mm), is taken as the outer volume V (mm^3), the cylinder volume, which is determined by the product of the cross-sectional surface area and the stroke of the piston of the compression element in the compressor, is assumed to be K (mm^3). In this case, a highly-miniaturized compressor for which V/K is less than or equal to 380 or H/K is less than or equal to 0.012 can be installed in a slim refrigerator whose outer dimensions are a width of 900 mm, a depth of 730 mm, a height of 1800 mm, and so on, even if the refrigerator is of a class that is greater than or equal to, for example, 550 L, for which such installation has conventionally been difficult; through this, a refrigerator having a good volumetric efficiency (actual inner capacity in L / outer dimension volume) can be realized.

As another point of view, the weight of the compressor relative to the cylinder volume is an important point. This is because if, for example, a heavy compressor is installed in a top unit-type refrigerator, in which the compressor is provided in the upper portion of the refrigerator main body, as is the case with the refrigerator 20 according to the present embodiment, there is the possibility that the refrigerator will fall over, and thus it is necessary to design reinforcements for increasing the strength of the refrigerator main body. For this reason, from the standpoint of safety and resources, it is desirable to provide a compressor having a lighter weight.

For example, when the weight of the compressor 28 installed in the refrigerator 20 according to the present embodiment is taken as G and the cylinder volume determined by the product of the cross-sectional surface area and the stroke of the piston of the compression element 113 in the compressor 28 is taken as K, employing an extremely lightweight hermetic compressor, for which G/K is less than or equal to 0.0006, as the compressor 28 makes it possible to achieve a dramatic reduction in weight even in a refrigerator 20 of the 550 L class, and thus makes it possible to achieve an effect of reducing material and transportation costs.

In addition, with a compressor for which such a high cylinder capacity or reduction in weight has been achieved, temperature countermeasures, or in other words, suppressing a rise in the temperature of the compressor, becomes an essential issue.

In particular, the higher the cylinder volume becomes, the higher the temperature of expelled gas becomes, leading to the possibility of oil degradation or the oil membrane on the valve seat portion disappearing and causing defects.

In the present embodiment, these temperature countermeasures are carried out by manipulating the turn ratio of the stationary part 112 of the motor in the electric element 110, thereby suppressing a rise in the motor temperature; this in turn suppresses a rise in the temperature of the compressor 28.

The compressor 28 according to the present embodiment is a 10 cc or more reciprocating compressor that has a power element portion, and includes an inverter driving circuit that drives the electric element 110 at an operational frequency that includes a rotational frequency that is less than the frequency of a commercial power source; the electric element 110 includes a rotor 111 in which a permanent magnet is embedded and a concentrated winding-type stationary part 112 in which a wound line has undergone concentrated winding around a tooth portion provided in the core. In addition, for each of the U, V, and W phases of the wound the line wound upon the tooth portion of the stationary part 112, the length is L (m) and the diameter is D (mm), and L/D is less than or equal to 250.

In this manner, keeping the ratio L/D between the diameter and the length at less than or equal to 250 makes it possible to suppress the likelihood of the occurrence of problems such as defects caused by the production of sludge and malfunctions in the valve seat portion membrane caused by oil degradation arising due to an increase in the temperature of expelled gas at 10 cc or more caused in turn by a reduction in joule heat loss; this makes it possible to provide a highly reliable compressor 28.

In addition, although increasing the cylinder volume of the compressor 28 according to the present embodiment makes it possible to realize both an energy conservation mode, which is power-saving operation, and a high-load mode in which the energy conservation mode is canceled and cooling is carried out quickly, an increase in noise, particularly when entering the high-load mode, is a concern.

As a countermeasure for such noise, providing a piezoelectric element, such as a piezo element or the like, in the compressor 28 is a useful means for achieving noise reduction. By providing a control mechanism that applies a voltage to a piezo element anchored to the hermetic receptacle 103 of the compression element 113, thereby causing that piezo element to vibrate, the property by which the piezo element expands/contracts when a voltage is applied thereto is exploited, thereby producing microvibrations in the hermetic receptacle 103. Through this, a vibration having a phase inverse relative to the frequency of the sound for the frequency to be cancelled can be produced, and thus it is possible to restrict vibrations from the hermetic receptacle 103.

Accordingly, sound radiation and noise produced by the hermetic receptacle 103 can be suppressed, and thus a reduction in noise and a reduction in vibrations can be achieved.

Furthermore, if a conversion mechanism for converting the distortion of the piezoelectric element such as the piezo element anchored to the hermetic receptacle 103 of the compression element 113 into electric power is provided, the piezoelectric element, such as the piezo element, is charged as a result of the vibrations, distortion, and so on. Accordingly, using this property, vibrations affected on the piezo element attached to the hermetic receptacle 103 during the operation of the compressor 28 can be converted into electric power. In other words, converting the vibration energy into another form of energy makes it possible to suppress vibrations from the hermetic receptacle 103, and thus makes it possible to reduce sound/vibrations.

In addition, as another form for converting the distortion of the piezoelectric element, such as the piezo element, a conversion mechanism for converting the distortion of the piezoelectric element, such as the piezo element, anchored to the hermetic receptacle 103 of the compression element 113 into electric power, may be provided as well. The electric power resulting from the conversion can then be used as electric power for the display panel, control, or the like the refrigerator, thereby making it possible to achieve further energy conservation, and realizing further power-saving.

In this manner, in the case where a piezoelectric element, such as the piezo element, is attached to the hermetic receptacle 103, a shell portion in which the vibration energy is the highest, and in particular, the upper end section of the upper receptacle 102, has a high amount of variation, and thus by actively vibrating the piezo element, it is possible to retain more electrical energy and achieve more energy conservation as a result.

Furthermore, in the case where the piezo element is formed in a fibrous shape, rather than attaching a Peltier element formed in a fibrous shape to the hermetic receptacle 103, the element is provided in a steel sheet, or provided in a resin material of the compressor 28, such as a protector cover, a resin material of the refrigerator 20, or the like. Accordingly, it is possible to achieve further energy conservation by absorbing vibrations and converting the vibrations into electric energy, and using a supply unit for supplying that energy as another electric power supply form.

In addition, in the present embodiment, times when there are few door openings/closings, few food item loadings, when the user is not at home, is away from home, is asleep, or the like are predicted by judging usage patterns of the household; at this time, the operation of at least the current-consuming components is automatically suppressed or stopped, thereby realizing energy conservation without placing a burden on the user, and furthermore, because the customer can make visual confirmations using the notification unit 39, such as an LED, the energy conservation qualities of the refrigerator can be promoted.

Meanwhile, in the present embodiment, using the illumination sensor 36 as the detection unit, the lifestyle pattern of inhabitants is predicted based on a change in illumination detected by the illumination sensor 36. For example, in the case where an extremely low value, such as less than 5 Lx, continues for greater than or equal to a set period for the illumination detection value, it is assumed that the user is sleeping, and therefore it is predicted that the frequency with which the refrigerator will be used thereafter will be extremely low; accordingly, the refrigerator moves to power-saving operation by suppressing an increase in the rotational frequency of the compressor 28 and changing the interior temperature setting. Energy conservation is achieved by carrying out power-saving operation until the next door opening/closing as long as the state of low illumination continues.

In addition, in the present embodiment, using the human sensor as the detection unit, which is not part of the invention, makes it possible to detect a change in the amount of infrared light energy emitted by humans, thus making it possible to ascertain human movement in the periphery of the refrigerator 20. For this reason, if it can be determined that a person is not in the vicinity of the refrigerator 20 for a set period, such as when away from home or sleeping, the refrigerator can be moved to power-saving operation by suppressing an increase in the rotational frequency of the compressor 28 and changing the interior temperature setting, regardless of whether it is late at night or day. Energy conservation is achieved by carrying out power-saving operation until the next door opening/closing as long as the state of low illumination continues.

Note that although the illumination sensor 36 is used as the detection unit in the present embodiment, the detection unit may be a receiving unit for reference radio waves that accurately records time. In this case, because the date/time can be accurately ascertained automatically, temperature settings aligned with the seasons can be carried out, and during times of cold temperatures, such as winter and the like, inputs to a temperature compensation heater and the like can be reduced, thus making it possible to conserve even more energy.

Note that in the present embodiment, the refrigerator 20 is switched to power-saving operation based on the illumination detected by, for example, the illumination sensor 36, serving as a sensor that detects the surrounding environment of the refrigerator 20. However, a sensor that detects the surrounding environment of the refrigerator 20, such as, for example, the illumination sensor 36, is not an absolute condition when commencing power-saving operation, and a function for a power-saving operation commencement condition setting unit that determines a condition for commencing power-saving operation may be employed as well.

In this case, when, for example, the operational state is following the main control flow, the illumination sensor 36 detects illumination in the installation environment of the refrigerator 20, and that illumination is less than the late-night determination value, or in other words, is less than 5 Lx, it is determined to be late at night, and in the case where a door has not been opened and closed even once within the specified time of five minutes, the refrigerator is quickly moved into low-rotation operation, in which the rotational frequency is reduced by a step beyond the normal rotation. Meanwhile, in the case where the illumination in the installation environment of the refrigerator 20 is greater than or equal to the late-night determination value, a more stringent condition is set in order to make a more careful determination, such as proceeding to the next step after determining the door openings/closings over three hours. In this manner, the weighting placed on the conditions for carrying out power-saving operation is changed depending on the result of the detection of the periphery of the refrigerator 20.

Through this, in the case where it has been detected that a person is not active in the periphery of the refrigerator 20, the set conditions for commencing the power-saving operation are relaxed so that the refrigerator 20 is moved to power-saving operation more quickly, whereas in the case where it has been detected that a person is active, the set conditions for commencing power-saving operation are made more stringent so as to make a more careful determination.

Through this, in the case where the detection unit has determined that the user is not active, it is easier to move to power-saving operation, and thus power-saving operation is moved to more quickly. On the other hand, in the case where the detection unit has determined that the user is in an active state, in order to identify the presence/absence of user activity in a careful manner, the user activity is monitored over a longer period of time compared to the case where the user has been detected as being in an active state, using the door SW 51, the interior temperature sensor 53, and so on for identifying the usage state. Doing so makes it possible to carry out high-quality control of the energy conservation effects with a high level of reliability, while more accurately corresponding to the activity of the user.

### (Sixth Embodiment)

The layout of the storage compartments of the refrigerator 20 according to a sixth embodiment is the same as the layout indicated in FIG. 1A and described in the first embodiment. For this reason, depictions of the front view and so on of the refrigerator 20 according to the sixth embodiment will be omitted.

FIG. 23 is a cross-sectional view of a compressor 28 of the refrigerator according to the sixth embodiment of the present invention. FIG. 24A is a perspective view illustrating a crank weight of the compressor 28 of the refrigerator according to the sixth embodiment. FIG. 24B is a perspective view illustrating the periphery of the crank weight of the compressor 28 of the refrigerator according to the sixth embodiment. FIG. 25A is an assembly diagram illustrating the periphery of an elastic member of the compressor 28 of the refrigerator according to the sixth embodiment. FIG. 25B is a cross-sectional view of the periphery of the elastic member of the compressor 28 of the refrigerator according to the sixth embodiment. FIG. 26A is a perspective view illustrating a cylinder block of the compressor 28 of the refrigerator according to the sixth embodiment from above. FIG. 26B is a perspective view illustrating the cylinder block of the compressor 28 of the refrigerator according to the sixth embodiment from below. FIG. 27A is a planar cross-sectional view of the periphery of a suction tube of the compressor 28 of the refrigerator according to the sixth embodiment. FIG. 27B is a vertical cross-sectional view of the periphery of the suction tube of the compressor 28 of the refrigerator according to the sixth embodiment.

Note that in the present embodiment, configurations that are the same as those in the fifth embodiment are given the same reference numerals, and descriptions thereof omitted; however, the technical spirit described in the fifth embodiment can be applied to the present embodiment as long as there are no problems therewith, and the configuration in which the configurations of the fifth embodiment of the present embodiment are combined is possible.

The compressor 28 provided in a refrigerator main body 21 includes a hermetic receptacle 103. An electric element 110 that includes a rotor 111 and a stationary part 112, and a compression element 113 that is driven by the electric element 110, are housed within the hermetic receptacle 103. The compression element 113 is provided with a compression chamber 134 and a piston 136 that moves back and forth within the compression chamber 134. The compression element 113 is a reciprocating type, and the electric element 110 is an inverter electric motor that operates at multiple rotational frequencies, including a rotational frequency that is lower than the rotational frequency of commercial power sources.

As shown in this diagram, the hermetic receptacle 103 is formed by joining a mortar-shaped lower receptacle 101 and an inverse mortar-shaped upper receptacle 102, which are formed by performing deep-drawing molding on rolled steel plates 2 to 4 mm thick, and then welding the joints around the entire circumference. Refrigerant 104, composed of carbon hydride R600a, is contained within the hermetic receptacle 103, and ice machine oil 105, composed of a mineral oil having a high compatibility with R600a, is contained in the bottom thereof. The hermetic receptacle 103 is provided in the refrigerator 20 through a mount (not shown) to which legs 106 are anchored, provided in the bottom portion thereof.

Meanwhile, a mechanical portion 116 having the compression element 113 and the electric element 110 is provided in the hermetic receptacle 103 via a spring 171, which is an example of an elastic member. To be more specific, the mechanical portion 116 is linked to the bottom of the lower receptacle 101 via a support portion 172 and the spring 171, which configure a support member that supports the mechanical portion 116, provided at the bottom end of the stationary part 112.

In other words, the support portion 172 and the spring 171 provided at the bottom end of the stationary part 112 are a support member that elastically supports the mechanical portion 116.

The spring 171, which is an elastic member, is provided between a holding portion 173 on the side of the hermetic receptacle 103 and the support portion 172 on the side of the mechanical portion 116. The spring 171 is partially anchored to the holding portion 173 on the side of the hermetic receptacle 103 through press-fitting, and is freely fitted with respect to the support portion 172 on the side of the mechanical portion 116 with a constant gap in the radial direction thereof provided.

In the present embodiment, a piston 136 having a large radius is used, and thus the configuration of the spring 171, the support portion 172 on the side of the mechanical portion 116, and the holding portion 173 on the side of the hermetic receptacle 103 are as described hereinafter.

First, the amount of unbalance is increased by using the piston 136 having a large radius. For this reason, the fit of the spring 171 in the standing direction, which is the vertical direction, is configured so as to be what is called a "loose" fit, whereby the fit allowance at the time of press-fitting is smaller for the holding portion 173 than for the support portion 172 on the side of the mechanical portion 116, so that vibrations of the mechanical portion 116 during a normal operation state are not transmitted to the hermetic receptacle 103. This configuration is such that when, for example, a pulling force is applied in the standing direction, the support portion 172 on the upper side pulls out with a lower force.

Meanwhile, because the diameter of the piston 136 is large, the repulsive force of the piston 136 when starting up or stopping, rather than when in normal operation, causes the mechanical portion 116 to swing significantly central mainly to the horizontal direction, which is the direction in which the piston 136 vibrates. As a result, a collision phenomenon in which the cylinder block 133 collides with the hermetic receptacle 103 is more likely to occur. For this reason, as a configuration in order to reduce the occurrence of this collision phenomenon, the gap next to the spring 171 in the sideways direction, which is the horizontal direction, is made smaller for the support portion 172 on the side of the mechanical portion 116 than for the holding portion 173, and the side surface of the support portion 172 is configured to come into contact with the spring 171 with ease in order to suppress movement in the sideways direction.

This is a configuration whereby, for example, in the case where weight has been applied to the mechanical portion 116 in the sideways direction, the portion that does not originally make contact with the spring 171 collides with the spring 171 more easily on the side of the support portion 172 that on the side of the holding portion 173. In the present embodiment, specifically, as shown in FIG. 5B, the configuration is such that the gap between a lower end portion 172a of the support portion 172 and the spring 171 is smaller than the gap between an upper end portion173a of the support portion 173 and the spring 171.

In this manner, the relationship between the support portion 172 on the side of the mechanical portion 116 and the spring 171 has, compared to the relationship between the holding portion 173 and the spring 171, a fit that is smaller and more loose in the standing direction and less likely to move in the sideways direction.

A terminal 115, of which part of the lower receptacle 101 is configured, communicates electricity (not shown) between the interior/exterior of the hermetic receptacle 103, and supplies electricity to the electric element 110 via a lead line.

Next, details of the compression element 113 shall be given.

A shaft 130 includes a main shaft portion 131 anchored to the rotor 111 through press-fitting or interference shrink fitting, and an eccentric portion 132 formed so as to be eccentric relative to the main shaft portion 131. A cylinder block 133 includes the compression chamber, which is approximately cylindrical in shape, and also includes a shaft receiving portion 135 that axially supports the main shaft portion 131 of the shaft 130; the cylinder block 133 is formed above the electric element 110.

A piston 136 is freely fitted into the compression chamber 134, and is linked to the eccentric portion 132 of the shaft 130 using a linking unit 137. Through this configuration, the rotational drive of the shaft 130 can be converted into reciprocal drive of the piston 136, and the piston 136 then expands and contracts the space within the compression chamber 134, thereby compressing the refrigerant 104 within the hermetic receptacle 103 and discharging the refrigerant 104 into the refrigeration cycle.

In addition, refrigerant 104 is sucked into the interior of the compressor 28 through a suction tube 178, is sucked from a suction opening 179c of a suction muffler 179, and flows into the compression chamber 134.

At this time, as shown in FIG. 27A, a center line 178a of the suction tube 178 is located more toward the suction opening 179c of the suction muffler 179 then a corner portion 179b of a receiving portion 179a of the suction muffler 179.

In addition, as shown in FIG. 27B, the centerline 178a of the suction tube 178 is located for the most part central to the suction opening 179c of the suction muffler 179.

In addition, the diameter of the piston has been increased so that a stroke A, which is the distance across which the piston 136 makes a reciprocal movement when carrying out compression operation according to the present embodiment, a length B of the piston 136, and a diameter C of the piston 136 are in a relationship whereby A ≤ B ≤ C.

To be more specific, assuming that the diameter C of the piston 136 is 27.8 mm, the stroke A, which is the distance across which the piston 136 makes a reciprocal movement, is 20 mm. Through this, a space for a compression chamber 134 having a 12 cc cylinder volume is formed.

Furthermore, assuming that the length B of the piston 136 is 21.5 mm, the piston 136 is formed so that the diameter C of the piston 136 is greater than the length B.

In addition, the stroke A has a length that is two times the amount of eccentricity of the eccentric portion 132 formed eccentric relative to the main shaft portion 131 of the shaft 130. In other words, the amount of eccentricity in the present embodiment is 10 mm.

In addition, the cylinder block 133 is provided with a borehole 175, through which the compression chamber 134 is formed by freely fitting the piston 136 thereinto. In addition, in order to improve the rigidity and obtain a sufficient degree of strength without increasing the size of the cylinder block 133 in the case where the piston 136 has been formed with a large size, as in the present embodiment, a built-up portion 176a, which is a convex portion configured of a bent surface, is provided in the vicinity of the borehole 175 of the cylinder block 133.

Meanwhile, a crank weight 170, provided in order to balance the amount of eccentricity occurring during reciprocal movement of the piston 136, is provided in the eccentric portion 132 of the shaft 130, in the same manner as the piston 136. In addition, at least part of the crank weight 170 is located both above a horizontal line 140 that passes through the upper end of the piston 136 in the vertical direction of the compression element 113 and below the horizontal line 140 that passes through the upper end of the piston 136.

In the present embodiment, the upper end of the piston 136 is located upon a horizontal line from an extended portion 170a of the crank weight 170 provided on the lower side of the crank weight 170.

Meanwhile, with respect to the electric element 110, the same configuration as that described in the fifth embodiment is employed, and thus detailed descriptions thereof will be omitted.

The operation and effects of the refrigerator 20 thus configured will be described below.

The control unit 54 performs control so as to realize both power-saving operation, in which the electric element 110 is operated at a lower rotational frequency than the rotational frequency of a commercial power source, and high-load cooling operation, in which the electric element 110 is operated at a rotational frequency greater than or equal to the rotational frequency of the commercial power source, thereby cooling the storage compartments (the refrigeration compartment 22 and the like) to a set temperature.

During such cooling, when the compressor 28 is electrified, electricity is supplied to the stationary part 112 of the electric element 110, and the rotator 111 rotates due to a rotational magnetic field emitted by the stationary part 112. Due to the rotation of the rotator 111, the eccentric portion 132 of the shaft 130 linked to the rotator undergoes rotational drive that is eccentric relative to the axis of the shaft 130.

The eccentric driving of the shaft 130 is converted into reciprocal drive by the linking unit 137 that is linked to the eccentric portion 132, which in turn results in reciprocal drive of the piston 136 linked to the other end of the linking unit 137; the piston 136 carries out suction compression of the refrigerant 104 while varying the capacity within the compression chamber 134. The volume at which the piston 136 sucks and discharges in a single reciprocation within the compression chamber 134 is called the "cylinder volume", and the cooling performance changes depending on the size of the cylinder volume.

Meanwhile, an inverter compressor, which is a variable-performance compressor capable of operating at multiple pre-set rotational frequencies, is employed for the compressor 28.

To be more specific, six stages of rotational frequencies are set, or 20 RPS, 28 RPS, 35 RPS, 48 RPS, 58 RPS, and 67 RPS. Meanwhile, among these multiple stages, there is a maximum of two rotational frequencies that are greater than the rotational frequency of a commercial power source, whereas more than half of the rotational frequencies are less than the rotational frequency of the commercial power source.

With the refrigerator 20 that is provided with this compressor 28, which is an inverter compressor, rotational frequency in power-saving operation such as that described above is set to 28 RPS, which is a rotational frequency that is lower than 1/2 the rotational frequency of a typical commercial power source, which is 60 Hz. In addition, operation can also be carried out at 20 RPS, which is 1/3 the rotational frequency of a typical commercial power source.

In addition, during normal cooling, which is a normal cooling mode, the frequency is centered around 35 RPS, with a maximum of 48 RPS. In other words, a lower rotational frequency than the rotational frequency of commercial power sources in Japan is used.

Note that although the rotational frequency of commercial power sources in Japan is 50 RPS or 60 RPS, in the present embodiment, 60 RPS, which is a rotational frequency of the higher commercial power source, is taken as the rotational frequency of a typical commercial power source.

A rotational frequency greater than or equal to 60 RPS is only employed in the case where a heavy burden has been placed on the refrigerator due to a sudden rise in temperature caused by door openings/closings and the like.

In this manner, in order to realize energy conservation, the refrigerator 20 according to the present embodiment attempts to achieve energy conservation using the compressor 28, which is an inverter compressor, and in the case of operation in an energy conservation mode, which is a power-saving mode, power-saving is carried out by operation at low rotations using the compressor 28 provided with a large cylinder volume. Furthermore, in the case where a high load has occurred due to door openings/closings, a rise in the interior temperature, and so on, the compressor 28 provided with a large cylinder volume can comply with high loads by operating at high rotations for a short period of time. As a result, a compressor that achieves significant power-saving can be realized in the actual refrigerator.

Furthermore, with the refrigerator 20 according to the present embodiment, in the case where the compressor 28 provided with a large cylinder volume as described above is used, attention is placed on the mutual relationship between the diameter and the stroke of the piston 136 that forms the cylinder volume of the compressor 28. To be more specific, rather than forming a large cylinder volume by lengthening the stroke, a large cylinder volume is formed by increasing the diameter of the piston. Through this, it is possible to realize a compressor that has high reliability even when operating across a wide range of rotational frequencies, and thus it is possible to realize both power-saving operation through an energy conservation mode and high-performance cooling in a high-load cooling mode.

Meanwhile, the mechanical portion 116 having the compression element 113 and the electric element 110 is provided in the hermetic receptacle 103 via the spring 171, which is an example of an elastic member. To be more specific, the mechanical portion 116 is elastically supported by the spring 171, which is provided between the holding portion 173 provided at the bottom of the lower receptacle 101, and the support portion 172, which is provided at the lower end of the stationary part 112.

In other words, the support portion 172 and the spring 171 provided at the bottom end of the stationary part 112 are a support member that elastically supports the mechanical portion 116.

The spring 171, which is an elastic member, is configured so that the gap between the side surface of the lower end portion 172a of the support portion 172 and the spring 171 is smaller than the gap between the side surface of the upper end portion 173a of the holding portion 173 and the spring 171. In other words, the configuration is such that the relationship between the support portion 172 and the spring 171 is a loose fit in the standing direction due to the small fitting allowance during press-fitting, whereas the gap in the sideways direction is small, and thus movement is difficult. With this configuration, the gap in the radial direction (in other words, the horizontal direction) functions as a buffering unit for suppressing collisions.

Note that in the present embodiment, the spring 171 and the support portion 172 and holding portion 173 are all fitted together through press-fitting. However, a loose fit in which a gap is provided on the side of the support portion, and at least the side of the holding portion 173 is press-fitted, is also acceptable. In this case too, the same effects can be achieved as in the case of the configuration where the spring 171 and the support portion 172 come loose in the vertical direction more easily than the spring 171 and the holding portion 173, or in other words, where support portion 172 pulls out with a small force.

As described thus far, with the present embodiment, using the piston 136 having a large radius increases the amount of unbalance, and thus, in order to inhibit the transmission of vibrations from the mechanical portion 116 to the hermetic receptacle 103 during a normal operating state, the configuration is such whereby the fit of the spring 171 in the standing direction, which is the vertical direction, has a smaller fitting allowance on the side of the support portion 172 than on the side of the holding portion 173 for the mechanical portion, or in other words, whereby the fit is a loose fit. Through this, even when the piston 136 having a large diameter is used, the transmission of vibrations to outside of the compressor 28 via the hermetic receptacle 103 can be suppressed.

Furthermore, because the diameter of the piston 136 is large, the repulsive force of the piston 136 when starting up or stopping, rather than when in normal operation, causes the mechanical portion 116 to swing significantly central mainly to the horizontal direction, which is the direction in which the piston 136 vibrates. As a result, a collision phenomenon in which the cylinder block 133 collides with the hermetic receptacle 103 is more likely to occur.

Accordingly, a smaller gap is provided in the radial direction between the spring 171 and the support portion 172 than the gap between the spring 171 and the holding portion 173, so that the configuration is such where, in the case where weight has been applied to the mechanical portion 116 in the sideways direction, the portion that does not originally make contact with the spring 171 collides with the spring 171 more easily on the side of the support portion 172 that on the side of the holding portion 173. Through this, the collision phenomenon occurring with the starting and stopping of the mechanical portion 116 can be suppressed.

In addition, in the present embodiment, the crank weigh 170, provided in order to balance the amount of eccentricity occurring during reciprocal movement of the piston 136, is provided in the eccentric portion 132 of the shaft 130, in the same manner as the piston 136. In addition, at least part of the crank weight 170 is located both above a horizontal line 140 that passes through the upper end of the piston in the vertical direction of the compression element 113 and below the horizontal line 140 that passes through the upper end of the piston 136.

In the present embodiment, the piston 136 is located upon a horizontal line from an extended portion 170a of the crank weight 170 provided on the lower side of the crank weight 170.

In other words, it is necessary to increase the shape and the weight of the crank weigh 170 in order to balance the amount of eccentricity occurring during reciprocal movement of the large piston 136. In the present embodiment, when the piston 136 is located at the lower dead point during operation, the piston 136 is located upon the horizontal line of the extended portion 170a of the crank weight 170, and the extended portion 170a is located on the side of the main shaft portion 131. For this reason, interference between the extended portion 170a and the piston 136 can be avoided while disposing the crank weight 170 so that the overall height of the compressor 28 is low.

In addition, even if the extended portion 170a is located below the horizontal line 140 that passes through the upper end of the piston 136, interference between the extended portion 170a in the piston 136 can be avoided while disposing the crank shaft 170 so that the overall height of the compressor 28 is low, in the same manner.

Accordingly, even in the case where the shape and weight of the crank weight 170 have been increased, the crank weight 170 can be disposed so that the overall height of the compressor 28 is low.

In other words, in the present embodiment, in the case where the compressor 28 is provided in a high-capacity refrigerator 20 in which the inner capacity is great, normally, lengthening the stroke reduces the size and weight of the piston 136 and thus makes it possible to reduce the amount of unbalance; however, in spite of this, a structure in which focus is placed on increasing the diameter of the piston 136 is employed. In order to reduce the amount of unbalance in the piston 136 despite employing such a structure, the configuration is such that the crank weight 170 is provided as close as possible to the piston 136, having first suppressed the overall height of the compression element 113. Accordingly, by further reducing vibrations and reducing the amount of unbalance arising during the reciprocal movement of the piston 136, it is possible to provide a highly-reliable, high-cylinder volume compressor 28 that suppresses partial contact and the like in the sliding portion.

Furthermore, the refrigerant 104 is sucked through the suction tube 178 into the compressor 28. When the refrigerant 104 is sucked from the suction opening 179c of the suction muffler 179 and flows into the compression chamber 134, the center line 178a of the suction tube 178 is located more toward the suction opening 179c of the suction muffler 179 than the corner portion 179b of the receiving portion 179a of the suction muffler 179. Furthermore, the centerline 178a of the suction tube 178 is located for the most part central to the suction opening 179c of the suction muffler 179.

Here, compression operations are carried out primarily at low rotational frequencies when using the compressor 28 provided with a large cylinder volume. In this case, the suction force drops due to a drop in the flow speed of the refrigerant 104 sucked by the suction muffler 179, and thus there is a trend whereby the refrigerant 104 that flows in from the suction tube 178 is released against the high-temperature shell interior, resulting in thermal exchange. In other words, there is a tendency for the refrigerant 104 to be sucked into the compression chamber 134 in a comparatively high-temperature state.

However, in the present embodiment, the centerline 178a of the suction tube 178 is located more toward the suction opening 179c of the suction muffler 179 than the corner portion 179b of the receiving portion 179a of the suction muffler 179 in the horizontal direction, and is located for the most part central to the suction opening 179c of the suction muffler 179 in the vertical direction. Through this, it is possible to cause the suction opening 179c of the suction muffler 179 to suck the refrigerant 104, which has flowed from the suction tube 178 at a comparatively low temperature, with more certainty, and it is thus possible to improve the suction efficiency of the compressor and in turn improve the efficiency of the compressor. In other words, it is possible to provide a compressor 28 for a more highly energy-conserving refrigerator.

In addition, the cylinder block 133 is provided with the borehole 175, through which the compression chamber 134 is formed by freely fitting the piston 136 thereinto. In order to improve the rigidity and obtain a sufficient degree of strength without increasing the size of the cylinder block 133 in the case where the piston 136 has been formed a large size, as in the present embodiment, a built-up portion 176a, which is a convex portion configured of a bent surface, is provided in the vicinity of the borehole 175 of the cylinder block 133.

In addition, the cylinder block 133 is also provided with a built-up portion 176b on the side opposite to the built-up portion 176a, with a shaft receiving hole 177a of a shaft receptor 177, in which the main shaft portion 131 of the shaft 130 is freely fitted, provided therebetween. Through this, the overall strength of the cylinder block 133 can be improved so as to withstand loads placed on the shaft receptor 177.

Thus, increasing the overall volume and weight of the cylinder block 133 can be considered the easiest means for improving the strength of the cylinder block 133 as a whole. However, in the present embodiment, the built-up portion 176a and the built-up portion 176b provided on the side opposite to the built-up portion 176a are provided with the shaft receptor 177 therebetween in order to improve the strength of the compression chamber 134, thus improving the strength of the cylinder block 133 while using fewer resources from an environmental standpoint. This in turn improves the rigidity while using the minimum-sized convex portions capable of receiving the load of the shaft receptor 177 in a well-balanced manner. In other words, a highly-rigid cylinder block 133 can be formed using fewer resources.

### (Seventh Embodiment)

FIG. 28 is a vertical cross-sectional view of a compressor 28, which is a hermetic compressor, of the refrigerator according to a seventh embodiment of the present invention. FIG. 29 is a vertical cross-sectional view of principle elements of a compression element 113 of the refrigerator according to the seventh embodiment. FIGS. 30(a), 30(b), 30(c), and 30(d) are diagrams illustrating, in order, behavior of a piston 136 during a compression process. To be more specific, FIGS. 30(a), 30(b), and 30(c) illustrate initial stages of the compression process, respectively. FIG. 30(d), meanwhile, illustrates a later stage of the compression process.

A cylinder block 133 has a borehole 175 that is approximately cylindrical in shape and a shaft receptor 177, disposed so as to be fixed at a set position relative to each other. The piston 136 is inserted into the borehole 175 so as to be capable of reciprocal movement, thus forming a compression chamber 134.

Note that configurations in the present embodiment that are identical to those in the fifth and sixth embodiments shall be given identical numbers, and descriptions thereof shall be omitted. The technical aspects described in the fifth and sixth embodiments can be applied to the present embodiment as long as doing so does not cause any problems, and a configuration in which the configurations of the fifth and sixth embodiments and the present embodiment are combined is possible as well.

One end of a linking unit 137, which is a connecting rod, is linked to an eccentric portion 132, and the other end is linked to the piston 136 via a piston pin 143.

Here, the borehole 175 is provided in the cylinder block 133 so as to form the compression chamber 134 along with the piston 136 and a valve plate 139. The borehole 175 is formed, as shown in FIG. 29, so as to have a tapered portion 134b, in which the inner diameter dimension increases from D1 to D3 (where D3 is greater than D1) from the side in which the piston 136 is positioned in the upper dead point toward the side in which the piston 136 is positioned in the lower dead point, and a straight portion 134a, in which the inner diameter dimension is constant in the axial direction in a segment equivalent to an axial direction length L1 at a location corresponding to the end portion of the piston 136 on the side of the compression chamber 134 when the piston 136 has reached the upper dead point. Meanwhile, the piston 136 is formed having an external diameter dimension D2 that is constant across the entire length of the piston 136.

The borehole 175 of the cylinder block 133 is, as shown in FIG. 29, formed so that when the piston 136 is positioned at the lower dead point, the side of the piston 136 opposite to the compression chamber 134 is exposed within the hermetic receptacle 103.

Furthermore, an approximately ring-shaped oil supply groove 136b is engraved in the outer circumferential surface of the piston 136 on the side toward the compression chamber 134. A cutout portion 120, in which part of the circumferential wall of the borehole 175 is cut out, is formed so that at least part of the oil supply groove 136b is exposed from the borehole 175 and communicates with the hermetic receptacle 103 in a state in which the piston 136 is positioned at the lower dead point.

A rotor 111 of an electric element 110 rotates the shaft 130, and the rotational drive of the eccentric portion 132 is transmitted to the piston 136 via the linking unit 137. Through this, the piston 136 is reciprocally driven in the compression chamber 134. As a result of the reciprocal drive of the piston 136, refrigerant gas (refrigerant 104 provided in gaseous form; called simply "refrigerant 104" hereinafter) is sucked into the compression chamber 134 from a cooling system (not shown), and is expelled back into the cooling system after compression.

The pressure within the compression chamber 134 does not significantly increase from when the piston 136 is in the lower dead point position shown in FIG. 29 to partway through the movement toward the upper dead point side during the compression process for compressing the refrigerant 104. For this reason, even if the gap between the outer circumferential surface 136a of the piston 136 and the tapered portion 134b is comparatively large, the refrigerant 104 experiences almost no leakage due to the sealant effect of ice machine oil 105, and the sliding resistance of the piston 136 is low as well.

As the compression process progresses, the pressure of the refrigerant 104 within the compression chamber 134 rises gradually, and immediately before the piston 136 reaches a position in the vicinity of the upper dead point, the pressure inside the compression chamber 134 rises sharply. However, the gap between the outer circumferential surface 136a of the piston 136 and the tapered portion 134b becomes smaller toward the upper dead point, thus making it possible to reduce leakage of the refrigerant 104. At this time, the straight portion 134a acts so as to reduce leakage of the refrigerant 104, which has increased to a predetermined expulsion pressure, more than in the case where the straight portion 134a is in a tapered form.

In addition, the piston 136 is formed so that when the piston 136 is positioned at the lower dead point, the piston 136 is exposed from the cylinder block 133 on the side of the linking unit 137. For this reason, ice machine oil 105 that has been scattered from the upper end of the shaft 130 is supplied to and is held as lubricant on the outer circumferential surface 136a of the piston 136.

Furthermore, the piston 136 is formed so that when the piston 136 is positioned at the lower dead point, at least part of the approximately ring-shaped oil supply groove 136b engraved in the outer circumferential surface 136a of the piston 136 on the side of the compression chamber 134 is exposed from the borehole 175 via the cutout portion 120. For this reason, ice machine oil 105 that has been scattered from the upper end of the shaft 130 is supplied to and is held as lubricant in the oil supply groove 136b.

Through this, the amount of ice machine oil 105 supplied to the gap between the inner circumferential surface of the compression chamber 134 configured from the borehole 175 in the cylinder block 133 and the outer circumferential surface 136a of the piston 136 increases during the compression process.

In addition, the approximately ring-shaped oil supply groove 136b is mobile to a position that opposes the straight portion 134a of the borehole 175, and thus the ice machine oil 105 can be transported more easily to the straight portion 134a, where the sliding resistance is greatest.

As a result of the above, in addition to a greater amount of ice machine oil 105 being supplied to the sliding portion between the cylinder block 133 and the piston 136, the ice machine oil 105 is held in a more favorable manner, and furthermore, the sliding resistance in a state where the piston 136 has approached the upper dead point position can be reduced. This makes it possible to achieve higher efficiencies.

With the compressor 28, which is a hermetic compressor, the shaft receptor 177 forms a cantilever axle bearing that axially supports the end portion of the main shaft portion 131 of the shaft 130 on the side of the eccentric portion 132, and the shaft 130 slopes within the clearance between the main shaft portion 131 and the shaft receptor 177; furthermore, it is known that the direction and slope angle thereof exhibits complex behavior, changing depending on the operational conditions and so on.

This is because the shaft 130 is under the influence of complex forces, particularly including pressure loads within the compression chamber 134, fictitious force between the piston 136 and the linking unit 137, which is a connecting rod, and so on.

Therefore, the schematic diagram shown in FIG. 30, illustrating the slope of the shaft 130, is an estimate.

First, the initial stage of the compression process shall be described.

Even in the initial stage of the compression process, it is not clear which way the shaft 130 is sloping; however, as described above, the sloping behavior of the shaft 130 is complex, and thus it can be thought that the piston 136 also behaves in a complex manner as a result.

However, in the initial stage of the compression process, the piston 136 is positioned within the range of the tapered portion 134b inside the compression chamber 134, which is configured of a cylindrically-shaped hole portion; the piston 136 can thus slope with ease under a slight force. Accordingly, the piston 136 can normally be thought of as sliding along one of the inner wall surfaces of the tapered portion 134b.

Here, descriptions will be given for the case where the piston 136 slants in essentially the same manner as the shaft 130 and slides along the tapered portion 134b in the upper area inside the compression chamber 134, which is configured of a cylindrically-shaped hole portion.

As shown in FIG. 30(a), when the upper side outer circumferential surface 136d of the piston 136 moves toward the compression chamber 134 while sliding along the upper tapered portion 134b within the compression chamber 134, which is configured of a cylindrically-shaped hole portion, a leading edge portion 136c of the lower side outer circumferential surface 136e of the piston 136, which is not sliding along the tapered portion 134b, makes contact with the tapered portion 134b that opposes the upper side outer circumferential surface 136d, as shown in FIG. 30(b).

As this time, experiments performed by the inventors indicated that the slope direction of the piston 136 inverts relative to the axis of the compression chamber 134, which is configured of a cylindrically-shaped hole portion, and the outer circumferential surface that had thus far not been sliding along the tapered portion 134b (the lower side outer circumferential surface 136e, in this example) acts so as to slide upon the tapered portion 134b, as shown in FIG. 30(c).

It is thought that, starting with the leading edge portion 136c on the side of the lower side outer circumferential surface 136e of the piston 136 that is not sliding along the tapered portion 134b coming into contact with the tapered portion 134b, the shaft 130 will slope significantly to the side opposite to the compression chamber 134, and the slope direction of the piston 136 will invert relative to the axis of the compression chamber 134, which is configured of a cylindrically-shaped hole portion.

Either way, as the compression process proceeds further and from midway through the compression process, the compression load of the refrigerant 104 resulting from an increase in pressure on the refrigerant 104 within the compression chamber 134 causes only one side of the main shaft portion 131 to be supported relative to the eccentric portion 132 of the shaft 130; thus the shaft 130 slopes significantly to the side opposite to the compression chamber 134 while changing its slope and direction within the clearance between the main shaft portion 131 and the shaft receptor 177.

After this, as shown in FIG. 30(d), the axis of the piston 136 is corrected so that the slope thereof essentially matches the slope of the axis of the straight portion 134a within the compression chamber 134, which is configured of a cylindrically-shaped hole portion, and the piston 136 moves further toward the compression chamber 134, carrying out compression in which the leakage of refrigerant 104, which has increased to a predetermined expulsion pressure, is reduced more than in the case where the straight portion 134a has a tapered shape.

Thus far, descriptions have been given for the case where, in the initial stage of the compression process, the piston 136 slants in essentially the same manner as the shaft 130 and slides along the tapered portion 134b in the upper area inside the compression chamber 134, which is configured of a cylindrically-shaped hole portion. However, it can be thought that even in the case where the slope of the piston 136 and the shaft 130 differ, at least the piston 136 slopes along some area of the tapered portion 134b; likewise, it is surmised that the piston 136 behaves so that the sloping direction thereof inverts, and the outer circumferential surface 136a, which had thus far not been sliding along the tapered portion 134b, slides along the tapered portion 134b.

Descriptions of the behavior of the piston 136 within the realm of conjecture have been given thus far; next, the technical spirit of the present invention relating to the aforementioned behavior of the piston 136 will be described.

Experiments in which the design specifications of the tapered portion 134b were changed while focusing on the behavior of the piston 136 as illustrated in FIG. 30 were carried out. Based on these experiments, noise reduction results were better achieved with a taper design whereby the leading edge portion 136c of the piston 136 making contact with the tapered portion 134b is associated more with the initial stage of the compression process rather than midway and on through the compression process.

The reason for this is that it is assumed that, in the case of midway and on through the compression process, where the pressure in the compression chamber 134 is high and the compression load is great, the contact and collision occurring when the outer circumferential surface 136a of the piston 136 makes contact with the tapered portion 134b will be severe due to a greater speed at which the slope direction of the shaft 130 or the slope direction of the piston 136 inverts.

Based on the above results and conjectures, the compression element 113 is formed so that the slope direction of the piston 136 during the initial stage of the compression process has an allowance for movement relative to the axis of the compression chamber 134, which is configured of a cylindrically-shaped hole portion. This is based on the conclusion that, rather than inverting the slope direction of the piston 136 midway and on through the compression process, it is possible to soften the contact between the piston 136 and the compression chamber 134, which is configured of a cylindrically-shaped hole portion, at the time of inversion in the case where the piston has an allowance for movement and can invert and so on during the initial stage of the compression process, which leads to noise reduction.

To be more specific, the following is carried out in order to form the compression element 113 so that, in the initial stage of the compression process, the slope direction of the piston 136 has an allowance for movement relative to the axis of the compression chamber 134, which is configured of a cylindrically-shaped hole portion. That is, the tapered portion 134b is formed at a position in the upstream side of the compression process and the compression element 113 is formed so as to include the straight portion 134a at the downstream side of the compression process, so that the timing at which the outer circumferential surface 136a of the piston 136, which has not been sliding along the tapered portion 134b while moving toward the compression chamber 134 along the tapered portion 134b, makes contact with the tapered portion 134b (see FIG. 30(b)) is the initial stage of the compression process.

Note that there is also the possibility of the slope direction of the piston 136 inverting without the leading edge portion 136c of the piston 136 making contact with the tapered portion 134b, and in this case as well, it is thought that the same effects can be achieved as long as the allowance for movement is provided in the initial stage of the compression process.

Accordingly, as an example of a design whereby the leading edge portion 136c of the piston 136 makes contact with the tapered portion 134b during the initial stage of the compression process, in the present embodiment, the straight portion 134a, which is constant in the inner diameter dimension direction, is provided in the area of the compression chamber 134, which is configured of a cylindrically-shaped hole portion, that corresponds to the upper end portion of the piston 136 on the side of the compression chamber 134 that is adjacent to the tapered portion 134b.

The ability to reduce leakage of the refrigerant 104 that has increased to a predetermined expulsion pressure more than when the straight portion 134a has a tapered shape is, as described above, one effect of providing this straight portion 134a; however, providing the straight portion 134a also makes it possible for the timing at which the leading edge portion 136c of the outer circumferential surface 136a of the piston 136 makes contact with the tapered portion 134b, which the outer circumferential surface 136a had hitherto not made contact with, to be during the initial stage of the compression process.

As described thus far, it is preferable for the configuration to be such that at least part of the outer circumferential surface 136a more toward the compression chamber 134 than the piston pin 143 of the piston 136 is positioned in the tapered portion 134b within the compression chamber 134 when the piston 136 is positioned at the lower dead point, or in other words, when positioned at the end point of the suction process (that is, the starting point of the compression process). Further desirable is a configuration in which a leading edge surface 136f of the piston 136 is positioned in the tapered portion 134b within the compression chamber 134 when the piston 136 is positioned at the lower dead point, or in other words, when positioned at the end point of the suction process (that is, the starting point of the compression process).

Doing so makes it possible for the piston 136 to have an allowance for movement in the initial stage of the compression process with certainty, and thus makes it possible to carry out the compression operations in a smoother manner. Accordingly, as described in detail in the fifth and sixth embodiments of the preset invention, normally, when a high cylinder volume is formed, lengthening the stroke reduces the size and weight of the piston 136 and thus makes it possible to reduce the amount of unbalance; however, in spite of this, a structure in which focus is placed on increasing the diameter of the piston 136 is employed. In this case as well, by the piston 136 having an allowance for movement in the vertical direction in the initial stage of the compression process with certainty, a highly-reliable compressor 28 having a large cylinder volume, in which partial contact and the like in the sliding portion is suppressed due to the diameter of the piston 136 being large and the length of the piston being short, can be provided.

Furthermore, the diameter of the piston has been increased so that a stroke A, which is the distance across which the piston 136 makes a reciprocal movement when carrying out compression operations according to the present embodiment, a length B of the piston 136, and a diameter C of the piston 136 are in a relationship whereby A ≤ B ≤ C, as described in detail in the fifth and sixth embodiments; thus partial contact and the like in the sliding portion is more evident due to the piston being more mobile. However, by providing the tapered portion 134b according to the present invention and conversely providing an allowance for movement, partial contact in the piston is reduced, making it possible to provide a compressor having high reliability and a low amount of noise.

Accordingly, forming a large cylinder volume by increasing the diameter of the piston 136 and reducing the length of the piston 136 makes it possible to reduce the load involved in the reciprocal movement. Through this, it is possible to realize a compressor 28 that has high reliability even when operating across a wide range of rotational frequencies, and thus it is possible to realize both power-saving operation through an energy conservation mode and high-performance cooling in a high-load cooling mode.

In addition, with respect to the axial direction length of the tapered portion 134b, it is necessary to employ a length whereby the leakage of refrigerant 104 in the compression chamber 134 is reduced at the straight portion 134a and the timing at which the leading edge surface 136f of the piston 136 makes contact with the tapered portion 134b is during the initial stage of the compression process.

Here, the initial stage of the compression process is defined, in the present specification, as the initial step in the compression operations, throughout all of the steps from the lower dead point to the upper dead point (that is, the length in the reciprocal movement direction of the compression chamber 134), where the leading edge surface 136f of the piston 136 is positioned more toward the shaft 130 than the center.

In this case, it is preferable for the configuration to be such that part of the outer circumferential surface 136a more toward the compression chamber 134 than the piston pin 143 is positioned opposite to the tapered portion 134b in the initial stage of the compression process (that is, at the midpoint in the reciprocal movement direction within the compression chamber 134). It is even more preferable for the configuration to be such that the leading edge surface 136f of the piston 136 to be positioned at the tapered portion 134b within the compression chamber 134 at this initial stage.

To be more specific, it is preferable, in the present embodiment, for the axial direction length of the tapered portion 134b to be greater than or equal to 1/3 the length of the compression chamber 134 in the reciprocal movement direction, and even more preferably, greater than or equal to 1/2 that length. Meanwhile, with respect to an upper limit, it is desirable, in order to reduce leakage of the refrigerant 104 within the compression chamber 134 at the straight portion 134a, for at least the leading edge surface 136f to be positioned at the straight portion during the later stages of the compression process where the pressure is high (the last 1/4), and thus the length of the tapered portion is less than or equal to 3/4 of the entire length.

Furthermore, even in the case where the slope direction of the piston 136 is inverted relative to the axis of the compression chamber 134, which is configured of a cylindrically-shaped hole portion, and the side of the outer circumferential surface 136a that has thus far not been sliding along the tapered portion 134b behaves so as to slide along the tapered portion 134b, the axial direction length of the outer circumferential surface 136a of the piston 136 that makes contact with the tapered portion 134b is short, but the ice machine oil 105 that has been dispersed horizontally across the entire circumference within the hermetic receptacle 103 by the upper end of the shaft 130 can be sufficiently supplied.

For this reason, the ice machine oil 105 sufficiently supplied to the outer circumferential surface 136a of the piston 136 can soften the contact between the outer circumferential surface 136a of the piston 136 and the tapered portion 134b, thus making it possible to realize high efficiency and lower noise.

Furthermore, the oil supply groove 136b is engraved in the outer circumference of the piston 136, and the cutout portion 120 is formed so as to cut out part of the circumferential wall of the compression chamber 134, which is configured of a cylindrically-shaped hole portion, so that the oil supply groove 136b communicates with the interior of the hermetic receptacle 103 in the vicinity of the lower dead point of the piston 136.

For this reason, the ice machine oil 105 dispersed horizontally across the entire circumferential direction within the hermetic receptacle 103 from the upper end of the shaft 130 can be held by the oil supply groove 136b and sufficiently supplied to the tapered portion 134b and straight portion 134a within the compression chamber 134, which is configured of a cylindrically-shaped hole portion. Through this, the ice machine oil 105 achieves a sealing effect, and leakage of the refrigerant 104 can be reduced; furthermore, the ice machine oil 105, which has been sufficiently supplied to the outer circumferential surface 136a of the piston 136, can soften the contact between the outer circumferential surface 136a of the piston 136 and the tapered portion 134b, making it possible to realize high efficiencies and reduced noise.

Note that although the linking unit 137 is described as a connecting rod in the present embodiment, the same effects as the present embodiment can be achieved by using a linking mechanism having a mobile portion such as a ball joint as the linking unit 137.

### (Eighth Embodiment)

FIG. 31 is a chart illustrating characteristics of a compressor 28 of the refrigerator according to an eighth embodiment of the present invention. Note that in FIG. 31, the horizontal axis represents a power source frequency that is essentially the same as the rotational frequency at which the compressor 28, which is a hermetic compressor, operates, whereas the vertical axis represents a coefficient of performance, or COP, indicating efficiency.

FIG. 32 is an enlarged view of the principle elements in the periphery of a piston 136 used in the compressor 28, which is a hermetic compressor, of the refrigerator according to the eighth embodiment. FIG. 33 is a top view of the piston 136 used in the compressor 28, which is a hermetic compressor, of the refrigerator according to the eighth embodiment. FIG. 34 is a front view, viewed from a direction B of the piston 136 illustrated in FIG. 33. FIG. 35 is a top view illustrating a first alternative configuration example of the piston 136 used in the compressor 28, which is a hermetic compressor, of the refrigerator according to the eighth embodiment. FIG. 36 is a front view, viewed from a direction C of the piston 136 illustrated in FIG. 35. FIG. 37 is a top view illustrating a second alternative configuration example of the piston 136 used in the compressor 28, which is a hermetic compressor, of the refrigerator according to the eighth embodiment.

The present embodiment illustrates alternative forms of the piston 136 in the compressor 28 as described in the fifth through seventh embodiments. To be more specific, the piston 136 according to the present embodiment has a different weight in the upper and lower sides in the vertical direction. Meanwhile, the piston 136 according to the present embodiment is realized in combination with the configurations in the aforementioned embodiments aside from the piston 136, and therefore specific descriptions of configurations aside from the piston 136 will be omitted.

In the eighth embodiment, a recess 163 is formed in the outer circumferential surface 150 of the piston 136, in the periphery of a pinhole 142 into which a piston pin 143 is inserted, the recess 163 dropping toward the inside of the diameter direction of a pinhole tapered portion 141 and the piston 136. The recess 163 includes a first recess 154 on the upper side in the vertical direction and a second recess 155 on the lower side in the vertical direction, and the first recess 154 and the second recess 155 are formed so as to have the same volume.

The recess 163 is formed so as to communicate with neither the leading-edge surface 136f of the piston 136 nor a skirt end surface 152, and a contour line expressing the form of the recess 163 when laid out on a plane has a shape in which no lines that are parallel to the shaft center of the piston 136 are present.

As can be seen from FIG. 32, which indicates a state in which the piston 136 is positioned at the lower dead point, the configuration is such that when the piston 136 is positioned in the vicinity of the lower dead point, part of the piston 136 on the side of the skirt end surface 152 is exposed to the space within the hermetic receptacle 103 from a borehole 175 in a cylinder block 133.

Furthermore, likewise, as can be seen from the state in which the piston 136 is positioned at the lower dead point, the configuration is such that when the piston 136 is positioned in the vicinity of the lower dead point, both the first recess 154 and the second recess 155 of the recess 163 are partially exposed to the space within the hermetic receptacle 103 from the borehole 175 of the cylinder block 133.

Furthermore, with respect to the forms of the first recess 154 and the second recess 155 of the recess 163, the curvature factor of a portion 157 that projects toward the skirt end surface 152 of the piston 136 is formed so as to be smaller than the curvature factor of an R shape 156 that connects the portion 157 with an edge portion 158, which is an approximately straight line, on the side of the leading edge surface 136f of the piston 136.

The piston 136 is, when taking a plane 195 that is passes through the axial center X thereof and that is vertical relative to the shaft 130 as a reference, divided into a vertical direction upper side 192 and a vertical direction lower side 193.

In the vertical direction upper side 192, a notch portion 194 is formed so as to be horizontally symmetrical, thus providing a depression leading from the skirt end surface 152 toward the leading edge surface 136f.

By providing this notch portion 194 in the vertical direction upper side 192, the weight of the vertical direction upper side 192 of the piston 136 is lighter than the weight of the vertical direction lower side 193. As a result, the piston 136 has its center of gravity located within the vertical direction lower side 193 relative to the axial center thereof.

Results of experiments performed using the piston 136 whose weight differs in the upper side and lower side of the vertical direction, or to rephrase, a piston in the case where the center of gravity of the piston 136 is located in a position aside from the center in the vertical direction, are illustrated in FIG. 31.

As illustrated in FIG. 31, as a result of measuring the efficiency of the compressor 28, which is a hermetic compressor, configured as described above, a result was achieved whereby the efficiency thereof is improved more than a conventional hermetic compressor in which the center of gravity of the piston is centered in the vertical direction, regardless of the rotational frequency at which the compressor operates.

This improvement in efficiency is directly related to the suppression of partial contact and the like in the sliding portion of the compressor 28, and also contributes to a reduction in noise due to the suppression of partial contact and the like in the sliding portion. The following are possible reasons for this improvement in efficiency.

When the piston 136 is reciprocally driven within the compression chamber 134, the position of the center of gravity thereof shifts upward in the vertical direction, leading to different fictitious forces acting on the vertical direction upper side 192 and the vertical direction lower side 193 of the piston 136, which in turn leads to unbalance. For this reason, it is surmised that the piston 136 will slope in the vertical direction side while being inverted, or in other words, the skirt end surface 152 side of the piston 136 will be positioned toward the bottom in the vertical direction within the borehole 175 and the leading edge surface 136f side will be positioned toward the top in the vertical direction, or conversely, the skirt end surface 152 side of the piston 136 will be positioned toward the top in the vertical direction within the borehole 175 and the leading edge surface 136f side will be positioned toward the bottom in the vertical direction. To rephrase, it is surmised that providing the piston 136 with an allowance for movement in the vertical direction will make it easier to slide.

In this manner, the piston 136 sliding while sloping promotes lubrication by the ice machine oil 105, leading to an increase in the oil membrane pressure when the piston 136 slides relative to the inner wall surface formed by the compression chamber 134 in the borehole 175; as a result, because a stable state of lubrication is formed when the piston 136 experiences reciprocal drive, it is thought that sliding loss can be reduced.

Next, the weight of the notch portion 194 will be described.

As mentioned above in the descriptions of the configuration of the piston 136, by providing the notch portion 194, the piston 136 is formed so that the weight thereof on the vertical direction upper side 192 is lighter than the weight on the vertical direction lower side 193, and this was confirmed to have an effect of improving efficiency.

In this manner, the notch portion 194 makes it possible to cause the weight of the piston to differ in the upper side and lower side in the vertical direction thereof, thus making it possible to adjust the amount of unbalance.

Meanwhile, an oil supply unit increases the ice machine oil 105 as a result of centrifugal force arising due to the rotation of the shaft 130, and ice machine oil 105 that has reached the eccentric portion 132 via an oil supply groove (not shown) of the shaft 130 is dispersed within the hermetic receptacle 103.

The dispersed ice machine oil 105 makes contact with a contact point, dribbles down to the outer circumferential surface 150 of the piston 136 via the cutout portion 120, and adheres to the outer circumferential surface 150.

At this time, in a state where the piston 136 is positioned at the lower dead point, part of the piston 136 including the recess 163 is exposed from the cylinder block 133, and therefore more of the dispersed ice machine oil 105 is supplied to and held in the recess 163 of the piston 136 directly from above, via the cutout portion 120.

In addition, the ice machine oil 105 that has dribbled down and adhered to the outer circumferential surface 150 of the piston 136 is supplied to the outer circumferential surface 150 of the piston 136 aside from the recess 163, the oil supply groove 136b, and so on as a result of the reciprocal movement of the piston 136; thus the space between the outer circumferential surface 150 of the piston 136 and the borehole 175 is lubricated.

In particular, when the piston 136 progresses from the lower dead point to the upper dead point, the ice machine oil 105 is effectively pulled into the space between the borehole 175 and the outer circumferential surface 150 of the piston 136 as a result of the movement of the piston 136.

Here, the recess 163 is, when the shape thereof is laid out on a plane, formed in a curved shape whereby the sliding width in the skirt direction of the piston 136 increases, so that no lines that are parallel with the shaft center of the piston 136 are formed. Through this, the ice machine oil 105 that has entered into the recess 163 is easily transported and retained in the vicinity of the approximately straight line-shaped edge portion 158 on the side of the leading edge surface 136f of the recess 163, and furthermore, oil is easily supply to and retained by the oil supply groove 136b from the recess 163.

For this reason, a greater amount of ice machine oil 10 is supplied to the sliding portion between the borehole 175 and the piston 136, and furthermore, that ice machine oil 105 is kept in a favorable state.

Because a sufficient oil membrane is maintained between the borehole 175 and the outer circumferential surface 150 of the piston 136 due to this effect, an extremely high sealant property can be achieved, and an improvement in the refrigeration performance as a result of the improvement in volumetric efficiency can be achieved.

Furthermore, the recess 163 is, when the shape thereof is laid out on a plane, formed so that no lines that are parallel with the shaft center of the piston 136 are formed, or to rephrase, the piston 163 is, when the shape thereof is laid out on a plane, configured of a shape aside from lines that are parallel with the shaft center of the piston 136. Through this, it is possible to prevent localized abrasion, which is abrasion in the reciprocal movement direction occurring when lines that are parallel with the shaft center of the piston 136 are formed, which not only increases the lubrication properties but also makes it possible to achieve an extremely high reliability.

The stated technique for improving the lubrication properties of the piston 136 and the technique for improving the efficiency by causing the center of gravity of the piston 136 to be positioned on the upper side or the lower side of the vertical direction relative to the axial center are both techniques that contribute to the improvement of efficiency. Furthermore, in the present embodiment, the technique for improving the lubrication properties of the piston 136 further improves the technique for improving the efficiency by positioning the center of gravity of the piston 136, and thus it can be concluded that, compared to a standard hermetic compressor that forms the basis of the conventional technology, the degree of efficiency improvement is great.

Furthermore, when operating at a rotational frequency of 23 RPS or less, although the ratio of fixed loss relative to the total loss of the compressor 28, which is a hermetic compressor, is high, it is possible to realize a reduction in sliding loss and a reduction in vibrations when operating at a low rotational frequency, in which the effects of reducing consumed power are high, and thus these effects are particularly great during low rotational frequency operation.

Meanwhile, the concentration of the refrigerant R600a is low compared to that of the refrigerant R134a, which has been used in refrigerators and the like in the past. For this reason, in the case of using the refrigerant R600a, the cylinder volume is increased and the outer diameter of the piston 136 is also increased in order to obtain the same cooling performance as a hermetic compressor that uses the refrigerant R134a.

Furthermore, as described in the fifth through seventh embodiments, the compressor 28 is formed having a large cylinder volume by increasing the diameter of the piston 136; through this, a compressor having a high reliability even when operating across a wide range of rotational frequencies is realized, and it is also possible to realize both power-saving operation in an energy conservation mode as well as high-performance cooling in a high-load cooling mode.

For this reason, the cross-sectional channel area of the gap between the borehole 175 and the piston 136, through which the refrigerant 104 leaks within the hermetic receptacle 103, increases, making it easier for the refrigerant 104 to leak. However, due to the technique for improving the lubrication properties, in which an allowance for movement in the vertical direction is provided by the piston 136 according to the present embodiment being unbalanced in the vertical direction, the lubrication properties of the sliding portion between the piston 136 and the borehole 175 can be improved. As a result, the sealant properties of the gap between the borehole 175 and the piston 136 are improved.

Accordingly, leakage of the refrigerant 104 can effectively be reduced even if the diameter of the piston 136 is increased, as with the present invention, and thus it is possible to provide a highly-efficient compressor.

Meanwhile, the amount of energy consumed can be reduced in a refrigerator 20 provided with a refrigerating apparatus that has the highly-efficient compressor 28 described above.

Note that in the present embodiment, in the vertical direction upper side 192 of the piston 136, the notch portion 194 is formed so as to be horizontally symmetrical, thus providing a depression leading from the skirt end surface 152 toward the leading edge surface 136f. However, experiments have confirmed that the same improvement in efficiency can be achieved even if the piston 136 is assembled in reverse, with the notch portion 194 being positioned toward the bottom in the vertical direction.

In addition, the notch portion 194 is formed so as to provide a depression leading from the skirt end surface 152 toward the leading edge surface 136f in the vertical direction upper side 192 of the piston 136, and the center of gravity of the piston 136 is positioned in the vertical direction lower side 193 relative to the axial center thereof. However, the invention can be realized in the same manner by omitting the notch portion 194 and setting the volume of the first recess 154 to be greater than that of the second recess 155, so that the center of gravity of the piston 136 is positioned in the vertical direction lower side 193 relative to the axial center thereof.

In addition, the invention can be realized in the same manner by omitting the notch portion 194, the first recess 154, and the second recess 155 and forming the piston 136 so that the volumes of the vertical direction upper side 192 and vertical direction lower side 193 of the piston 136 are different using other configurations. For example, a configuration can be considered in different metals are used intermittently to a degree that has almost no influence on the changing clearance between the piston 136 and the inner wall surface that forms the compression chamber 134 of the borehole 175 while the piston 136 is operating.

Regardless, as described thus far, as long as the piston 136 is formed so that the center of gravity thereof is positioned in the vertical direction upper side 192 or the vertical direction lower side 193 relative to the axial center thereof, the improvement of efficiency during operation has been confirmed, and many detailed configurations for realizing such a configuration are possible.

For example, a configuration of the notch portion 194, different from that illustrated in FIGS. 33 and 34, is illustrated in FIGS. 35 and 36.

In FIGS. 35 and 36, the notch portion 194 are holes that are provided leading from the skirt end surface 152 of the piston 136 toward the leading edge surface 136f, and are provided in the vertical direction upper side 192 and in positions that are symmetrical relative to a vertical plane 199 that passes through the axial center. Of course, the invention can be realized in the same manner even if the notch portion 194 is located toward the bottom in the vertical direction.

In addition, in the present embodiment, the compression element 113 is positioned toward the top of the electric element 110. However, the invention can be realized in the same manner even if the compression element 113 is positioned toward the bottom of the electric element 110. Note that from the standpoint of vibrations, it is preferable to position the compression element 113 toward the top of the electric element 110, thereby suppressing the transmission of vibrations to the hermetic receptacle 103 from the compression element 113, which is a vibration source, via the spring 171.

In addition, in order to provide an allowance for movement in the vertical direction by providing unbalance in the vertical direction, providing a convex-shaped projection portion 136g in the leading edge surface 136f of the piston 136, as shown in FIG. 37, may be used as a different form for causing the weight of the piston 136 to differ in the upper side and lower side in the vertical direction.

Note that it goes without saying that when the shape of the piston 136 provided with an allowance for movement in the vertical direction by providing unbalance in the vertical direction is combined with a structure in which the tapered portion 134b is provided in the borehole 175 as described in the seventh embodiment, the effects of using an allowance for movement in the vertical direction can be further multiplied.

The structure described in the seventh embodiment, where the tapered portion 134b is provided in the borehole 175, makes it possible to provide the piston with an allowance for movement in the initial stage of the compression process with certainty, and is thus possible to carry out compression operations in a more smooth manner. For this reason, normally, when a high cylinder volume is formed, lengthening the stroke reduces the size and weight of the piston and thus makes it possible to reduce the amount of unbalance; however, even in the case where in spite of this, a structure in which focus is placed on increasing the diameter of the piston 136 is employed, the piston is provided with an allowance for movement in the vertical direction with certainty in the initial stage of the compression process. Accordingly, it is possible to suppress disadvantageous partial contact and the like in the sliding portion due to the radius of the piston being large and the length of the piston being short, and thus it is possible to provide a compressor 28 with low vibrations, a high reliability, and a large cylinder volume.

In addition, a reduction in consumed power can be achieved by providing the stated compressor 28, which is a hermetic compressor, in a freezing/refrigerating apparatus (not shown) such as a household electric refrigerator.

### [Industrial Applicability]

The refrigerator according to the present invention can be applied as a household or industrial refrigerator that switches between operating modes, such as power-saving operation, automatically, using a result from a detection unit such as an illumination detection unit or the like provided in the refrigerator. In addition, the present invention can be applied in control when a household or industrial refrigerator automatically carries out power-saving operation.

### [Reference Signs List]

- 20: refrigerator
- 21: refrigerator main body
- 22: refrigerating compartment
- 22a: refrigerating compartment door
- 23: ice compartment
- 24: switchable compartment
- 25: freezer compartment
- 26: vegetable compartment
- 27: operation unit
- 27a: operation board
- 28: compressor
- 29: cooling compartment
- 30: cooling unit
- 31: cooling fan
- 32: radiant heater
- 36: illumination sensor
- 37: operation switch
- 38: display light
- 39: notification unit (LED)
- 40: human sensor
- 41: illumination sensor cover
- 42: LED cover
- 43: operation board cover
- 51: door SW
- 52: outside temperature sensor
- 53: interior temperature sensor
- 54: control unit
- 55: storage unit
- 56: temperature compensation heater
- 57: interior light
- 61: determination unit
- 77: display unit cover
- 78: display unit
- 79: panel
- 80: illumination sensor
- 81: logo mark
- 82: operational display unit
- 82a: operation switch
- 83: notification LED
- 84: light-receiving element
- 85: antireflective portion
- 86: notification light cover
- 87: light-receiving unit cover
- 89: panel cover
- 89a: panel cover claw portion
- 89b: side wall surface
- 103: hermetic receptacle
- 110: electric element
- 111: rotor
- 112: stationary part
- 113: compression element
- 116: mechanical portion
- 130: shaft
- 132: eccentric portion
- 133: cylinder block
- 134: compression chamber
- 134a: straight portion
- 134b: tapered portion
- 136: piston
- 170: crank weight
- 171: spring
- 175: borehole

## Claims

1. A refrigerator (20) comprising:
a refrigerator main body (21);
a first detection unit configured to detect a change in an outside environment in a periphery of said refrigerator (20);
a second detection unit configured to detect a change in an internal environment of said refrigerator (20);
a control unit (54) configured to control the operation of a current-consuming component provided in said refrigerator main body (21) by automatically switching, based on an output signal from said first detection unit and an output signal from said second detection unit, to power-saving operation that suppresses or stops the operation of the current-consuming component; and
a storage unit (55) configured to accumulate information indicated by the output signal from said first detection unit and the output signal from said second detection unit,
wherein said control unit (54) is further configured to determine a pattern of the power-saving operation, the pattern being a pattern of suppressing or stopping the operation of the current-consuming component, in accordance with the information accumulated in said storage unit (55), and control the current-consuming component so that the current-consuming component operates according to the determined pattern,
**characterized in that**
said first detection unit is an illumination sensor (36, 80) which detects illumination in the periphery of said refrigerator (20).

2. The refrigerator (20) according to claim 1,
wherein said control unit (54) is further configured to determine a usage state of said refrigerator (20) for each of time periods, based on the information accumulated in said storage unit (55), and determine the pattern so as to cause the current-consuming component to carry out the power-saving operation, for a time period in which it has been determined that said refrigeration (20) is not in a state of use.

3. The refrigerator (20) according to claim 1,
wherein said control unit (54) is configured to determine an activity state of a user based on the output signal from said first detection unit and switch to the power-saving operation in the case where it has been determined that the user is not in an active state.

4. The refrigerator (20) according to one of claim 1 and claim 2,
wherein, when the current-consuming component is being caused to carry out the power-saving operation according to the determined pattern, said control unit (54) is configured to switch from the power-saving operation to normal operation in the case where it has been determined that a user is in an active state based on the output signal from said first detection unit.

5. The refrigerator (20) according to claim 1,
wherein said second detection unit is a door (22a) opened and closed state detection unit that detects a door (22a) opened and closed state of said refrigerator (20).

6. The refrigerator (20) according to claim 1,
wherein said second detection unit is an interior temperature detection unit that detects an interior temperature of said refrigerator (20).

7. The refrigerator (20) according to claim 1, further comprising
a notification unit (39) configured to allow a user of said refrigerator (20) to recognize that the power-saving operation is being carried out in the case where the current-consuming component is carrying out the power-saving operation.

8. The refrigerator (20) according to claim 7,
wherein said notification unit (39) includes a first notification unit that operates during a predetermined period following the start of the power-saving operation and a second notification unit (39?) that operates after the predetermined period has passed.

9. The refrigerator (20) according to claim 1,
wherein said refrigerator main body (21) includes an insulating main body having a storage compartment, a door (22a) that covers the opening of the storage compartment in a freely openable and closable state, and a compressor (28), a condenser, a decompressor, and an evaporator that configure a refrigeration cycle, and
said compressor (28) is an inverter electric motor that is driven at multiple rotational frequencies including a rotational frequency that is lower than a rotational frequency of a commercial power source; and
said control unit (54) is configured to:
control said compressor (28) so that said compressor (28) operates in an energy conservation mode that operates at a rotational frequency that is lower than the rotational frequency of the commercial power source during normal cooling, where an outside temperature is in the vicinity of 25°C and said door (22a) is not opened and closed; and
control said compressor (28) so that said compressor (28) operates in a high-load cooling mode that operates at a rotational frequency that is greater than or equal to the rotational frequency of the commercial power source only in the case of the high-load cooling mode that requires a high load due to said door (22a) being opened and closed or the intrusion of warm air.

10. The refrigerator (20) according to claim 9,
wherein said compressor (28) includes a compression chamber (134) and a piston (136) that moves reciprocally within said compression chamber (134), and
a cylinder volume, which is the volume of the space in which compression operations are carried out by said piston (136) moving reciprocally within said compression chamber (134), is of a size that enables said compressor (28) to be driven at a rotational frequency that is lower than the rotational frequency of the commercial power source even during normal cooling in the case where the outside temperature is in the vicinity of 25°C and said door (22a) is not opened and closed.

11. The refrigerator (20) according to claim 9,
wherein said compressor (28) includes a compression chamber (134) and a piston (136) that moves reciprocally within said compression chamber (134), and
a diameter of said piston (136) is greater than a stroke, the stroke being the distance of the reciprocal movement of said piston (136).

## Patentansprüche

1. Kühlschrank (20), enthaltend:
einen Kühlschrankhauptkörper (21);
eine erste Erfassungseinheit, die ausgestaltet ist, eine Änderung in einer Außenumgebung im Umkreis des Kühlschranks (20) zu erfassen;
eine zweite Erfassungseinheit, die ausgestaltet ist, eine Änderung in einer Innenumgebung des Kühlschranks (20) zu erfassen;
eine Steuereinheit (54), die ausgestaltet ist, den Betrieb einer stromverbrauchenden Baugruppe, die innerhalb des Kühlschrankhauptkörpers (21) vorgesehen ist, durch automatisches Umschalten, basierend auf einem Ausgangssignal aus der ersten Erfassungseinheit und einem Ausgangssignal aus der zweiten Erfassungseinheit, auf einen Energiesparmodus, der den Betrieb der stromverbrauchenden Baugruppe unterdrückt oder stoppt, zu steuern; und
eine Speichereinheit (55), die ausgestaltet ist, Informationen zu sammeln, welche durch das Ausgangssignal aus der ersten Erfassungseinheit und das Ausgangssignal aus der zweiten Erfassungseinheit gekennzeichnet sind,
wobei die Steuereinheit (54) weiterhin ausgebildet ist, ein Muster des Energiesparmodus zu bestimmen, wobei das Muster ein Muster zum Unterdrücken oder Beenden des Betriebs der stromverbrauchenden Baugruppe, in Übereinstimmung mit den in der Speichereinheit (55) gesammelten Informationen ist, und die stromverbrauchende Baugruppe zu steuern, so dass die stromverbrauchende Baugruppe gemäß dem bestimmten Muster arbeitet,
**dadurch gekennzeichnet,**
**dass** die erste Erfassungseinheit ein Beleuchtungssensor (36, 80) ist, welcher Beleuchtung in der Umgebung des Kühlschranks (20) erfasst.

2. Kühlschrank (20) nach Anspruch 1,
wobei die Steuereinheit (54) weiterhin ausgebildet ist, einen Nutzungszustand des Kühlschanks (20) für jede der Zeitperioden, basierend auf den in der Speichereinheit (55) gesammelten Informationen, zu bestimmen, und das Muster so zu bestimmen, die stromverbrauchende Baugruppe zu veranlassen, den Energiesparmodus für eine Zeitperiode auszuführen, in der bestimmt worden ist, dass der Kühlschrank (20) sich nicht in einem Gebrauchszustand befindet.

3. Kühlschrank (20) nach Anspruch 1,
wobei die Steuereinheit (54) ausgebildet ist, einen Aktivitätszustand eines Nutzers, basierend auf dem Ausgangssignal aus der ersten Erfassungseinheit, zu bestimmen und auf den Energiesparmodus in dem Fall umzuschalten, für den bestimmt worden ist, dass der Nutzer nicht in einem aktiven Zustand ist.

4. Kühlschrank (20) nach einem der Ansprüche 1 und 2,
wobei, wenn die stromverbrauchende Baugruppe veranlasst worden ist, den Energiesparmodus gemäß dem bestimmten Muster auszuführen, die Steuereinheit (54) ausgebildet ist, von dem Energiesparmodus auf den normalen Betrieb in dem Fall umzuschalten, für den, basierend auf dem Ausgangssignal aus der ersten Erfassungseinheit, bestimmt worden ist, dass sich ein Nutzer in einem aktivem Zustand befindet.

5. Kühlschrank (20) nach Anspruch 1,
wobei die zweite Erfassungseinheit eine Erfassungseinheit zum Erfassen des geöffneten oder geschlossenen Zustands einer Tür (22a) ist, die einen geöffneten Türzustand oder einen geschlossenen Türzustand des Kühlschranks (20) erfasst.

6. Kühlschrank (20) nach Anspruch 1,
wobei die zweite Erfassungseinheit eine innen liegende Temperaturerfassungseinheit ist, die eine Innentemperatur des Kühlschranks (20) erfasst.

7. Kühlschrank (20) nach Anspruch 1, weiterhin enthaltend:
eine Anzeigeeinheit (39), die ausgestaltet ist, einem Nutzer des Kühlschranks (20) zu ermöglichen, zu erkennen, dass der Energiesparmodus für den Fall ausgeführt wird, bei dem die stromverbrauchende Baugruppe den Energiesparmodus ausführt.

8. Kühlschrank (20) nach Anspruch 7,
wobei die Anzeigeeinheit (39) eine erste Anzeigeeinheit, die während einer vorbestimmten sich an den Start des Energiesparmodus anschließende Periode arbeitet, und eine zweite Anzeigeeinheit (39?) enthält, die nach dem Verstreichen der vorbestimmten Periode in Betrieb gesetzt wird.

9. Kühlschrank (20) nach Anspruch 1,
wobei der Kühlschrankhauptkörper (21) einen Isolierhauptkörper mit einem Aufnahmefach, eine Tür (22a), die die Öffnung des Aufnahmefachs in einem frei öffenbaren und schließbaren Zustand abdeckt, und einen Kompressor (28), einen Kondensator, einen Dekompressor und einen Verdampfer enthält, die einen Kühlkreislauf bilden, und
wobei der Kompressor (28) ein umrichterangesteuerter E-Motor ist, der mit mehreren Drehfrequenzen angetrieben wird, die eine Drehfrequenz enthalten, welche geringer ist als eine Drehfrequenz einer kommerziellen Energiequelle; und
die Steuereinheit (54) ausgebildet ist,
den Kompressor (28) so zu steuern, dass der Kompressor (28) in einem Energiesparmodus arbeitet, die eine Drehfrequenz verwendet, welche geringer ist als die Drehfrequenz der kommerziellen Energiequelle während eines normalen Kühlvorgangs, wobei sich eine Außentemperatur in der Nähe von 25° C befindet und die Tür (22a) nicht geöffnet und geschlossen wird; und
den Kompressor (28) so zu steuern, dass der Kompressor (28) in einem Hochlast-Kühlungsmodus arbeitet, der eine Drehfrequenz verwendet, welche größer oder gleich der Drehfrequenz der kommerziellen Energiequelle ist, nur in dem Fall des Hochlast-Kühlungsmodus, welcher eine hohe Belastung in Folge des Öffnens und Schließens der Tür (22a) oder des Eindringens von warmer Luft erfordert.

10. Kühlschrank (20) nach Anspruch 9,
wobei der Kompressor (28) eine Druckkammer (134) und einen Kolben (136) enthält, welcher sich innerhalb der Druckkammer (134) hin und her bewegt, und
ein Zylindervolumen, welches das Volumen des Raumes ist, in dem Druckvorgänge durch den Kolben (136), welcher sich innerhalb der Druckkammer (134) hin und her bewegt, ausgeführt werden, eine Größe aufweist, welche es dem Kompressor (28) ermöglicht, mit einer Drehfrequenz angetrieben zu werden, die kleiner ist als die Drehfrequenz der kommerziellen Energiequelle sogar während eines normalen Kühlvorgangs in dem Fall, bei dem sich die Außentemperatur im Bereich von 25° C befindet und die Tür (22a) nicht geöffnet und geschlossen wird.

11. Kühlschrank (20) nach Anspruch 9,
wobei der Kompressor (28) eine Druckkammer (134) und ein Kolben (136) enthält, der sich innerhalb der Druckkammer (134) hin und her bewegt, und
ein Durchmesser des Kolbens (136) größer als ein Hub ist, wobei der Hub die Strecke der hin- und hergehenden Bewegung des Kolbens (136) ist.

## Revendications

1. Réfrigérateur (20) comprenant:
un corps principal de réfrigérateur (21);
une première unité de détection configurée pour détecter un changement dans un environnement extérieur en périphérie dudit réfrigérateur (20);
une deuxième unité de détection configurée pour détecter un changement dans un environnement intérieur dudit réfrigérateur (20);
une unité de commande (54) configurée pour commander le fonctionnement d'un composant consommateur de courant prévu à l'intérieur du corps principal de réfrigérateur (21) en commutant automatiquement, sur la base d'un signal de sortie provenant de ladite première unité de détection et d'un signal de sortie provenant de la deuxième unité de détection, à un mode d'économie d'énergie qui supprime ou arrête le fonctionnement dudit composant consommateur de courant; et
une unité de stockage (55) configurée pour recueillir des informations indiquées par le signal de sortie provenant de ladite première unité de détection et le signal de sortie provenant de ladite deuxième unité de détection,
dans lequel ladite unité de commande (54) est configurée en outre pour déterminer un motif du mode d'économie d'énergie, ledit motif étant un motif de suppression ou d'arrêt du fonctionnement du composant consommateur de courant, conformément aux informations recueillies dans ladite unité de stockage (55), et pour commander le composant consommateur de courant de sorte que le composant consommateur de courant fonctionne selon le motif déterminé,
**caractérisé par le fait que**
ladite première unité de détection est un capteur d'éclairage (36, 80) qui détecte de l'éclairage dans les environs dudit réfrigérateur (20).

2. Réfrigérateur (20) selon la revendication 1,
dans lequel ladite unité de commande (54) est configurée en outre pour déterminer un état d'utilisation dudit réfrigérateur (20) pour chacune des périodes de temps, sur la base des informations recueillies dans l'unité de stockage (55), et pour déterminer le motif de manière à inciter le composant consommateur de courant à mettre en oeuvre le mode d'économie d'énergie pour une période de temps dans laquelle il a été déterminé que ledit réfrigérateur (20) ne se trouve pas dans un état d'usage.

3. Réfrigérateur (20) selon la revendication 1,
dans lequel ladite unité de commande (54) est configurée pour déterminer un état d'activité d'un utilisateur sur la base du signal de sortie provenant de la première unité de détection et pour commuter au mode d'économie d'énergie dans le cas où il a été déterminé que l'utilisateur ne se trouve pas dans un état actif.

4. Réfrigérateur (20) selon l'une quelconque des revendications 1 et 2,
dans lequel, lorsque le composant consommateur de courant a été incité à mettre en oeuvre le mode d'économie d'énergie selon le motif déterminé, ladite unité de commande (54) est configurée pour commuter du mode d'économie d'énergie au mode normal dans le cas où il a été déterminé, sur la base du signal de sortie provenant de la première unité de détection, qu'un utilisateur se trouve dans un état actif.

5. Réfrigérateur (20) selon la revendication 1,
dans lequel la deuxième unité de détection est une unité de détection destinée à détecter l'état ouvert ou fermé d'une porte (22a), qui détecte un état de porte ouvert ou un état de porte fermé du réfrigérateur (20).

6. Réfrigérateur (20) selon la revendication 1,
dans lequel ladite deuxième unité de détection est une unité intérieure de détection de température qui détecte une température intérieure du réfrigérateur (20).

7. Réfrigérateur (20) selon la revendication 1, comprenant en outre:
une unité de signalisation (39) configurée pour permettre à un utilisateur du réfrigérateur (20) de reconnaître que le mode d'économie d'énergie est mis en oeuvre dans le cas où le composant consommateur de courant met en oeuvre le mode d'économie d'énergie.

8. Réfrigérateur (20) selon la revendication 7,
dans lequel ladite unité de signalisation (39) comprend une première unité de signalisation qui travaille durant une période prédéterminée qui suit le début du mode d'économie d'énergie ainsi qu'une deuxième unité de signalisation (39?) qui est mise en service après que la période prédéterminée s'est écoulée.

9. Réfrigérateur (20) selon la revendication 1,
dans lequel le corps principal de réfrigérateur (21) comprend un corps principal isolant ayant un compartiment de réception, une porte (22a) qui couvre l'ouverture du compartiment de réception dans un état librement ouvrable et refermable, et un compresseur (28), un condenseur, un décompresseur et un évaporateur qui forment un cycle frigorifique, et
dans lequel ledit compresseur (28) est un moteur électrique commandé par convertisseur qui est entraîné à des fréquences de rotation multiples, y compris une fréquence de rotation qui est inférieure à une fréquence de rotation d'une source d'énergie commerciale; et
ladite unité de commande (54) est configurée pour
commander ledit compresseur (28) de telle sorte que le compresseur (28) fonctionne dans un mode d'économie d'énergie qui utilise une fréquence de rotation qui est inférieure à la fréquence de rotation de ladite source d'énergie commerciale durant un refroidissement normal où une température extérieure est proche de 25° C et ladite porte (22a) n'est pas ouverte et fermée; et pour
commander ledit compresseur (28) de telle sorte que ledit compresseur (28) fonctionne dans un mode de refroidissement à haute charge qui utilise une fréquence de rotation qui est supérieure ou égale à la fréquence de rotation de la source d'énergie commerciale, seulement dans le cas du mode de refroidissement à haute charge qui nécessite une charge élevée dû au fait que ladite porte (22a) est ouverte et fermée ou à l'intrusion d'air chaud.

10. Réfrigérateur (20) selon la revendication 9,
dans lequel le compresseur (28) comprend une chambre de compression (134) et un piston (136) qui exerce un mouvement de va-et-vient à l'intérieur de ladite chambre de compression (134), et
un volume de cylindre qui est le volume de l'espace dans lequel des opérations de compression sont réalisées par ledit piston (136) exerçant un mouvement de va-et-vient à l'intérieur de ladite chambre de compression (134), est d'une taille qui permet audit compresseur (28) d'être entraîné à une fréquence de rotation qui est inférieure à la fréquence de rotation de la source d'énergie commerciale, même pendant un refroidissement normal dans le cas où la température extérieure est proche de 25° C et ladite porte (22a) n'est pas ouverte et fermée.

11. Réfrigérateur (20) selon la revendication 9,
dans lequel ledit compresseur (28) comprend une chambre de compression (134) et un piston (136) qui exerce un mouvement de va-et-vient à l'intérieur de ladite chambre de compression (134), et
un diamètre du piston (136) est supérieur à une course, la course étant la distance du mouvement de va-et-vient dudit piston (136).
